(19) Europäisches Patentamt
European Patent Office
Office européen des brevets

(11) **EP 3 537 293 A1**

(12) **EUROPÄISCHE PATENTANMELDUNG**

(43) Veröffentlichungstag:
**11.09.2019 Patentblatt 2019/37**

(51) Int Cl.:
***G06F 9/48*** *(2006.01)*

(21) Anmeldenummer: **18160992.6**

(22) Anmeldetag: **09.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Till I.D. GmbH**
**82152 Martinsried (DE)**

(72) Erfinder: **Schick, Ruppert**
**82296 Schöngeising (DE)**

(74) Vertreter: **Kietzmann, Lutz**
**Maiwald Patentanwalts- und**
**Rechtsanwaltsgesellschaft mbH**
**Grünstraße 25**
**40212 Düsseldorf (DE)**

(54) **ZEITLICH DETERMINISTISCHER MIKROPROZESSOR UND MIKROCONTROLLER**

(57)     Mikroprozessor oder Mikrocontroller (1), umfassend mindestens einen Speicher (2) zur Aufnahme von Instruktionen (4), mindestens eine Instruktionsladeeinheit (3) und mindestens eine Instruktionsausführungseinheit (5), wobei die Instruktionsladeeinheit (3) dazu ausgebildet ist, Instruktionen (4) aus dem Speicher (2) abzurufen und an die Instruktionsausführungseinheit (5) zu übermitteln, wobei jede Instruktion (4) mindestens einen Befehl (4a) sowie eine Zeitvorgabe (4b) enthält und wobei die Instruktionsausführungseinheit (5) dazu ausgebildet ist, den Befehl (4a) auszuführen, wobei zusätzlich eine Zeitverwaltungseinheit (6) vorgesehen ist, welche dazu ausgebildet ist, einen aus einer Abfolge von Systemzyklen (71a, 71b) bestehenden Systemtakt (71) vorzugeben und mindestens den Beginn eines jeden Systemzyklus (71a, 71b) an die Instruktionsausführungseinheit (5) zu signalisieren, wobei jeder Systemzyklus (71a, 71b) eine Mehrzahl von Zyklen (70a, 70b) des Prozessortakts (70) des Mikroprozessors bzw. Mikrocontrollers (1) umfasst, wobei die Zeitvorgabe (4b) in der jeweiligen Instruktion (4) angibt, für welchen Systemzyklus (71a, 71b) die Ausführung des Befehls (4a) geplant ist, und wobei die Instruktionsausführungseinheit (5) dazu ausgebildet ist, auf die Signalisierung des Beginns eines Systemzyklus (71a, 71b) hin alle Befehle (4a), deren Ausführung für diesen Systemzyklus (71a, 71b) geplant ist, innerhalb dieses Systemzyklus (71a, 71b) auszuführen.

Fig. 1a

EP 3 537 293 A1

**Beschreibung**

Die Erfindung betrifft eine Mikroprozessor- bzw. Mikrocontrollerarchitektur, die eine zeitlich deterministische Programmausführung speziell für Anwendungen mit hohen Anforderungen an die enge zeitliche Koordination verschiedener Vorgänge ermöglicht.

Stand der Technik

Eingebettete Systeme, an deren Zeitverhalten und Determinismus strenge Anforderungen gerichtet sind, werden in der Praxis oft durch Echtzeitsysteme realisiert. Dabei ist nicht nur die funktionale Korrektheit der Ausgaben, sondern auch deren Rechtzeitigkeit erforderlich. Echtzeitsysteme sind reaktive Systeme, d.h. bestimmte Aufgaben müssen nach dem Auftreten von externen Ereignissen innerhalb vorgegebener Zeitspannen aktiviert und abgearbeitet werden. Dazu wird die Gesamtfunktionalität in ablauffähige Teilprogramme (Tasks) unterteilt, die meist nebenläufig ausgeführt werden. Tasks können periodisch, aperiodisch oder sporadisch auftreten. Besonders bei Einkernprozessoren muss eine Ablaufplanung der Tasks erfolgen (Scheduling). Dazu gibt es mehrere Ansätze, wie etwa die Gliederung des Ablaufplans nach prioritätsbasierten Kriterien. Bei synchroner Programmierung erfolgt die Synchronisierung zyklischer auszuführender Tasks in der Regel mit Hilfe eines Echtzeit-Timers, welcher periodische Unterbrechungsanforderungen an den Prozessor sendet und damit die zeitgetriggerte Ausführung von Tasks beantragt.

Da selbst moderne Mehrkernprozessoren die Anforderungen harter Echtzeitsysteme nur mit Einschränkungen oder unter bestimmten Bedingungen erfüllen, wird die Einhaltung der Echtzeitanforderungen an das System meist mit aufwendigen Methoden wie der Worst-Case Execution Timing (WCET) Analyse überprüft.

Werden Rechensysteme mit General-Purpose-Prozessoren um andere domänenspezifische Verarbeitungseinheiten erweitert, wie etwa GPUs oder programmierbare Logikbausteine wie FPGAs, so spricht man von heterogenen oder hybriden Systemen. Im Folgenden beziehe sich die Verwendung des Begriffs "heterogenes System" auf die Kombination von General-Purpose-Prozessoren mit rekonfigurierbarer FPGA-Logik. Für letztere wird die gewünschte Funktionalität typischerweise als Verhaltens- oder Hardwarebeschreibung in geeigneten Entwurfswerkzeugen erstellt, und mittels High-Level-Synthese in die gewünschte Logikschaltung überführt.

Heterogene Systeme werden häufig dazu benutzt, bestimmte anwendungsspezifische, meist laufzeitintensive Funktionen effizienter zu gestalten, indem vorgefertigte Funktionsblöcke, wie z.B. rechenintensive Algorithmen aus der Bildverarbeitung, zur Laufzeit auf die rekonfigurierbare Logik ausgelagert werden, um die Berechnungen zu beschleunigen und den Hauptprozessor zu entlasten. Ein großes Forschungsgebiet ist in den letzten Jahren um die effiziente Nutzung heterogener Systeme entstanden. Partielle und dynamische Rekonfiguration unter entsprechenden Partitionierungsmodellen, Ansätze nach dem datenflussorientierten Paradigma und Methoden für Hardware-Software-Codesign sind nur einige Beispiele.

Heterogene Systeme können auch vollständig in Logikbausteinen realisiert werden. Für die Bereitstellung der Funktionalität von General-Purpose-Prozessoren in Logik existieren hierfür sogenannte IP-Cores. Diese können in synthetisierbarer Form (Soft-IP) oder mit fest vorgegebenem Layout (Hard-IP) vorliegen. In den meisten Fällen handelt es sich bei IP-Cores um Implementierungen von RISC-Architekturen, wie etwa Tensilica Xtensa, Altera Nios II, Xilinx MicroBlaze, ARC700, MIPS Pro Series, ARM OptimoDE und Leon3.

Modifikationen von Software sind generell einfacher als Änderungen und Anpassungen von Hardware-Realisierungen. Auch in heterogenen Systemen werden daher jene Teile von Anwendungen, bei denen viele Daten sequentiell verarbeitet werden müssen und hohe Flexibilität gefordert ist, auf den General-Purpose-Prozessor abgebildet. Rekonfigurierbare Logik kommt hingegen oft nur zur Beschleunigung ausgelagerter rechen- oder datenintensiver Funktionen zum Einsatz.

Auch speicherprogrammierbare Steuerungen (SPS), welche vor allem in industriellen Automatisierungssystemen zum Einsatz kommen, werden zunehmend teilweise oder vollständig als heterogene Systeme realisiert, um Zykluszeiten zu minimieren. SPS arbeiten in der Regel zyklusorientiert oder ereignisgesteuert. Programme können in aktuell fünf verschiedenen Programmiersprachen nach IEC 61131-3 mit Elementen datenflussorientierter als auch steuerflussorientierter Programmierung beschrieben werden. Die Programmteile werden von der SPS sequentiell bearbeitet, und die Bearbeitung wird in der Regel zyklisch wiederholt. Die Zykluszeit von rein mikroprozessorbasierten SPS ist dabei meist abhängig von der Programmlänge, also der Anzahl an Programmanweisungen. Tasks bzw. Funktionsblöcke mit höherer Priorität können die Ausführung des aktuellen Funktionsblocks unterbrechen, und somit die Zykluszeit verlängern.

Aus diesem Grunde gehen die Hersteller von SPS-Steuerungen dazu über, den zeitkritischsten Teil der Ablaufplanung in FPGAs zu realisieren. Kommerziell erhältliche Beispiele sind die Zatego-Steuerung von Zander GmbH & Co. KG oder die reACTION Technologie von Bernecker+Rainer Industrie-Elektronik GmbH, welche Zykluszeiten von einer Mikrosekunde oder darunter bieten.

SPS sind also im Allgemeinen ausschließlich für grundlegende, reaktive Automatisierungsaufgaben vorgesehen. Diese bestehen im Wesentlichen aus dem zyklischen Einlesen von Prozesssignalen, der rechentechnischen Signalverarbeitung und dem Ausgeben von Signalen an die Aktuatoren des Systems.

Sequentielle Ablaufsteuerungen für Mess- oder Prüfsysteme unterscheiden sich von den genannten Echtzeitsystemen und SPS-Steuerungen dahingehend, dass sich die Teilaufgaben der Anwendung in der Regel nicht oder nur in sehr geringem Rahmen in einzelne, sich wiederholende Tasks oder Funktionsblöcke aufteilen lassen. Die Messsequenzen sind stattdessen als sequentielle, skriptartige Abläufe zu sehen, welche parallele oder zeitnah stattfindende Ereignisse und Ausgaben auf verschiedenen Ein- und Ausgabekanälen erforderlich machen können. Beispiele hierfür sind u.a. komplexes Triggern, Erzeugen von digitalen Mustern und Test-Stimuli, Funktionsgeneration, Simulieren und Ansteuern von verschiedenen Hardware-Schnittstellen, Kommunikation über Feldbusse, aber auch Datenaufzeichnung und Protokollierung von Ereignissen oder Wellenformen.

Solche Funktionalitäten sind am ehesten durch als "Timer" oder "Test-Sequenzer" bezeichnete Systeme gegeben, welche typischerweise für Test und Validierung von Systemen oder Prototypen in Entwicklungs- und Prüfständen eingesetzt werden. Sie kommen in der Regel nicht als eingebettete Steuerungen zur Anwendung, sondern sind als spezielle Standalone-Geräte auf dem Markt verfügbar und arbeiten mit der Kombination aus einer oder mehreren Prozessoreinheiten und programmierbarer FPGA-Logik. Als Beispiel sind ADwin-Familie von Jäger GmbH, die Timing Controller von LabSmith Inc., die SATURN Test Sequencer von AMOtronics UG, oder die CompactRIO-Plattformen von National Instruments zu nennen.

Die programmierbare Logik wird hierbei nicht zur Beschleunigung datenintensiver Algorithmen oder für das Erreichen hoher Datenraten verwendet, sondern vielmehr für hohe, teils taktzyklengenaue zeitliche Präzision von Ein- und Ausgängen an digitalen oder analogen Ports. Dabei werden in der Regel feste Mess- oder Triggersequenzen im Voraus erzeugt und zur Laufzeit in den FPGA geladen. Arithmetik, Datentransfer, Datenmanipulation oder Kontrollflusseigenschaften sind meist nur auf und im Zusammenspiel mit dem General-Purpose-Prozessor möglich.

Für bestimmte Anwendungen, wie in modernen Hochdurchsatz-Messsystemen im Labor- oder Forschungsbetrieb, sind die Anforderungen an das zeitlich präzise Zusammenspiel von Aktuatoren, Sensoren und Recheneinheiten im Laufe der Zeit enorm gewachsen. Die Genauigkeiten, mit welcher die Komponenten solcher Systeme synchronisiert angesteuert werden müssen, liegen teilweise im Sub-Mikrosekundenbereich. Gleichzeitig kann die Granularität der Systemzeiten, also der Ansteuerungs- bzw. Ausleseintervalle von Peripheriekomponenten, im niedrigen Mikrosekundenbereich liegen. Die Zeitintervalle für die Befehlsausführung der Steuerung sollte demnach in derselben Größenordnung liegen, um alle Komponenten zuverlässig innerhalb ihrer Systemzeiten bedienen zu können.

Eine wichtige Anforderung an das zeitliche Verhalten solcher Systeme ist, dass viele Vorgänge unter keinen Umständen verspätet ausgeführt werden dürfen, da sonst der gesamte Ablauf nichtdeterministisch wird und die Ergebnisse unbrauchbar werden.

Um die gesamte Komplexität dieser Anwendungen zu verstehen, ist es wichtig, die Verschachtelung verschiedener zeitlicher Vorgänge und damit die Notwendigkeit zu massiver Parallelität bzw. Nebenläufigkeit von Teilschritten auf der Ablaufsteuerungselektronik hervorzuheben.

Ein wichtiger Punkt dabei ist die Erkenntnis, dass für derartige Systeme nicht wie z.B. in der Automatisierungstechnik bestimmte Mess-, Regel- und Steuerungsaufgaben existieren, die unmittelbar in Tasks oder Funktionsblöcke abgebildet werden können. Vielmehr sind Messungen und Experimente mit der Abarbeitung komplexer Messskripte bzw. Messsequenzen von den bereits erwähnten Test-Sequenzern zu vergleichen, jedoch mit zum Teil erheblich höherer Anzahl an eng zeitlich koordinierten Vorgängen. Neben zeitlicher Präzision verlangen diese Messsysteme jedoch ebenso ein hohes Maß an Flexibilität bei Funktionalitäten wie Arithmetik, Datentransfer, Datenmanipulation oder Kontrollflusseigenschaften, wie sie üblicherweise nur General-Purpose-Prozessoren bieten.

Besonders im Forschungsbetrieb ist es wichtig, dass der Experimentator sich Kombinationen aus verschiedensten Verfahren so beliebig wie möglich selbst zusammenstellen kann, damit auch solche Kombinationen abgedeckt werden, die nicht in der Bediensoftware des Herstellers vorgesehen sind, und erst zeitaufwendig implementiert werden müssten.

Eine weitere Anforderung ist, dass das System in der Lage sein sollte, während der Messung neben den reinen Messdaten (z.B. Kamerabilder) eine Vielzahl von Daten wie interne Zustandsvariablen, Ereignisse oder Messparameter zu protokollieren, damit diese dem Experimentverlauf zeitrichtig zugeordnet werden können.

Architekturen von klassischen Prozessoren beinhalten Befehlssatzarchitekturen wie RISC, CISC, EPIC, VLIW oder deren Mischformen. Die Entwicklungen der letzten Jahrzehnte auf dem Gebiet der Prozessorarchitekturen zielten zumeist auf Erhöhung der Rechenleistung und die Steigerung des durchschnittlichen Befehlsdurchsatzes ab. Um die Ausführungszeit von Befehlsströmen zu verkürzen und damit die Programmausführung effizienter zu gestalten, sind hierbei vorrangig die allgemeine Entwicklung hin zu Mehrkernarchitekturen und der Einsatz verschiedener Methoden auf Mikroarchitekturebene zur Parallelität auf Befehlsebene (instruction level parallelism) und auf Thread-Ebene (thread level parallelism) zu nennen. Techniken wie Fließbandverarbeitung (Pipelining), Superskalarität, Out-Of-Order-Execution, Registerumbenennung und Multithreading erfordern aufwendige Maßnahmen wie statische und dynamische Ablaufplanung oder codesortierende Compiler, um die verfügbaren Ressourcen möglichst effizient nutzen zu können. Mit Techniken des dynamischen Pipeline-Scheduling wie Scoreboarding oder Verwendung des Tomasulo-Algorithmus wird versucht, auftretende Daten-, Steuerfluss- und Ressourcen-Konflikte zu vermindern.

Während die genannten Maßnahmen vorrangig das Ziel verfolgen, die maximale durchschnittliche Prozessorleistung zu erhöhen und das Auftreten von Verzögerungen durch Konflikte zu minimieren, ist ein zeitlicher Determinismus und absolute Wiederholgenauigkeit nur schwer zu erreichen. Beispielsweise können Lade-, Speicher- und Kontrollflussbefehle bei der Verwendung von Cache-Speichern zu nichtdeterministischen Ausführungszeiten führen. In typischen Anwendungen kann die Zahl solcher Befehle einen mittleren zweistelligen Prozentsatz des Befehlsstroms ausmachen. Dabei unterscheiden sich verschiedene Architekturen teils deutlich in ihrer Effizienz bei der Programmausführung, besonders durch implementierungsbedingte Unterschiede bei zur Laufzeit auftretenden Latenzen.

Häufige Unterbrechungsanforderungen in interrupt-intensiven Systemen sind ebenfalls eine mögliche Ursache für Nichtdeterminismus bei der Programmausführung. Die Problematik des sogenannten "interrupt overload" ist hinreichend bekannt und nur schwer in WCET-Analysen zu berücksichtigen.

Ein weiterer Flaschenhals kann durch häufige Zugriffe auf Peripheriemodule für Ein-/Ausgabe-Schnittstellen entstehen. Diese Zugriffe erfolgen in den meisten Fällen indirekt und über einen gemeinsamen Peripheriebus, dessen Taktfrequenz niedriger als der Prozessortakt ist. Um die Hauptprozessoreinheit zu entlasten, werden deshalb häufig spezielle I/O-Prozessoren eingesetzt, die bis zu einem gewissen Grad unabhängig vom Hauptprozessor arbeiten, und bei Bedarf Unterbrechungsanforderungen (Interrupts) zur CPU oder direkten Speicherzugriff (DMA) initiieren. Diese Unabhängigkeit ist begrenzt, wie z.B. folgendes Zitat aus der Patentschrift DE69933515T2 zeigt: "Viele Operationen, die auf dem Transfer von Daten basieren, erfordern eine einfache oder erweiterte Modifikation der zu transferierenden Daten, oder häufig ist der Transfer konditional und kann unter verschiedenen Bedingungen gestoppt oder unterbrochen werden. Wenn diese erweiterten Kriterien zu komplex werden, ist Interaktion zwischen dem DMA-Controller und dem Mikroprozessor des Systems notwendig. Die Gesamtgeschwindigkeit des Systems wird somit vermindert und der Mikroprozessor wird blockiert und kann keine anderen Tasks ausführen."

Zusammenfassend kann man sagen, dass eingebettete Systeme auf Basis herkömmlicher Prozessorkerne, welche ohne direktes zeitliches Bezugssystem arbeiten, mit vertretbarem Hardwareaufwand nicht oder nur unzureichend geeignet sind, die genannten Anforderungen an Determinismus und zeitlicher Präzision der Vielzahl an Einzelaufgaben in den beschriebenen komplexen Messsystemen zu erfüllen.

Blickt man auf task-basierte Echtzeitsysteme, so existiert für diese durchaus eine Reihe von Ansätzen für Programmierparadigmen, um zeitliche Vorgänge zu abstrahieren. Die Abstraktionen verfolgen das Ziel, die Programmierung zeitlicher Vorgänge von der zugrunde liegenden Hardwarearchitektur zu trennen. Synchrone Sprachen wie Esterel, einer imperativen Entwurfssprache für ereignisgesteuerte Systeme, oder Lustre, einer deklarativen, datenflussorientierten Programmiersprache, liefern Abstraktionsmöglichkeiten nach dem Modell der Zero Execution Time (ZET). Modelle für Logical Execution Time (LET) basieren auf zeitgesteuerten Protokollen und finden sich in Sprachen wie Giotto und dessen Weiterentwicklungen wie xGiotto, der Timing Definition Language (TDL) und Hierarchical Timing Language (HTL).

Auch für die Ebene der Befehlssatzarchitektur (Instruction Set Architecture, ISA) und den darunter liegenden Hardwareschichten gibt es bereits Ansätze, die physikalische Einheit der Zeit zu berücksichtigen. Hier sind vorrangig die Arbeiten rund um die Precision Timed Architekturen (PRET) von Lee und Edwards zu nennen. Sie sind seit ihrer ersten Publikation ("The Case for the Precision Timed (PRET) Machine", University of California at Berkeley, Technical Report No. UCB/EECS-2006-149 (2006)) stetig weiterentwickelt worden. Hier werden beispielsweise Maßnahmen wie Scratchpads anstelle von Cache-Speichern, oder Thread Interleaved Pipelines vorgeschlagen, um Befehlssatzarchitekturen von klassischen Prozessoren deterministischer und vorhersehbarer zu gestalten. Dafür werden entsprechende Einzelbefehle in ISA und Hochsprachen eingeführt. Mit einer genaueren zeitlichen Vorstellung von minimaler und maximaler Taskausführungsdauer lassen sich Programmplanung und WCET-Analyse deutlich erleichtern.

In der Arbeit "Precision Timed Machines" von Isaac Liu (PhD Dissertation, EECS Department, University of California at Berkeley, Technical Report No. UCB/EECS-2012-113 (2012)) werden Argumente geliefert, warum die zeitliche Semantik von Befehlssatzarchitekturen nicht überbestimmt, also nicht jeder einzelne Befehl mit zeitlichen Vorgaben belegt werden sollte. Zum einen würde dies die Innovationsfreiheit auf Mikroarchitekturebene einschränken, mit welcher die Progammausführung effizienter gestaltet werden könnte; zum anderen wären alle Implementierungen, welche die Zeitvorgaben nicht unterstützen, für die Anwendung als ungültig anzusehen. Es wird also damit gerechnet, dass Architekturen im Laufe der Zeit effizienter werden und somit das zeitliche Verhalten auf Befehlsebene ändern.

Es ist hierbei allerdings zu erkennen, dass es sich, wie schon bei den ursprünglichen Ideen für PRET-Architekturen (siehe die Arbeit "The Case for the Precision Timed (PRET) Machine" von Edwards und Lee) ausschließlich um task-basierte Echtzeitsysteme handelt, was auch aus der Arbeit von Liu deutlich hervorgeht. Das Bezeichnen der zeitlich einzugrenzenden Programmeinheiten als Code-Blöcke, der Hinweis auf die implementierungsabhängige Varianz der Programmausführungsdauer dieser Einheiten sowie die gezeigten Programmcode-Ausschnitte lassen eindeutig erkennen, dass es sich um herkömmliche Prozessorsysteme wie z.B. Vertreter der RISC-Architektur handelt.

Für Echtzeitsysteme auf Basis herkömmlicher Prozessoren erscheint die Argumentation für die gewählte Granularität der zeitlichen Semantik sinnvoll, da Echtzeitsysteme grundsätzlich durch Tasks strukturierbar sind, und auf nebenläufige Hardware-Threads abgebildet werden können.

Der Umgang mit dem Einfluss externer Interrupts bleibt in der Arbeit von Liu explizit offen; mit dem Hinweis, dass das zeitliche Verhalten bei der Interrupt-Generierung schon aufgrund unterschiedlicher Zugriffszeiten auf das Timer-Peripheriemodul abhängig von der Implementierung auf Mikroarchitekturebene ist. Insofern ist die Erkenntnis, dass die vorgeschlagene, auf Befehlsebene zeitrichtig getriggerte Hardwarearchitektur im Sinne von Liu als ungültig anzusehen ist, zu akzeptieren, da es sich um eine deutlich andere Zielanwendung handelt. Es ist damit zu rechnen, dass die Anforderungen an die Steuerung des hier vorgestellten Hochleistungsmikroskops auch auf absehbare Zeit nicht mit einer PRET-Architektur zu erfüllen sind.

Schon bei einem einzigen interrupt-getriebenen Zugriff eines herkömmlichen RISC-Prozessors auf ein Kontrollregister eines seiner Peripheriemodule, z.B. um einen Pegel an einem Ein-/Ausgabe-Pin abzufragen, kann die Summe der Latenzen für Interrupt-Anforderung, Taskwechsel, Eintreten und Ausführen der Interrupt-Service-Routine und Zugriffe auf das Peripheriemodul einen Zeitbedarf von mehreren Mikrosekunden erfordern, was über der angesprochenen geforderten Granularität liegt.

Das unterschiedliche Verhalten von Mikroarchitekturen bei der Programmcodeausführung ist einer der Gründe, warum für Echtzeitsysteme im Allgemeinen die längste mögliche Ausführungszeit (WCET) nur schwer oder überhaupt nicht exakt bestimmbar ist. Stattdessen wird mit sicheren unteren und oberen Schranken gearbeitet.

In US 7,406,550 B2 ist ein konkreter Ansatz offenbart, wie eine Prozessorarchitektur mit einer bestimmten Anzahl an Thread-Einheiten für echtes Hardware-Multithreading realisiert werden kann. In jüngerer Zeit wurden diese und ähnliche Architekturansätze auch als Single-Chip-Lösungen realisiert, wie z.B. in der fido-Familie von Innovasic GmbH, den Propeller-Architekturen von Parallax Inc., oder auch den xCORE-Controllerfamilien der XMOS Ltd., die eine Weiterführung des Transputers bedeuten und deren Programmiersprache XC auf Elementen von ANSI-C und Occam basiert. Auch bei diesen Konzepten sind Teile von Echtzeitbetriebssystemen in Hardware realisiert.

Auch derartige Ansätze sind aufgrund der Granularität auf Threadebene für die ausgewählte Anwendung nur bedingt geeignet. Des Weiteren ist die Anzahl der Threadeinheiten stark begrenzt. Einzelne Ein-/Ausgaben über wie in WO 2008/125 670 A1 beschriebene, zeitlich gesteuerte Interface-Prozessoren sind zwar zeitlich hochgenau möglich, müssen aber über eigene Threads realisiert werden und unterliegen weiteren einschränkenden Eigenschaften der Architektur. In "Programming XC on XMOS Devices" von Douglas Watt (XMOS Limited, ISBN: 978-190 736 1036 (2009)) wird beispielsweise angedeutet, dass die XMOS Architektur jede Port- bzw. Timer-Ressource dahingehend einschränkt, dass nur auf eine Bedingung zu einer bestimmten Zeit gewartet werden kann.

Es ist also anzunehmen, dass mit derartigen Peripheriecontrollern nicht die Flexibilität erreicht werden kann, wie für die vorliegenden Aufgaben nötig wären, z.B. eine zweistellige Anzahl von I/O-Ports in jedem einzelnen Zeitintervall von der Dauer weniger Mikrosekunden mit unterschiedlichen Ausgabepatterns versorgen zu können.

Eine Granularität der Kontrolle der zeitlichen Befehlsausführung auf Taskebene ist nach all den genannten Aspekten als nicht feinkörnig genug anzusehen; stattdessen ist Granularität auf Befehlsebene gefragt.

Auch hierfür liegen erste Ansätze länger zurück. In US 2003/135 712 A1 enthalten Befehlsworte Angaben über einen Zeitpunkt, die den Ausführungszeitpunkt eines Befehls steuern können. Hiermit können jedoch lediglich Verzögerungen für das Eintreten von Befehlen in verschiedene Pipeline-Phasen des Prozessorkerns angegeben werden. Diese Technik ist hauptsächlich dafür geeignet, Datenkonflikte bei Out-Of-Order-Execution zu vermeiden. Das weitere zeitliche Verhalten der Befehlsausführung nach dem Eintreten in die entsprechende Pipeline-Phase ist nicht näher definiert. Es wird allerdings angedeutet, dass nur der Zeitpunkt angegeben werden kann, wann ein Befehl in eine bestimmte Pipeline-Stufe eintritt; und dass die tatsächliche Ausführungsdauer in der Praxis durch Ressourcenkonflikte wie Buskonflikte unterschiedlich sein kann. Das Ende der Ausführungszeit ist also nicht explizit definiert.

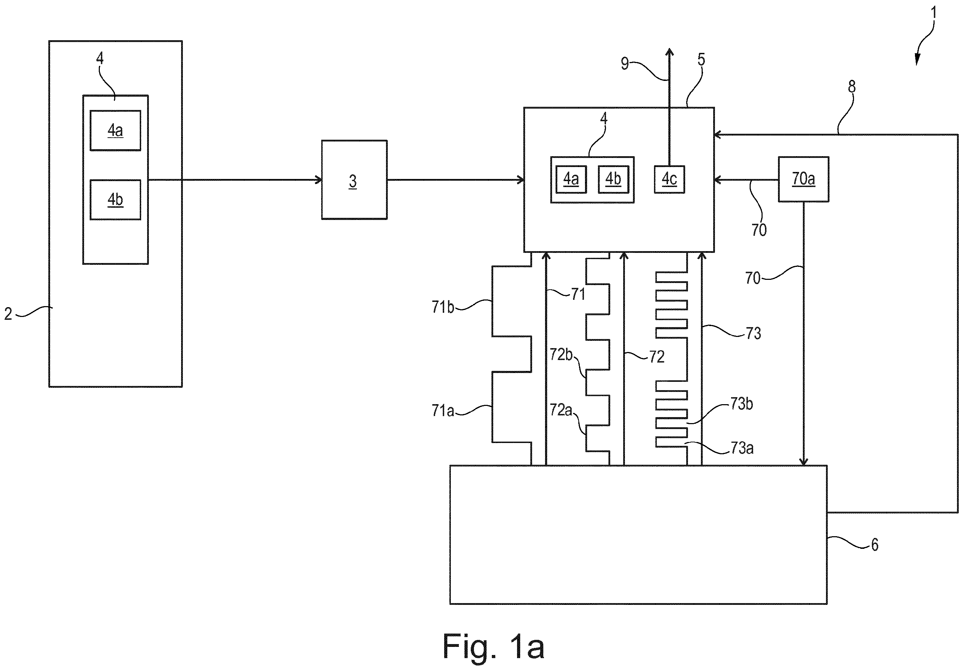

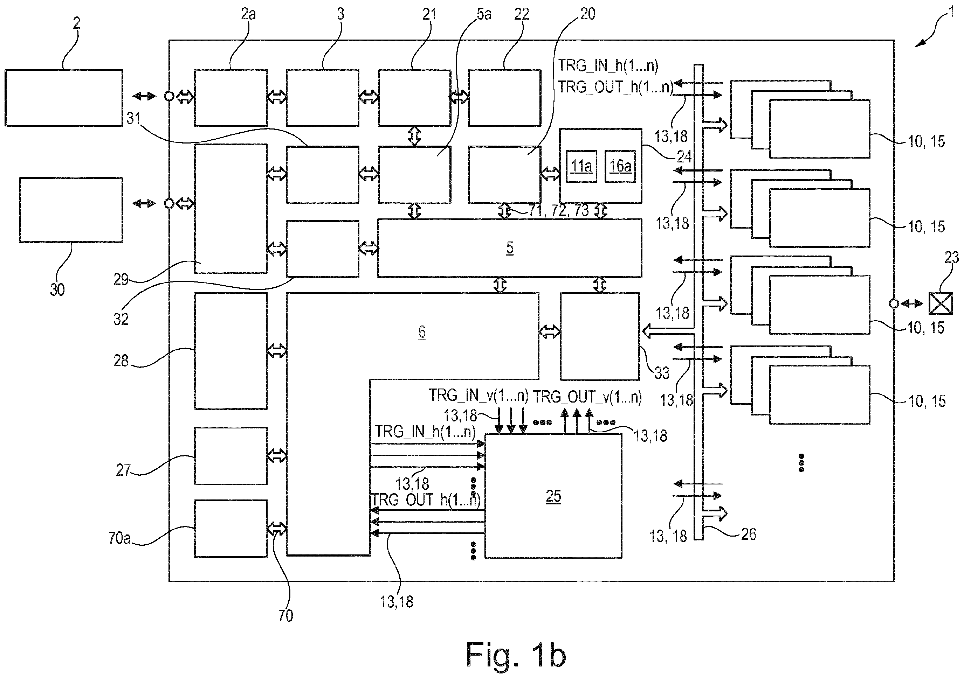

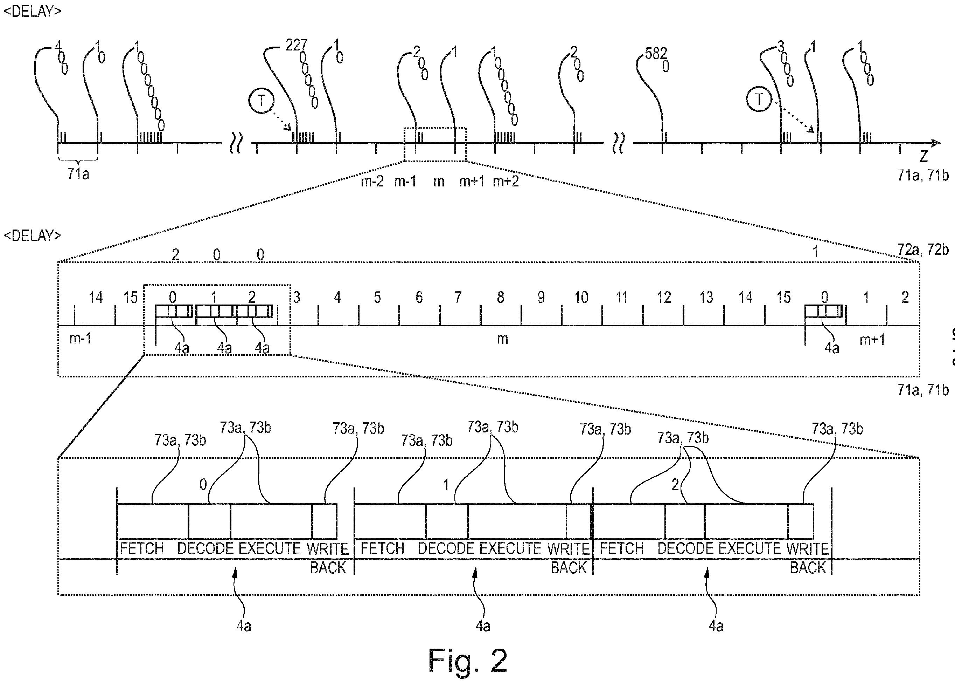

In US 2009/089 555 A1 ist der Begriff der Ausführungszeit bereits enger gefasst. Es wird ein Ansatz beschrieben, der Zeitvorgaben beinhaltet, wann mit der Ausführung eines Befehls begonnen werden soll, oder alternativ eine Zeitvorgabe, bis wann die Ausführung eines Befehls erfolgt sein soll. Die genaue Ausführung der Hardware wird nicht beschrieben, jedoch wird auch hier angedeutet, dass damit gerechnet werden muss, dass Befehle zur Laufzeit verspätet und damit nicht zum geplanten Zeitpunkt ausgeführt werden können. Es werden nämlich zwei Möglichkeiten genannt, wie nach der Erkennung solcher Ereignisse weiter vorgegangen werden kann: entweder die weitere Ausführung anzuhalten, oder einen Fehler auszugeben. Es ist also davon auszugehen, dass es sich bei dem Prozessorkern um eine herkömmliche Architektur handelt (siehe die genannten Instruktionen in Fig. 2), und dass Verzögerungen wie oben beschrieben auftreten können. Ein Indiz dafür ist das Vorhandensein eines Befehls-Cache (Fig. 1), bei dem bei einer falschen Sprungvorhersage ein sogenannter "Cache miss" auftritt und daher der Befehls-Cache neu gefüllt werden muss.

Dass die notwendige Zeit zwischen Beginn und Fertigstellung von Befehlsausführungen variieren kann, zeigt auch US 7,089,406 B2. Hier ist eine Methode beschrieben, wie die in einem System tatsächlich benötigte Anzahl an Prozessortaktzyklen gemessen werden kann.

Andere bekannte Ansätze unterscheiden zwischen solchen Befehlen im Befehlsstrom, die zeitlich präzise zur Ausführung gebracht werden müssen, und anderen Befehlen, deren Ausführung zeitlich unkritisch ist.

In US 6,453,424 B1 ist dies über Befehle realisiert, die einen Zeitstempel beinhalten können, also "timestamped" sind. Nach dem Parsen einer Instruktion wird überprüft, ob ein Zeitstempel vorliegt. Ist dies der Fall, kann über einen Befehlstyp unterschieden werden, ob ein Zeitintervall, ein frühester Zeitpunkt, oder ein direkt vorgegebener Zeitpunkt darüber entscheiden soll, wann ein Befehl zur Ausführung gebracht wird. Dies wird über funktionsspezifische Wait-States realisiert; die Ausführungseinheit steuert die Befehlsausführung über einen Micro Control Signals bus (μCSbus). Die beschriebene Anwendung ist ein Video-Codec. Bei diesem Ansatz ist anzunehmen, dass immer nur ein einzelner Befehl zu einem bestimmten Zeitpunkt zur Ausführung gebracht werden kann. Dies ist Fig. 1 bis 3 zu entnehmen, da die nötigen Komponenten wie "Comparator" und "Execute Signal" nicht mehrfach ausgeführt sind.

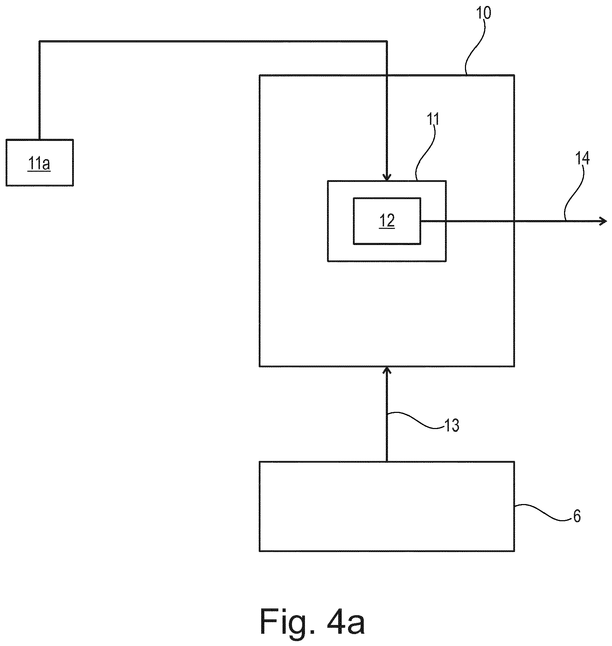

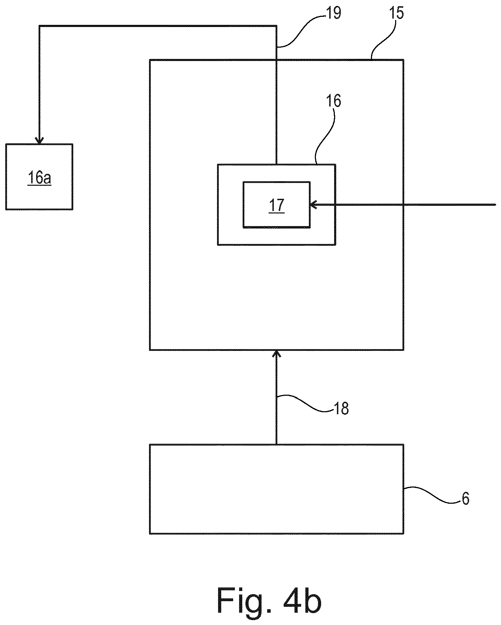

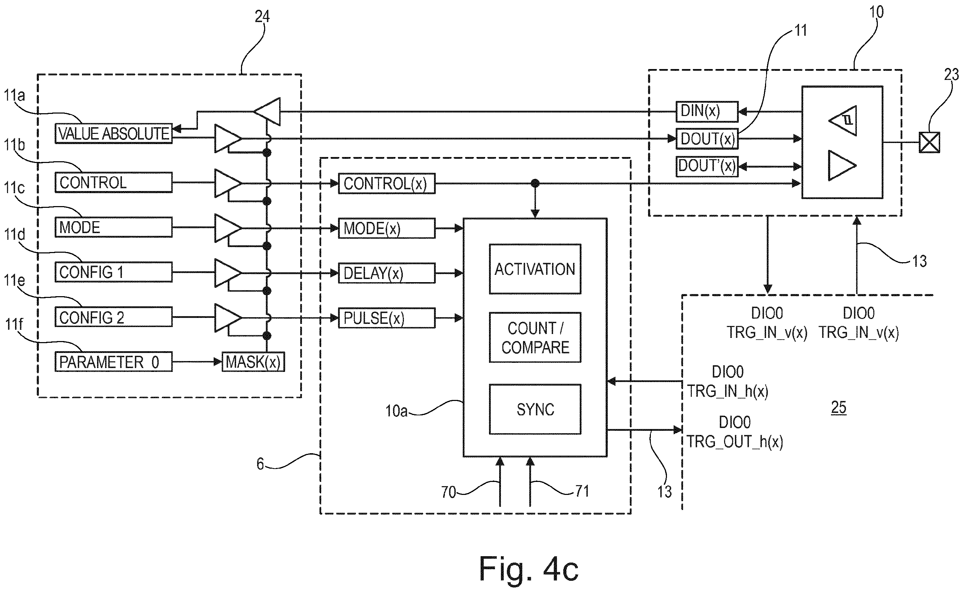

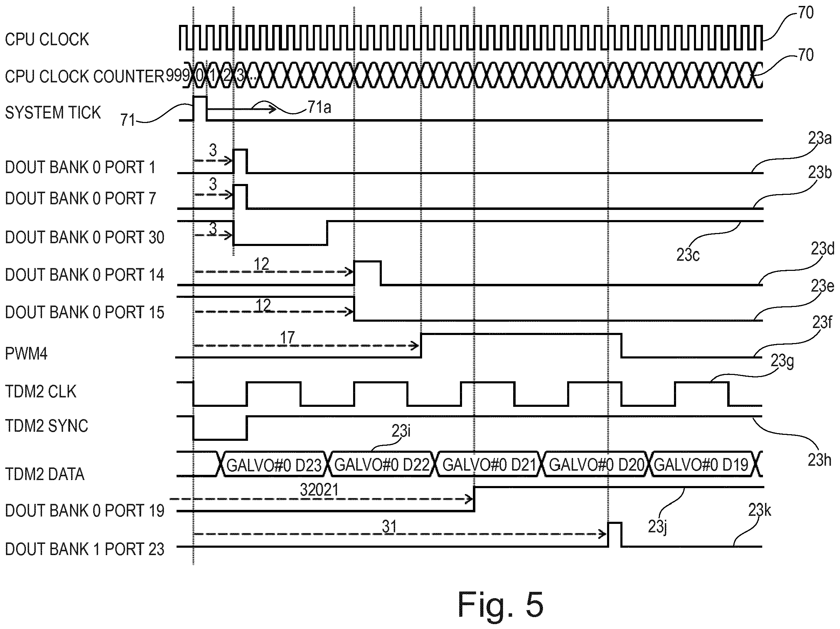

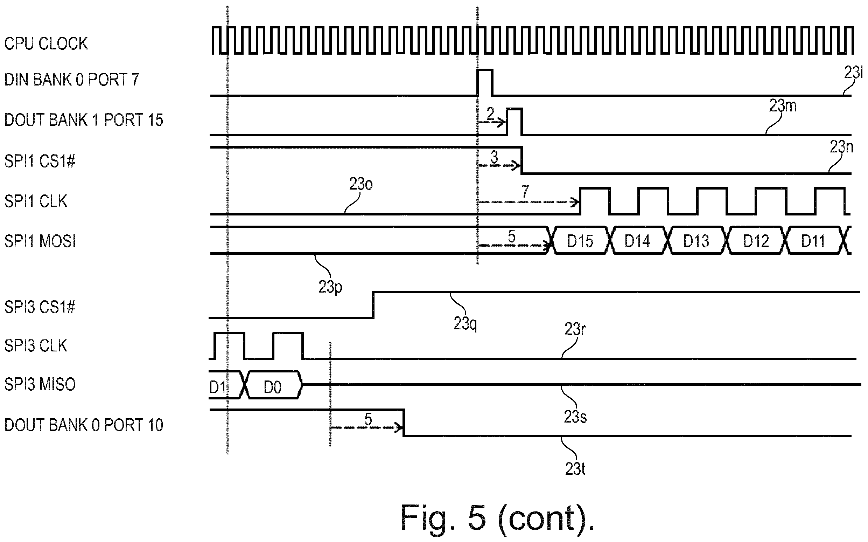

In US 2006/288 194 A1 können ebenfalls einzelnen Befehlen innerhalb einer Befehlssequenz zeitliche Ausführungszeitpunkte vorgegeben werden. Hier wird zudem ein Befehlssatz vorgeschlagen, der Befehle beinhaltet, die sich direkt auf Ein-/Ausgabe-Schnittstellen auswirken. Dies wird als notwendig beschrieben, um das genannte System eines Missile Launcher zeitgenau anzusteuern. Die Granularität wird dabei von der Intervalldauer, die über den "oscillator scaler" bestimmt wird, begrenzt. Dieser ist in der Größenordnung von 1 Millisekunde angegeben, und für zukünftige Versionen wird lediglich das Erreichen einer Größenordnung niedriger (100 Mikrosekunden) in Aussicht gestellt. Auch bei diesem Ansatz ist anzunehmen, dass immer nur ein Befehl zu einem bestimmten Zeitpunkt zur Ausführung gebracht werden kann. Dies ist Fig. 4 und 5 zu entnehmen, da das "execution inhibit control signal" nur für die aktuell zur Ausführung zu bringende Instruktion gilt und die Logik nicht mehrfach ausgeführt ist.

Einige Schritte weiter geht der Ansatz in US 6,560,715 B1. Hier können vorab erstellte Befehlssequenzen, mit denen zeitlich präzise Aktionen auf der Ein-/Ausgabe-Peripherie ermöglicht werden, über einen zum Prozessor nebenläufig arbeitenden Sequenzer zur Ausführung gebracht werden. Die Peripheriemodule können dabei sowohl vom Sequenzer als auch vom Hauptprozessor angesprochen werden. Der Beschreibung ist zu entnehmen, dass mehrere Aktionen innerhalb einer Sequenz, die mit der Latenz von Null zueinander versehen sind, zeitlich unmittelbar aufeinander folgen können. Die Möglichkeit echt paralleler, also zeitgleicher Ausgabe auf den Ausgabe-Ports ist jedoch nicht zu erkennen. Des Weiteren ist anzunehmen, dass die Aktionen im Sequenzer zueinander keine Möglichkeit zu Datentransfer oder Datenmanipulation (über das Setzen von Bits hinaus, z.B. komplexere Arithmetik) oder Entscheidungen über den Kontrollfluss bieten. Es ist also anzunehmen, dass hierfür wiederum der Hauptprozessor involviert werden müsste, was einen maßgeblichen Einfluss auf das zeitliche Gefüge der Sequenz bei zeitlich eng zueinander stehenden Aktionen zur Folge hätte.

Mit heterogenen Systemen lassen sich neue Ansätze für Implementierungen komplexer Rechensysteme erreichen. Diese stellen zwar hohe Anforderungen an Systementwurf, Modellierung und Simulation, bieten aber ein hohes Maß an feingranularer Parallelität und Datendurchsatz.

Ein wesentliches Merkmal beim Systementwurf kann dabei die Strukturbeschreibung der Verhaltensmodelle über vordefinierte, feingranulare Funktionsblöcke aus Bibliotheken sein. Geeignete Funktionsblöcke können zur Laufzeit durch das Ändern von Parametern, Koeffizienten oder Datenlisten für ansonsten zeitlich gleichbleibende Programmteile wiederverwendet werden. Ist dies nicht der Fall, müssen neue Blöcke nachgeladen werden.

Würde jedoch versucht werden, den gesamten Funktionsumfang eines hochkomplexen Messgeräts in feingranulare Funktionsblöcke zu zerlegen, so müsste für nahezu jede Kombination und der sich daraus ergebenden massiven zeitlichen Verflechtung einzelner Programmteile eine zeitlich korrekt arbeitende Logik modelliert und aufwendig verifiziert bzw. validiert werden, da sich die einzelnen Blöcke weniger durch von Parameter, Koeffizienten oder Datenlisten unterscheiden, sondern um zeitlich verwobene Aufgaben mit genauen zeitlichen Abhängigkeiten zueinander.

Durch die Sequentialität der Messsequenzen ist eine genaue zeitliche Strukturierung unerlässlich; somit ist neben Ausnutzung der massiven Parallelität von Schaltkreisen wie FPGAs die Realisierung zahlreicher sequentieller Abläufe unbedingt erforderlich. Ein Umstand ist hierbei aber, dass alle sequentiell stattfindenden Abläufe in FPGAs für die Logiksynthese in Strukturen wie Zählersteuerungen oder Zustandsautomaten (Finite State Machine, FSM) überführt werden müssten.

Die Überprüfung von FPGA-Designs, sowohl durch funktionale Verifikation (z.B. durch Simulation oder FPGA-based prototyping), als auch mit Hilfe von formaler Verifikation, ist zudem komplex und sehr zeitaufwendig. Häufig bilden Verifikation und Test den größten Anteil am Gesamtaufwand eines Designprozesses.

Darüber hinaus müsste bei jedem Hinzufügen bzw. Ändern der überlagernden Funktion ein großer Teil der Funktionsblöcke neu synthetisiert und gespeichert werden, was sich als sehr ineffizient erweisen kann.

Eine flexibel programmierbare Logik auf Instruktionsfluss-Basis wäre demnach die effizientere Lösung, denn der Validierungsaufwand für die singuläre Implementierung einer Ablaufsteuerung ist deutlich geringer.

Eine gute Argumentation diesbezüglich liefert die Arbeit "Methoden und Werkzeuge zum Einsatz von rekonfigurierbaren Akzeleratoren in Mehrkernsysteme" von Fabian Nowak (Karlsruher Institut für Technologie, KITopen ID 1000048026 (2015)): "Mit der Mikroprogrammierung entfällt als eine von mehreren möglichen Fehlerquellen bei der Prozessorentwicklung die Verschaltung der einfachen Funktionseinheiten zu Datenpfaden während der Schaltungsentwicklung. Das Mikroprogramm kann hingegen in einem Simulator sorgfältig entwickelt, simuliert und validiert werden. Sollten dennoch Fehler in der Implementierung der Mikroprogramme vorhanden sein, so können diese nachträglich behoben werden. Wird die Befehlssatzarchitektur erweitert, so können neue Mikroprogramme dem Prozessor hinzugefügt werden, um die neuen Befehle zu implementieren."

In dieser Arbeit geht es zwar um einen datengetriebenen, mikroprogrammierbaren Ansatz für möglichst effiziente Hardware-Beschleunigungsblöcke für Vektor- und Matrixoperationen, jedoch kann die Argumentation auch auf den hier vorliegenden, instruktionsgetriebenen Ansatz angewendet werden.

Nowak verweist weiterhin u.a. auf Arbeiten über die RISPP-Plattform von Lars Bauer et al. wie "RISPP: rotating instruction set processing platform" (Design Automation Conference 2007, ISSN 0738-100X, INSPEC accession number: 9867049) und "Run-time Adaptation for Reconfigurable Embedded Processors" (Springer Verlag, ISBN 978-1-4419-7412-9 (2011). Dort werden aber auch gewisse Nachteile von rekonfigurierbarer Logik herausgestellt, welche aus der Tatsache resultieren, dass es eine Diskrepanz zwischen der Adaptierbarkeit von zur Laufzeit erforderlichen, aber zur Kompilierzeit bereits festzulegenden Funktionsblöcken geben kann. Dies ist besonders bei der Notwendigkeit für neue Funktionsblöcke wichtig. Nowak fasst die Problematik folgendermaßen zusammen: "Solange die aus dem Anwendungsumfeld extrahierten Spezialbefehle für einen Anwendungsentwickler ausreichend sind, kann RISPP sehr hohe Leistung liefern. Genügen die Spezialbefehle nicht, so hat ein Domänenexperte neue Spezialbefehle zu definieren, ggf. in die Werkzeugkette einzubringen, Moleküle zu formulieren und voraussichtlich sogar das gesamte Design neu zu synthetisieren."

Nicht zu vernachlässigen sind die Entwicklungs-, Test-, und Kalibrierphasen für jedes Messgerät sowohl beim Hersteller, als auch im Feld. Schließt der Experimentator oder Betreiber des Messgerät beispielsweise eine neue Komponente an das Messgerät an, deren Timing-Modell noch unbekannt ist, so müsste für die Kalibrierung und Synchronisierung zu anderen Komponenten im schlimmsten Fall für jeden Iterationsschritt neue Logikblöcke zeitintensiv synthetisiert werden. Bei einer programmierbaren Lösung hingegen wäre im vorliegenden Fall nur ein inkrementelles Kompilieren bzw. Bauen der Messsequenz-Programme erforderlich.

Des Weiteren ist ein Debuggen auf FPGAs im klassischen Sinne nur schwer möglich. Im Gegensatz zum Arbeiten mit Breakpoints und Watchpoints stehen bei FPGAs oft nur Verfahren wie statische Zeitanalyse, Simulation oder Ausgabe von Debug-Signalen an Hardware-Pins zur Verfügung. Eine geeignete Prozessorarchitektur sollte deshalb weitere Möglichkeiten zum Debuggen zur Laufzeit bereithalten. Dies können zeitrichtiges Tracing, Überwachung von prozessorinternen Informationen und Registerinhalten und kontrollierte Suspend- und Resume-Funktionen im Kontrollfluss sein, um ähnliche Funktionalitäten wie Watchpoints und Breakpoints zu bieten.

Wünschenswert ist weiterhin eine Architektur, mit der das Indizieren (Tunneln) von Einzelbefehlen ohne Einfluss auf das zeitliche Gefüge möglich ist. Dadurch werden interaktive Benutzereingaben möglich. Weiterhin kann es sinnvoll sein, auch während der Programmausführung weitere Prozeduren oder ganze Programme in den Programmspeicher zu laden und z.B. mittels Tunneln eines Sprungbefehls aufzurufen.

Aufgabe und Lösung

Es ist die Aufgabe der Erfindung, einen Mikroprozessor bzw. Mikrocontroller bereitzustellen, der eine deterministische Befehlsausführung zu vorgegebenen Zeitpunkten sowie deterministische, hochpräzise Ein- bzw. Ausgabe ermöglicht, ohne dass für diesen Determinismus die für Anwendungen wie Messgeräte im Labor- und Forschungsbetrieb wichtige flexible Funktionalität eines programmierbaren Mikroprozessors geopfert werden muss.

Diese Aufgabe wird erfindungsgemäß gelöst durch einen Mikroprozessor bzw. Mikrocontroller gemäß Hauptanspruch, durch ein zugehöriges Computerprogrammprodukt, durch ein eingebettetes System und durch ein Verfahren zur Zusammenführung von Programmen gemäß Nebenansprüchen. Weitere vorteilhafte Ausgestaltungen ergeben sich aus den darauf rückbezogenen Unteransprüchen.

Offenbarung der Erfindung

Im Rahmen der Erfindung wurde die Rechnerarchitektur für einen Mikroprozessor bzw. Mikrocontroller entwickelt. Dieser Mikroprozessor bzw. Mikrocontroller umfasst mindestens einen Speicher zur Aufnahme von Instruktionen, mindestens eine Instruktionsladeeinheit und mindestens eine Instruktionsausführungseinheit. Die Instruktionsladeeinheit ist dazu ausgebildet, Instruktionen aus dem Speicher abzurufen und an die Instruktionsausführungseinheit zu übermitteln. Jede Instruktion enthält mindestens einen Befehl sowie eine Zeitvorgabe. Dabei kann insbesondere die Semantik aller Instruktionen des Instruktionssatzes eine Zeitvorgabe enthalten. Die Instruktionsausführungseinheit ist dazu ausgebildet, den Befehl auszuführen.

Erfindungsgemäß ist zusätzlich eine Zeitverwaltungseinheit vorgesehen, welche dazu ausgebildet ist, einen aus einer Abfolge von Zeitintervallen (Systemzyklen) bestehenden Systemtakt vorzugeben und mindestens den Beginn eines jeden Systemzyklus an die Instruktionsausführungseinheit und an andere Komponenten des Mikroprozessors bzw. Mikrocontrollers zu signalisieren. Dabei umfasst jeder Systemzyklus eine Mehrzahl von Zyklen des Prozessortakts des Mikroprozessors bzw. Mikrocontrollers. Die Zeitvorgabe in der jeweiligen Instruktion gibt an, für welchen Systemzyklus die Ausführung des Befehls geplant ist. Die Instruktionsausführungseinheit ist dazu ausgebildet, auf die Signalisierung des Beginns eines Systemzyklus hin alle Befehle, deren Ausführung für diesen Systemzyklus geplant ist, innerhalb dieses Systemzyklus auszuführen, d.h., diese Ausführung innerhalb dieses Systemzyklus sowohl zu beginnen als auch abzuschließen.

Auf diese Weise wird die Zeit von vornherein in Blöcke, die eine bestimmte Anzahl an Prozessortakten umfassen, diskretisiert und insoweit ein zeitliches Bezugssystem für die Befehlsausführung geschaffen. Die Länge dieser Blöcke gibt die mindeste zeitliche Genauigkeit an, mit der die Ausführung eines Befehls im Programm vorausgeplant werden kann.

Entscheidend ist, dass nicht nur die Zeitpunkte des Beginns von Befehlsausführungen, sondern auch die Zeitpunkte, wann die Resultate aus den Befehlen vorliegen, taktzyklengenau bekannt und somit deterministisch sind. Diese Resultate können erfindungsgemäß zwischengespeichert und zu taktzyklengenau definierbaren Zeitpunkten synchronisiert und ausgegeben werden. Das zeitliche Gefüge erstreckt sich hierfür über die gesamte Prozessorlogik einschließlich Peripheriemodule.

Dies ermöglicht echt gleichzeitige oder in präzise definierbaren Zeitabständen zueinander stehende Ausgaben, z.B. über Ein-/Ausgabe-Schnittstellen. Somit kann die Genauigkeit für das Ein-/Ausgabeverhalten des Mikroprozessors bzw. Mikrocontrollers deutlich verbessert werden. Durch die Einhaltung festgelegter Zeitvorgaben ist weiterhin ein deterministisches und somit jitterfreies zeitliches Verhalten von Programmen mit absoluter Wiederholgenauigkeit möglich. Dies ist speziell für komplexe Anwendungen in der Messtechnik wichtig.

Es wurde erkannt, dass durch die Einführung einer solchen zeitlichen Semantik unmittelbar auf der Ebene der vom Prozessor auszuführenden Instruktionen die Genauigkeit und Verlässlichkeit, mit der der vorgegebene Ausführungszeitpunkt einhaltbar ist, deutlich gesteigert werden kann. Wenn der Ausführungszeitpunkt bereits auf dieser tiefen Ebene festgelegt wird, hat diese Festlegung Priorität und kann durch Einflüsse höherer Ebenen, wie beispielsweise durch die Wechselwirkung mit anderen Prozessorkernen, mit Peripherie oder auch mit Software, beispielsweise mit Echtzeitbetriebssystemen (real-time operating systems, RTOS), nicht mehr abgeändert werden.

Dabei liegt ein wesentlicher Vorteil dieser zeitlichen Semantik auf Befehlsebene in der Zwangsläufigkeit. Viele im Stand der Technik offenbarte Semantiken ermöglichen lediglich die Festlegung einer Verzögerung, die additiv zu weiteren Verzögerungen wirkt, die vom Anwender nicht beeinflussbar sind. Es lässt sich dann häufig nur ein frühester Zeitpunkt festlegen, zu dem der Befehl ausgeführt wird, nicht jedoch, dass diese Ausführung stets genau innerhalb eines vorgegebenen Zeitfensters erfolgt. Die Präzision, mit der ein vorgegebener Ausführungszeitpunkt eingehalten wird, wird also nicht verbessert.

Wird hingegen die Befehlsausführung einem strengen zeitlichen Gefüge auf Befehlsebene unterworfen, so dass alle Befehle, deren Ausführung für einen im Voraus festgelegten Systemzyklus geplant ist, zwangsläufig während dieses Systemzyklus ausgeführt werden, so lässt sich die Einhaltung einer exakten Choreographie mehrerer gleichzeitig oder zueinander in genau definierten zeitlichen Abständen auszuführender Befehle einhalten.

Zur Verdeutlichung kann der Vergleich mit einem Symphonieorchester und dem zu spielenden Werk bemüht werden. Das Programm bzw. die Messsequenz entspricht dabei der Partitur, welche die zeitlich präzise festgelegten, in engem Kontext zueinander stehenden Vorgaben für die einzelnen Musiker bzw. Instrumentengruppen enthält. Alle beteiligten Musiker müssen sich an die zeitlich streng vorgegebene Strukturierung der Partitur halten, da sich sonst das Zusammenspiel der teilweise hochgradig parallelisierten Tonfolgen untereinander nicht mit der Vorgabe deckt, was sich qualitätsmindernd bis katastrophal auf das Gesamtergebnis auswirken kann.

Hingegen wirkt das gespielte Werk deutlich weniger in seinem Wesen verändert, wenn es insgesamt auf ein schnelleres oder langsameres Zeitmaß skaliert wird. Gleiches gilt auch in der Messtechnik. Indem der Systemtakt, d.h. die Dauer der Systemzyklen, verändert wird, kann die komplette Programmausführung durch Ändern nur eines Parameters und ohne Eingriff in das Programm selbst auf eine höhere oder niedrigere Geschwindigkeit skaliert werden.

Weiterhin muss die Länge des Systemtakts, ähnlich der Taktart in einer Komposition, nicht zwingend während des gesamten Ablaufs eines Programms konstant sein. Erscheint es für geeignete, nacheinander auszuführende Programmteile sinnvoll, die Systemzyklusdauer zu verändern, so ist dies ebenfalls durch Ändern nur eines Parameters möglich.

Den Anlass zu der Erfindung gab die Aufgabe, die Steuerung eines hochpräzisen, mit vielfältig unterschiedlichen Aktuatoren und Sensoren ausgestatteten digitalen Hochleistungsmikroskops für moderne Superresolution-Bildgebungsverfahren bei hohen Aufnahmeraten zu verbessern.

Die Anzahl der in einem solchen Mikroskop integrierten Aktuator- und Sensor-Komponenten, welche hochgenau synchronisiert werden müssen, kann mehrere Dutzend erreichen. Dazu zählen beispielsweise:

- Galvanometer-Scanner zur Bewegung von Spiegeln;
- Voice Coil Aktoren für eine schnelle, nanometergenaue Fokusverstellung;
- zahlreiche LED-Lichtquellen für die Probenbeleuchtung, z.B. Messungen im Durchlicht- und der Auflichtfluoreszenz;
- mehrere Laser-Lichtquellen, z.B. für Fluoreszenzmessungen;

- Helligkeitsregelungen der genannten Lichtquellen;
- Linearmotoren für die Probenpositionierung in x- und y-Richtung;
- weitere Motoren für Filterwechsel und Objektivwechsel oder zum Ein- und Ausfahren von Spiegeln in den Beleuchtungsstrahl;
- Kamerachips, die bei einer oft eingesetzten Teilchip-Auslese mit Bildraten von bis zu 100000 fps betrieben werden;
- Rolling Shutter Kameras, deren Schlitzverschluss mikrosekundengenau mit der Bewegung von Scanspiegeln synchronisiert sein muss und die mit eigenem Zeilentakt betrieben werden; uvm.

Insgesamt kann die Steuerung eines derartigen Mikroskops 100 und mehr digitale Ein-/Ausgänge-Ports umfassen. Dazu zählen Schnittstellen wie GPIO, SPI, UART, CAN, PWM, USB etc. für Trigger- und Synchronisierungsleitungen, zur Kommunikation mit Analog-Digitalwandlern, Digital-Analogwandlern, Schritt- und Servomotorsteuerungen, Temperaturregelungen etc.

Was den Funktionsumfang eines solchen Mikroskops betrifft, so stehen auf der einen Seite eine Vielzahl von Aufnahmeverfahren wie Durchlichtmikroskopie, Auflicht-Fluoreszenzmikroskopie, konfokale Mikroskopie, Strukturierte Beleuchtungs-Mikroskopie (SIM), verschiedene Fluoreszenzverfahren wie TIRF, FRET, FRAP, STORM, oder spezielle Übersichtsaufnahmen zur Verfügung, die vom Experimentator nahezu beliebig kombiniert und zeitlich verschachtelt werden können. Beim Erstellen der Messsequenzen können dabei für jede der Aufnahmeverfahren unterschiedliche Einstellungen wie Experimentdauer, Bewegungsprofile, mehrfarbige Beleuchtungsprofile etc. vonnöten sein.

Die Kombinationen aus Aufnahmeverfahren können weiterhin von Techniken wie Stapelaufnahmen, ein- oder mehrfarbigem Stroboskopbetrieb, Selbst-Test, Rekalibrierung, Auto-Fokus oder Live-Bild auf unterschiedliche Art gruppiert und überlagert werden, womit paralleles Überlagern der Aufnahmeverfahren durch entsprechende Aktionen erforderlich wird.

Überdies kann noch eine weitere Ebene der Überlagerung durch möglichst zeitgleich stattfindende Aktionen nötig sein, um während der Messung auftretende physikalische Effekte zu erkennen und zu kompensieren. Beispiele dafür sind die Kompensation schiefer Proben durch zeitrichtiges Anpassen der Fokus-Position während des Verfahrens des Probentisches bei der Aufnahme, die Kompensation von Umkehrspielen bei Spindelantrieben, oder die Kompensation von Drifteffekten aufgrund thermischer Ausdehnung von Bauteilen für die Probenpositionierung durch sich ändernde Temperaturen im Probenraum.

Berücksichtigt man über diese Kompensation physikalischer Drifteffekte hinaus noch Möglichkeit zum interaktiven Eingreifen durch den Experimentator, ohne dass die zeitliche Abläufe beeinflusst werden dürfen, ist es ersichtlich, dass die Zahl der Experimentvariationen beliebig groß werden kann.

Die Genauigkeit der zeitlichen Koordination bei der Ausführung von Befehlen ist ein begrenzender Faktor für die letztendlich erzielbare Messgenauigkeit. Auf Programmebene bedeutet dies, dass im Bedarfsfall eine Vielzahl aus Peripheriemodulen, Schnittstellen und Rechenressourcen während der Messung zeitlich zueinander hochgenau synchronisierbar sein müssen. Neben Berechnungen wie arithmetischen oder logischen Operationen sollten auch Kontrollflussoperationen wie Verzweigungen nach Fallunterscheidungen oder Schleifen im Programmablauf deterministisch erfolgen können. Daraus resultiert die Anforderung, dass die Ausführung von Befehlen zu genau vorhersagbaren Zeitpunkten erfolgen muss, und hier insbesondere die genaue Synchronisation mehrerer gleichzeitig oder in klar definierter, zeitnaher Folge nacheinander auszuführender Befehle wichtig ist. Besonders bei Untersuchungen an lichtempfindlichem Probenmaterial ist dies für das Gesamtergebnis äußerst kritisch.

Der Entwicklung bzw. Kalibrierung einzelner Komponenten des Mikroskops entsprechen in der Analogie des Symphonieorchesters die Probenphasen der einzelnen Instrumentengruppen. Jede einzelne Gruppe kann getrennt voneinander ihre Tonfolgen einüben, bis die erforderliche Präzision erreicht ist. In den Gesamtproben werden die Stimmen dann zusammengesetzt, und der Dirigent kann sich auf übergeordnete musikalische Feinheiten konzentrieren. Dabei ändert sich das Taktschema durch das Hinzufügen oder Wegnehmen einzelner Instrumentengruppen nicht.

Bei der Aufführung wird das Taktschema durch den Dirigenten vorgegeben. Der Systemtick entspricht dabei jenen Bewegungen des Taktstocks, mit denen der Dirigent den Musikern den Beginn eines jeden Taktes vorgibt.

Jeder Musiker wird sich, je nach Instrument und Technik, anhand des vorgegeben Taktschemas rechtzeitig auf die Erzeugung seiner Tonfolgen vorbereiten, so dass diese präzise zu den gewünschten Zeitpunkten, und auf die anderen Musiker abgestimmt, erfolgen kann. Dies entspricht in der Analogie der präzise abgestimmten Ausgabe von Resultaten.

Schließlich kann der Dirigent, entsprechend dem Experimentator während einer Messung, auch während der Aufführung noch korrigierend eingreifen; beispielsweise wenn er feststellt, dass sich die Akustik des mit Publikum gefüllten Aufführungsraumes zum vormals leeren Raum unterscheidet, und er daher einzelne Instrumentengruppen lauter spielen lässt.

Für diese Analogie sei selbstverständlich angenommen, dass ein professionelles Orchester die geforderten Tonfolgen präzise abliefert, und dabei exakt den Anweisungen des Dirigenten folgt, ohne das zeitliche Gefüge zu beeinflussen. Für die zeitliche Ablaufsteuerung des Mikroskops sollte dasselbe gelten.

Es wurde erkannt, dass sich eingebettete Ablaufsteuerungen für ein solches Mikroskop sowie für andere komplexe Mess- oder Prüfsysteme mit herkömmlichen Echtzeitsystemen nur unzureichend realisieren lassen, da sich die Aufgaben der Anwendung in der Regel nicht oder nur in sehr geringem Rahmen in einzelne, sich wiederholende Tasks oder Funktionsblöcke aufteilen lassen. Komplexe Vorgänge in vorgegebenen Messsequenzen müssen in zeitlich und logisch korrekte Abhängigkeit gebracht werden.

Die vorliegende Architektur unterscheidet sich demnach dahingehend vom Stand der Technik, dass nicht ganze Tasks, sondern vielmehr die Ausführung von Einzelbefehlen bestimmten Zeitintervallen zugeordnet werden.

Gegenüber dem bisherigen Stand der Technik ist der Programmablauf zum einen zeitlich vorhersehbar. Zum anderen ist er auch deterministisch, also bei jeder Wiederholung des Programmablaufs gleich. Dies ist eine wesentliche Erleichterung für die Programmentwicklung insbesondere für Steuerungsaufgaben, bei denen nicht nur die programmtechnische Umsetzung der Choreographie, sondern auch die Choreographie selbst Gegenstand der Entwicklung ist. Wenn sich nach dem bisherigen Stand der Technik am Ergebnis der Steuerungsaufgabe Defizite zeigten, war zunächst nicht klar, ob der Fehler in der Choreographie selbst zu suchen war oder in der schlechten zeitlichen Vorhersagbarkeit der Programmausführung. Dementsprechend viele Testläufe waren erforderlich, um das Problem einzukreisen. Wiederholgenauigkeiten im Sub-Mikrosekundenbereich waren quasi unmöglich. Insbesondere im Kontext von eingebetteten Systemen konnte das zeitliche Verhalten von Prozessoren oft nur mit Worst-Case-Abschätzungen, WCET, der Ausführungszeit abgeschätzt werden. Derartige Abschätzungen und insbesondere weitergehende Verifikationen waren schwierig, teuer und noch dazu häufig an das Gesamtsystem gebunden, so dass sie bei auch nur geringfügigen Änderungen am Gesamtsystem ungültig wurden.

Es wurde erkannt, dass ein Hauptgrund hierfür die extensive Verwendung von Interrupts war, die vielfältige Einflüsse in Form von Latenzen in das Gesamtsystem einbrachten. Beispielsweise benötigte allein die Generierung von periodischen Ticks in nahezu allen Echtzeitbetriebssystemen Interrupts. Gemäß der Erfindung lässt sich nun die zeitliche Abfolge der Befehlsausführung analog einer Orchesterpartitur von vornherein festlegen. Die Behandlung sporadischer oder periodischer externer Ereignisse lassen sich auf andere Arten, beispielsweise über reservierte Zeitfenster, realisieren, so dass das Interrupt-Handling im herkömmlichen Sinne vollständig entbehrlich wird.

Weiterhin ist die gemäß der Erfindung festlegbare Ausführungszeit auch unabhängig vom Kontrollfluss des Programms sowie von nichtdeterministischen Wartezeiten bzw. Latenzen, die in herkömmlichen Mikroprozessoren beim Zugriff auf Peripheriegeräte und auf Speicher entstehen. Insbesondere Steuerflusskonflikte wie Cache-Misses führten bisher dazu, dass die Programmausführung auf Grund der "memory wall", also auf Grund der im Vergleich zur Prozessorgeschwindigkeit langsamen Geschwindigkeit der Zugriffe auf RAM außerhalb des Mikroprozessors, ungeplant und unvorhersehbar verlangsamt wird.

Nach dem bisherigen Stand der Technik hing es weiterhin zum Teil vom Compiler ab, wann eine in einer Hochsprache programmierte Anweisung auf der Prozessorebene letztendlich ausgeführt wurde: Ein und dieselbe Funktionalität lässt sich vielfach in verschiedenen Abfolgen von Instruktionen auf Prozessorebene ausdrücken. Diese Abfolgen können sich zum einen dahingehend unterscheiden, dass sie unterschiedlich viele solcher Instruktionen enthalten. Zum anderen benötigen unterschiedliche Instruktionen auch unterschiedliche Zeiten zur Ausführung. Unterschiedliche Compiler können nun die besagte Funktionalität in unterschiedliche Abfolgen übersetzen, deren Ausführung unterschiedlich lange dauert. Manche Compiler lassen sich auch dahingehend konfigurieren, dass sie zur Erzielung bestimmter Optimierungsziele ihre Strategie, nach der sie die Abfolge auswählen, ändern. Indem gemäß der Erfindung die Ausführungszeit direkt in die Instruktion auf Prozessorebene einkodiert ist, werden die genannten Einflüsse des Compilers auf die Ausführungszeit beseitigt.

Die Ausführungszeit kann mit einer Genauigkeit bis hin zu einem Prozessortaktzyklus, also in den Nanosekundenbereich, festgelegt werden.

Keiner der Ansätze aus dem Stand der Technik ist dazu geeignet, die flexible Funktionalität eines programmierbaren Mikroprozessors mit zeitlich präzisen Ein-/Ausgabesequenzen derart zu kombinieren, dass Wiederholzeiten im niedrigen Mikrosekundenbereich erreicht werden; weiterhin die Ergebnisse einer Vielzahl auszuführender Befehle parallel vorgehalten und in einem vorgegebenen zeitlichen Schema zum selben Prozessortaktzyklus oder taktzyklengenau zueinander versetzt ausgegeben werden.

Im Unterschied zu den o.g. Ansätzen wie US 2009/089 555 A1 und WO 2011/067 254 A1 wird die Ausführungszeit stets eingehalten. Eine Fehlerbehandlung bei Nicht-Einhalten der Zeit ist nicht vorgesehen, da die Befehlsausführung deterministisch ist. Voraussetzung ist, dass die maximale Anzahl an Befehlen pro Systemzyklus in der Messsequenz nicht überschritten wird, und Zugriffe auf Komponenten nicht innerhalb eines Systemzyklus konkurrieren (also die Ergebnisse von einem Befehl nicht durch die eines anderen überschrieben werden), bevor sie zur Ausführung kommen. Die Prüfung dieser Voraussetzungen ist aber durch die zeitlich strukturierte Anordnung im Programm einfach möglich.

Im Gegensatz zum Stand der Technik soll die Realisierung der für das beschriebene System zeitlich präzise zu synchronisierenden Aufgaben nicht über vom Hauptprozessor getrennte nebenläufige Funktionseinheiten (wie etwa einen Sequenzer in US 6,560,715 B1 beschrieben, oder Interface Controller wie in WO 2008/125 670 A1 beschrieben) erfolgen, sondern in der Ablaufsteuerung des Prozessorkerns selbst.

Die Erfindung bietet eine flexibel programmierbare Prozessorarchitektur, welche einen sequentiellen Instruktionsfluss bei gleichzeitig hohem Parallelitätsgrad durch nebenläufige Programmteile bzw. Zustandsautomaten bietet; und dabei deterministisch und mit hoher zeitlicher Präzision arbeitet. Dies hat zum Ziel, die flexible Funktionalität eines programmierbaren Mikroprozessors (z.B. für Berechnungen, Datenmanipulation, Datentransfer, Kontrollflusseigenschaften) mit zeitlich hochpräzisem Ein-/Ausgabeverhalten zu kombinieren. Dabei sollen zwingende Wiederholzeiten im niedrigen Mikrosekundenbereich und eine absolute Präzision mit der Genauigkeit des Prozessortaktes auf den Ein-/Ausgabeschnittstellen erreichbar sein.

Mit anderen Worten: eine Architektur, welche komplexe Funktionen eines Test-Sequenzers in der Kompaktheit und Flexibilität eines eingebetteten Mikroprozessors bzw. Mikrocontrollers mit FPGA-Timing bietet.

Wie bereits beschrieben, bildet ein festes, globales Zeitraster das Grundgerüst für die zeitliche Strukturierung. Dafür wird die Befehlsausführung über eine Zeitverwaltungseinheit einem zeitlichen Gefüge unterworfen, welches sich über die gesamte Prozessorlogik einschließlich Peripheriemodule erstreckt. Damit kann die Genauigkeit für vorgegebene, zwangsläufig einzuhaltende Ausführungszeitpunkte von Programmbefehlen und des resultierenden Ein-/Ausgabeverhaltens deutlich verbessert werden.

Die hier beschriebene Zeitverwaltungseinheit unterscheidet sich in ihrer Funktionalität deutlich von gleichlautenden Komponenten in anderen Schriften. So wird beispielweise in WO 2008148838 A1 eine Zeitverwaltungseinheit eingeführt, die einem steuerbaren Taktgeber zur Anpassung des Prozessortaktes dient. Es gibt auch hier eine zeitgesteuerte Ausgabe von Hardwaresignalen an das Steuerwerk; diese dient hier jedoch offenbar lediglich dazu, etwaige Überschreitung von festlegbaren Schranken bei der Überwachung des Zeitbedarfs für die Ausführung einzelner Befehle zu signalisieren.

Die Länge der mit Hilfe der Zeitverwaltungseinheit gebildeten Zeitintervalle kann als Systemzyklus bezeichnet werden und programmierbar ausgeführt sein. Dabei kann die Dauer des Systemzyklus entsprechend der jeweiligen Genauigkeitsanforderung, mit der eine Instruktion zum vorgegebenen Zeitpunkt auszuführen ist, frei gewählt werden. Vorteilhaft ist der Systemzyklus des Mikroprozessors bzw. Mikrocontrollers kürzer als der Systemzyklus eines Geräts, zu dessen Ansteuerung der Mikroprozessor bzw. Mikrocontroller dient. Dient der Mikroprozessor bzw. Mikrocontroller zur Ansteuerung eines Systems mit mehreren Komponenten, ist der Systemzyklus des Mikroprozessors bzw. Mikrocontroller vorteilhaft kürzer als der kürzeste Systemzyklus der Komponenten des Systems. Die Dauer des Systemzyklus ist weiterhin, je nach angeschlossener Peripherie (wie Sensoren und Aktuatoren) vorteilhaft ein gemeinsamer Nenner der Zyklusdauer bzw. Reaktionsdauer dieser externen Peripheriegeräte, die für die Anwendung benötigt werden. Solche Werte können vom Millisekundenbereich bis in den einstelligen Mikrosekundenbereich und darunter skalieren. Vorteilhaft wird ein Systemzyklus im ein- bis zweistelligen Mikrosekundenbereich gewählt.

Das Bilden der Zeitintervalle kann in einer Zeitverwaltungseinheit beispielsweise durch wiederkehrende Impulse, die an die Befehlsausführungseinheit und andere Komponenten geführt werden, erfolgen. Diese Impulse (Systemticks) bilden dann die Einheit für die Diskretisierung der Zeitvorgabe und können von einem internen Takt (sinnvollerweise der Prozessortakt) oder einem externen Takt abgeleitet werden.

Wie bereits beschrieben, geben die Zeitvorgaben in den Instruktionen die zeitlich strukturierte Abfolge der Befehlsausführung vor. Diese Angabe der Zeitvorgaben kann prinzipiell auf zwei Arten geschehen: mit in Systemzyklen bemessenen absoluten Ausführungszeitpunkten, oder mit in Systemzyklen bemessenen relativen Ausführungszeitpunkten. In beiden Ausgestaltungen ist eine separate Datenhaltung für die Ausführungszeitpunkte außerhalb der Instruktion selbst nicht mehr erforderlich.

Bei der Verwendung absoluter Ausführungszeitpunkte kann der Mikroprozessor bzw. Mikrocontroller dazu ausgebildet sein, einen internen Zähler beim Start des Programms auf den Wert 0 zu setzen, diesen Wert mit jedem folgenden Systemzyklus zu inkrementieren; und in jedem Systemzyklus all diejenigen Befehle auszuführen, deren absolute Vorgabe für die Ausführungszeit dem aktuellen Wert des Zählers entspricht.

Bei der Verwendung relativer Ausführungszeitpunkte existieren zwei Möglichkeiten der Realisierung. Bei der einen Möglichkeit entspricht die Zeitvorgabe im Befehl dem Abstand des Systemzyklus, in dem dieser Befehl ausgeführt werden soll, zu dem Systemzyklus, in dem der nächste Befehl ausgeführt werden soll.

Der Mikroprozessor bzw. Mikrocontroller kann dazu ausgebildet sein, beim oder nach dem Ausführen des aktuellen Befehls den Wert dessen relativer Zeitvorgabe in einen internen Zähler zu übernehmen, diesen Wert in jedem folgenden Systemzyklus zu dekrementieren und beim Erreichen des Zählerwertes 0 den nächsten Befehl auszuführen. Alternativ kann der Mikroprozessor bzw. Mikrocontroller dazu ausgebildet sein, einen internen Zähler beim oder nach dem Ausführen des aktuellen Befehls auf den Wert 0 zu setzen, diesen Wert in jedem folgenden Systemzyklus zu inkrementieren und beim Erreichen der Wertes, der der relativen Zeitvorgabe des aktuellen Befehls entsprach, den nächsten Befehl auszuführen. Hat die relative Zeitvorgabe des aktuellen Befehls den Wert 0, so wird der nächste Befehl unmittelbar, d.h. noch im selben Systemzyklus, zur Ausführung gebracht.

Bei der zweiten Möglichkeit entspricht die Zeitvorgabe im Befehl dem Abstand des Systemzyklus, in dem der Befehl ausgeführt werden soll, zu dem Systemzyklus, in dem der vorherige Befehl ausgeführt wurde.

Der Mikroprozessor bzw. Mikrocontroller kann dazu ausgebildet sein, beim oder nach dem Ausführen des aktuellen Befehls den Wert der relativen Zeitvorgabe des nächsten Befehls zu lesen, diesen in einen internen Zähler zu übernehmen, den Wert in jedem folgenden Systemzyklus zu dekrementieren und beim Erreichen des Zählerwertes 0 den nächsten Befehl auszuführen. Alternativ kann der Mikroprozessor bzw. Mikrocontroller dazu ausgebildet sein, den internen Zähler beim oder nach dem Ausführen des aktuellen Befehls auf den Wert 0 zu setzen, diesen Wert in jedem folgenden Systemzyklus zu inkrementieren und beim Erreichen der Wertes, der der relativen Zeitvorgabe des nächsten Befehls entspricht, den nächsten Befehl auszuführen. Hat die relative Zeitvorgabe des nächsten Befehls den Wert 0, so wird dieser unmittelbar, d.h. noch im selben Systemzyklus, zur Ausführung gebracht. Es ist hier zu beachten, dass der Wert der relativen Zeitvorgabe des nächsten Befehls erst dann gelesen wird, wenn der nächste auszuführende Befehl eindeutig bestimmt ist, z.B. bei bedingten Sprungbefehlen oder anderen Kontrollflussbefehlen.

Wie bereits beschrieben, bezeichnet in einer besonders vorteilhaften Ausgestaltung der Erfindung die Zeitvorgabe eine in vollen Systemzyklen bemessene Zeitspanne bis zur Ausführung des Befehls. Damit ist die Choreographie der im zeitlichen Zusammenhang zueinander auszuführenden Befehle von der konkreten Dauer der Systemzyklen abstrahiert. Insbesondere kann die Geschwindigkeit der Programmausführung über die Dauer der Systemzyklen, also mit nur einem einzigen Parameter, sinnvoll skaliert werden, wobei die Choreographie der Befehle untereinander erhalten bleibt. Die Dauer der Systemzyklen entscheidet lediglich über die Feinheit, mit der die Zeit diskretisiert wird, und damit über die Genauigkeit, mit der eine Choreographie der Befehlsausführung untereinander angegeben und synchronisiert werden kann.

In einer besonders vorteilhaften Ausgestaltung der Erfindung ist die Zeitverwaltungseinheit zusätzlich dazu ausgebildet, jeden Systemzyklus in Befehlszeitfenster zu unterteilen und den Beginn eines jeden Befehlszeitfensters an die Instruktionsausführungseinheit zu signalisieren, wobei die Instruktionsausführungseinheit dazu ausgebildet ist, auf die Signalisierung des Beginns eines Befehlszeitfensters hin einen Befehl, dessen Ausführung für den aktuellen Systemzyklus geplant ist, auszuführen. Zur Signalisierung können beispielsweise Impulse (Befehlszeitfensterticks) an zugehörigen Signalleitungen erzeugt werden.

In einer weiteren besonders vorteilhaften Ausgestaltung der Erfindung ist die Befehlsausführungseinheit dazu ausgebildet, das Befehlszeitfenster, in dem mit der Ausführung des Befehls begonnen wird, derart zu planen, dass die Ausführung des Befehls noch im aktuellen Systemzyklus abgeschlossen ist. Auf diese Weise kann auch dann noch die zwangsläufige Ausführung des Befehls im geplanten Systemzyklus gewährleistet werden, wenn die Ausführung verschiedener Befehle unterschiedlich lange dauert.

Besonders vorteilhaft passen in einen Systemzyklus zwischen 10 und 20 Befehlszeitfenster. Wird der nach außen sichtbare Systemzyklus beispielsweise zu 5 Mikrosekunden gewählt, und die Größe für die Befehlszeitfenster beträgt 250 Nanosekunden, so können in jeden Systemzyklus insgesamt 20 Befehlszeitfenster passen. Als Beispiel entspricht eine relative Zeitvorgabe einer Instruktion von 1 der Ausführung des Befehls im unmittelbar folgenden Systemzyklus; eine relative Zeitvorgabe einer Instruktion von 4 entspricht der Befehlsausführung in dem Systemzyklus, der einen Abstand von 20 Mikrosekunden zum aktuellen Systemzyklus hat. Eine relative Zeitvorgabe von 0 in einer Instruktion entspricht einer unmittelbaren Ausführung des Befehls im nächsten noch nicht belegten Befehlszeitfenster desselben Systemzyklus. Es können also innerhalb eines jeden Systemzyklus jeweils bis zu 20 Befehle zur Ausführung kommen, deren zugehörige relative Zeitvorgaben den Wert 0 haben bzw. die bei Verwendung von absoluten Ausführungszeitpunkten die identische absolute Zeitvorgabe haben.

Wenn in dem abzuarbeitenden Programm für einen Systemzyklus die Ausführung von weniger Befehlen geplant ist, als in diesem Systemzyklus ausgeführt werden können, so kann diese Diskretisierung der Zeit die Wirkung haben, dass Arbeitskapazität ungenutzt bleibt. Gegenüber herkömmlichen General-Purpose-Prozessoren kann also die Programmausführung insgesamt verlangsamt sein. Dies wird jedoch dadurch überkompensiert, dass alle Befehle, deren Ausführung für einen Systemzyklus geplant ist, zwangsläufig während dieses Systemzyklus ausgeführt werden und sich insofern die Einhaltung einer exakten Choreographie mehrerer gleichzeitig oder in genau definiertem zeitlichen Abstand auszuführender Instruktionen einhalten lässt. Dies ist speziell für komplexe Anwendungen in der Messtechnik wichtig.

Bei einer Implementierung mit Befehlszeitfenstern konstanter Länge wird jeder Systemzyklus in feste, gleichlange Zeiteinheiten unterteilt, deren minimale Länge durch die längste Befehlslesedauer bzw. Befehlsausführungsdauer des Befehlssatzes gegeben ist. Diese Dauer ist als Anzahl der benötigten Prozessorzyklen für jeden Befehl in geeigneten Implementierungen exakt bestimmbar. Die Ausführung des jeweils nächsten Befehls wird dann immer zu einem genau vorbestimmten Zeitpunkt stattfinden; unabhängig davon, wie lange die Ausführung des aktuellen Befehls tatsächlich dauert. Auf diese Weise lässt sich insbesondere die exakt gleichzeitige Ausführung mehrerer Befehle, wie bei Mehrkernimplementierungen, sehr genau synchronisieren.

Jedoch kann nach hier dem Ende einer Befehlsausführung die innerhalb des aktuellen Befehlszeitfensters noch verbleibende Restzeit ungenutzt bleiben. Optional kann daher zur Geschwindigkeitssteigerung auch auf die Unterteilung des Systemzyklus in zeitlich gleich große Befehlszeitfenster verzichtet und die Ausführung eines jeden Befehls im unmittelbaren Anschluss an das Ende der Ausführung des vorherigen Befehls geplant werden. Der Vorteil ist, dass sich somit ein oder mehrere zusätzliche Befehle in einen Systemzyklus unterbringen lassen. Es erhöht sich dadurch zwar der Buchführungsaufwand über die verbleibenden Prozessortaktzyklen pro Systemtakt; da jedoch die Ausführungsdauer jedes Befehls taktzyklengenau bekannt sein kann, ist dies vom Programmierer einfach zu bewerkstelligen.

Bei einer Realisierung mit Fließbandverarbeitung könnten sich Befehlszeitfenster auch überlappen, also zeitlich versetzen lassen, was die Zahl der zusätzlichen Befehle pro Systemzyklus nochmals deutlich erhöht. Allerdings erhöht sich dadurch auch der Buchführungsaufwand, da die Zeitpunkte der Befehlszeitfenster untereinander abgeglichen werden müssen, um Zugriffskonflikte zu vermeiden.

Liegt die benötigte Zeit für einen Großteil der Befehle des Befehlssatzes unter einem bestimmten Wert, und nur einige wenige Befehle haben erhöhten Zeitbedarf, so kann eine Implementierung vorteilhaft sein, welche für diese Befehle vom Grundsatz abweicht, genau einen Befehl pro Befehlszeitfenster auszuführen. Stattdessen können die wenigen Befehle mit erhöhtem Zeitaufwand ein auf zwei Befehlszeitfenster erweitertes Zeitfenster für die Ausführung zur Verfügung gestellt bekommen. Dies kann z.B. für eine Division oder eine Modulo-Funktion sinnvoll sein, wenn kein Hardware-Dividierer zur Verfügung steht und damit Division und Modulo-Funktion durch andere Verfahren mit erhöhtem Bedarf an Prozessorzyklen ersetzt werden müssen. Auch hier ist der Buchführungsaufwand für den Programmierer recht überschaubar; und der Vorteil ist, dass sich im Mittel mehr Befehle in einen Systemzyklus unterbringen lassen, da derartige Befehle mit einem Zeitaufwand von zwei Befehlsfenstern eher selten vorkommen.

Zwei oder mehr Befehle müssen nicht zwingend innerhalb eines Systemzyklus in zwei aufeinander folgenden Befehlszeitfenstern nacheinander abgearbeitet werden, sondern können stattdessen in unterschiedlichen Bereichen der Logik tatsächlich gleichzeitig ausgeführt werden. Beispielsweise können in einem Mehrkernprozessor die gleichzeitig auszuführenden Operationen verschiedenen Prozessorkernen zugewiesen werden.

Die Befehlszeitfenster können beispielsweise in der Reihenfolge belegt werden, in der die Befehle dekodiert wurden. So können die ersten Befehlszeitfenster eines jeden Systemzyklus auf diese Weise von vorne nach hinten jeweils mit Befehlen belegt werden. Alternativ können aber auch beispielsweise die letzten Befehlszeitfenster des Systemzyklus von hinten nach vorne mit Befehlen belegt werden.

Es tut dem Funktionsprinzip der Erfindung jedoch keinen Abbruch, wenn zwischen zwei aufeinanderfolgenden Befehlszeitfenstern ein Befehlszeitfenster liegt, in dem keine der dekodierten Befehle ausgeführt wird. Innerhalb des Systemzyklus können so beispielsweise ein oder mehrere Fenster zum Abarbeiten von Unterbrechungsanforderungen (Ersatz für interrupt requests, IRQ) und Ausnahmebehandlungen (Ersatz für exception handler) vorgesehen sein.

In einer weiteren besonders vorteilhaften Ausgestaltung der Erfindung ist die Instruktionsausführungseinheit zusätzlich dazu ausgebildet, in jedem Systemzyklus mindestens ein Befehlszeitfenster für das Ausführen von Befehlen zur Behandlung von aufgetretenen Events, und/oder für das Ausführen von getunnelten Befehlen, zu reservieren. Auf diese Weise ist gewährleistet, dass Events bzw. getunnelten Befehle zeitnah abgearbeitet werden, ohne dass jedoch in die übrige Choreographie eingegriffen wird. Insbesondere kann die Instruktionsausführungseinheit dahingehend ausgebildet sein, dass durch Events veranlasste Befehle, und/oder getunnelte Befehle, zwangsläufig im nächsten freien reservierten Befehlszeitfenster ausgeführt werden.

Gegenüber der Verwendung von Interrupts hat dies unter anderem den Vorteil, dass nicht, wie bei einer unerwarteten Unterbrechung, zunächst ein aktueller Bearbeitungsstand auf einem Stack zwischengespeichert und hinterher wieder zurückgeholt werden muss. Stattdessen ist der Wechsel zur Abarbeitung der Events bzw. getunnelten Befehle geplant, d.h. die Abarbeitung des vorherigen Befehls ist schon zu einem sinnvollen Abschluss gekommen.

In einer weiteren besonders vorteilhaften Ausgestaltung der Erfindung ist die Instruktionsausführungseinheit dazu ausgebildet, ein oder mehrere aus der Ausführung eines oder mehrerer Befehle erhaltene Ergebnisse auf eine von der Zeitverwaltungseinheit benannte Taktflanke des Prozessortakts des Mikroprozessors bzw. des Mikrocontrollers hin weiterzugeben und/oder für endgültig zu erklären. Wenn mehrere Ergebnisse auf diese Weise synchron weitergegeben werden, ist dies eine echte Parallelität, die bislang besonders mit Einkernprozessoren quasi unmöglich war.

Es kann aber auch nach der Ausführung eines Befehls unmittelbar dessen Ergebnis weiter- bzw. ausgegeben werden. Dies kann immer dann sinnvoll sein, wenn ein Befehl unmittelbar das Ergebnis der vorherigen Befehlsausführung benötigt; z.B. bei komplexeren arithmetischen Berechnungen.

Die Zeitverwaltungseinheit kann die Befehlsausführungseinheit in einer weiteren vorteilhaften Ausgestaltung der Erfindung bei der getakteten Ausführung der Befehle unterstützen, indem sie dazu ausgebildet ist, jedes Befehlszeitfenster in Befehlsphasenzeitfenster zu unterteilen und den Beginn eines jeden Befehlsphasenzeitfensters an die Instruktionsausführungseinheit zu signalisieren, wobei die Instruktionsausführungseinheit dazu ausgebildet ist, auf die Signalisierung des Beginns eines Befehlsphasenzeitfensters hin in die nächste Phase der Ausführung des Befehls zu wechseln. Dies kann dazu verwendet werden, die Architektur auch in Fließbandverarbeitung zu implementieren. Beispielsweise können die Befehlsphasen das Abrufen, das Dekodieren und das Ausführen des Befehls sowie das Zurückschreiben des Ergebnisses umfassen.

In einer weiteren besonders vorteilhaften Ausgestaltung der Erfindung sind mehrere Instruktionsausführungseinheiten vorgesehen. Die Instruktionsladeeinheit ist dazu ausgebildet, aus der Instruktion die für die Ausführung des Befehls zuständige Instruktionsausführungseinheit zu ermitteln. Alternativ kann aber auch beispielsweise jede Instruktionsausführungseinheit ihre eigene Instruktionsladeeinheit aufweisen. Dies kann dazu verwendet werden, die Architektur auch als Mehrkernprozessor zu implementieren. Hierbei kann insbesondere im Zusammenspiel mehrerer Instruktionsausführungseinheiten eine Phasenverschiebung zwischen den Befehlsphasen vorgesehen sein, um Ressourcenkonflikte zu vermeiden. Für die Dauer der Befehlsphasenfenster muss jede Instruktionsausführungseinheit sinnvollerweise exklusive Zugriffsrechte auf jene Ressourcen, die für die Ausführung des Befehls nötig sind, erhalten. Wenn nun beispielsweise die Befehlsausführung in vier Befehlsphasen aufgeteilt ist, und vier Instruktionsausführungseinheiten gleichzeitig arbeiten, und weiterhin deren Befehlsausführung jeweils gegeneinander um eine Befehlsphase verschoben sind, so kann recht einfach sichergestellt werden, dass immer nur eine der vier Instruktionsausführungseinheiten in einer der Befehlsphasen ist und nicht etwa ein gleichzeitiger Zugriff zweier Instruktionsausführungseinheiten auf ein und dieselbe Hardware-Ressourcen, wie etwa eine Speicherstelle, versucht wird.

In folgendem vereinfachenden Beispiel sei die Befehlsausführung in vier Phasen unterteilt: Fetch, Decode, Execute und Writeback. Diese vier Phasen könnten durch geeignet implementierte Zustandsautomaten vollständig parallel erfolgen. Da für jeden Befehl die maximale Dauer der Befehlsphasen taktzyklengenau bestimmt werden kann, ergäbe sich für die Granularität der Befehlszeitfenster insgesamt die vierfache Dauer der längsten Befehlsphase.

Unter erhöhtem Einsatz von nebenläufigen bzw. parallelen endlichen Zustandsautomaten (FSM) können aber auch bei einer Implementierung als Einkernprozessor ohne Fließbandverarbeitung einzelne Schritte der Befehlsverarbeitung zeitlich so überlappt werden, dass sich die gesamte Befehlsdauer auf eine niedrig zweistellige, für einfachere Anwendungen auch einstellige Anzahl an Prozessortaktzyklen beschränkt. Herkömmliche Einkernprozessoren erreichen zwar theoretisch deutlich niedrigere Werte an Zyklen pro Befehl (Cycles per Instruction, CPI); dies relativiert sich aber, wenn man bedenkt, dass für eine vergleichbare Operation, wie dem Zugriff auf Peripherieregister, stets mehrere primitive Einzelbefehle notwendig sind, und in der Praxis Latenzen wie z.B. durch Interrupts oder Lade- und Schreibzugriffe eine große Rolle spielen können. In typischen Applikationen können Ladebefehle und bedingte Sprünge jeweils einen zweistelligen Anteil des Programms ausmachen.

Wie zuvor erläutert, sind gerade die Mess- und Steuerungsaufgaben in einem Hochleistungsmikroskop sehr stark ein-/ausgabelastig, wobei diese Eingaben und Ausgaben Teil der genau einzuhaltenden Choreographie sind. Die Datenausgabe kann beispielsweise durch das Setzen oder Löschen von Eingabe/Ausgabe-Pins (I/O-Pins) über verschiedene Schnittstellen des Mikroprozessors erfolgen.

Daher ist in einer weiteren besonders vorteilhaften Ausgestaltung der Erfindung mindestens eine Ausgabeschnittstelle vorgesehen, die einen Pufferspeicher für einen auszugebenden Wert aufweist, wobei die Zeitverwaltungseinheit dazu ausgebildet ist, ein Triggersignal an die Ausgabeschnittstelle zu übermitteln, und wobei die Ausgabeschnittstelle dazu ausgebildet ist, auf das Triggersignal hin den Wert aus dem Pufferspeicher auszugeben. Das Triggersignal kann insbesondere unabhängig von der Signalisierung des Systemzyklus, des Befehlszeitfensters und des Befehlsphasenzeitfensters sein. Insbesondere können vorteilhaft alle Ausgabeschnittstellen des Mikroprozessors, bzw. des Mikrocontrollers, in dieser Weise ausgestaltet sein.

Alternativ oder besonders vorteilhaft in Kombination hierzu mindestens eine Eingabeschnittstelle vorgesehen, die einen Pufferspeicher für einen eingelesenen Wert aufweist, wobei die Zeitverwaltungseinheit dazu ausgebildet ist, ein Triggersignal an die Eingabeschnittstelle zu übermitteln, und wobei die Eingabeschnittstelle dazu ausgebildet ist, auf das Triggersignal hin den Wert aus dem Pufferspeicher weiterzugeben. Das Triggersignal kann insbesondere unabhängig von der Signalisierung des Systemzyklus, des Befehlszeitfensters und des Befehlsphasenzeitfensters sein. Insbesondere können vorteilhaft alle Eingabeschnittstellen des Mikroprozessors, bzw. des Mikrocontrollers, in dieser Weise ausgestaltet sein.

Dabei kann der Pufferspeicher jeweils insbesondere vorteilhaft über ein prozessornahes Register lesbar und/oder schreibbar sein.

Für jedes zeitkritische Modul bzw. Ein-Ausgabe-Port (auch einzelne GPIO-Pins) existieren somit vorteilhaft Hardwarestrukturen in der Zeitverwaltungseinheit. Diese sind in der Lage, zeitliche Abstände zu messen und nach dem Erreichen programmierbarer Zählerstände Synchronisierungsimpulse, Triggerimpulse oder andere Steuersignale zu generieren. Die Signale können Einzelimpulse mit programmierbarer Länge, oder auch periodische Impulse sein, um die Befehlsausführung in der Befehlsausführungseinheit zeitlich zu strukturieren oder die Ein-/Ausgabe in Peripheriemodulen periodisch zu takten.

Die Signale sind so ausgelegt, dass die jeweilige Komponente sie für die interne Bearbeitung der Operationen nutzen kann, aber auch zur Festlegung von Ein-/Ausgabezeitpunkten der bereits vorliegenden Resultate der Operationen. Ein Beispiel wäre ein einzelner Impuls an einen Ausgangstreiber für einen bestimmten digitalen Ausgabe-Pin, dessen Ausgangspegel taktzyklengenau von der Zeitverwaltungseinheit gesetzt bzw. rückgesetzt werden kann. Dies kann über einfache Befehle erfolgen, wie das Schreiben eines Registers für den Zeitpunkt des Setzens des Pegels, und das Schreiben eines weiteren Registers, welches die Pulslänge in Taktzyklen umfasst, und damit das Rücksetzen des Pegels bewirkt. Die Zeitverwaltungseinheit ist vorteilhaft so gestaltet, dass solche Pulse in jedem Systemzyklus abgesetzt werden können.

Damit kann eine echte Parallelität von Ausgaben auf I/O-Ports mehrerer Komponenten erreicht werden, die durch sequentielles Ausführen von Operationen "vorbereitet" wurden.

In diesem Zusammenhang ist es noch einmal wichtig zu erwähnen, dass es sich bei den Peripheriemodulen nicht wie z.B. bei den bereits beschriebenen Timed Ports aus WO 2008/125 670 A1 um eigenständige I/O-Prozessoren handelt, sondern um prozessornahe Logikkomponenten mit enger Kopplung.

In einer kreuzschienenartigen Triggermatrix sind alle Signalleitungen zur und von der Zeitverwaltungseinheit angeschlossen. Insbesondere sind in dieser Triggermatrix alle Triggersignale von den Eingabeschnittstellen sowie alle Triggersignale zu den Ausgabeschnittstellen zusammengeführt und können zur Laufzeit über Befehle des Befehlssatzes des Mikroprozessors bzw. Mikrocontrollers miteinander verschaltet werden. Die Logik der Triggermatrix bietet vorteilhaft programmierbare Funktionalitäten wie Maskierung, logische Verknüpfungen (z.B. NOT, AND, OR, XOR) oder Multiplexereigenschaften, um auch komplexe Triggerfunktionalitäten, die abhängig von aktuellen Zustandsgrößen oder auftretenden Ereignissen an mehreren Ein-/Ausgabemodulen sind, zu realisieren. Beispielsweise können einzelne Triggersignale an mehrere Komponenten weitergereicht werden; mit o.g. Funktionalitäten können diese Verbindungen direkt durchgeschaltet werden, oder auch bestimmten Bedingungen (z.B. AND-Verknüpfung mehrerer Signale) unterworfen werden. Weiterhin können auch Peripheriemodule untereinander verbunden werden, was bedeutet, dass sich Peripheriemodule auch gegenseitig und ohne Einfluss der Zeitverwaltungseinheit triggern lassen.

Mikroprozessorkerne besitzen in der Regel eine bestimmte Anzahl von schnellen Speicherplätzen (Register), auf die Befehle direkt zugreifen können. Zusammengefasst werden sie oft auch als Registersatz oder Programmiermodell bezeichnet. In den meisten Fällen kann die CPU ausschließlich diese lokalen Register direkt ansprechen. Auf nicht prozessornahe Speicherinhalte oder Register wird üblicherweise durch Lade- bzw. Speicher-Befehle zugegriffen.

Ein Beispiel ist die Load/Store-Architektur bekannter RISC-Prozessoren wie die ARM-Architekturen. Die Verarbeitung von Daten bzw. Operanden erfolgt ausschließlich über Register. Die direkte Ausführung von Befehlen auf Speicherinhalte ist nicht möglich; Operanden müssen vorher durch Ladebefehle in Register geladen werden.

Um beim Prozeduraufruf den Kontextwechsel effizienter zu gestalten, werden in einigen Konzepten wie dem Berkeley RISC getrennte Registerbänke verwendet; die sogenannten Registerfenster. In diesen werden die zu einer Prozedur gehörigen lokalen Variablen und Parameter für unterschiedliche Prozeduren in Registern gehalten, und müssen nicht auf dem Stapel abgelegt werden. Obwohl die Zahl der Register bei derartigen Realisierungen insgesamt weit über 100 liegen kann, ist die Zahl der für alle Prozeduren sichtbaren Register begrenzt (z.B. 32).

Weiterhin erstrecken sich Register in der Regel nicht auf die Peripheriemodule für Ein- und Ausgabe. Diese Module stellen meist in sich abgeschlossene Logikblöcke dar, die über einen Peripherie-Bus und eine feste Adressierung angebunden sind. Peripheriemodule sind oft langsamer getaktet als der Prozessor und haben eigene Kontrollregister. Mit diesen Kontrollregistern werden die Eigenschaften des Moduls konfiguriert. Bei Low-Level-Schnittstellen ist dies beispielsweise die Baudrate, die Polarität, die Zahl der Start- und Stopp-Bits von UART Schnittstellen; bei GPIO-Ports kann dies u.a. die Richtung, das Pull-Up- bzw. Pull-Down-Verhalten oder die aktuell auszugebenden Pegel sein.

Die Kontrollregister in den Peripheriemodulen sind typischerweise nicht im Programmiermodell enthalten. Der Zugriff erfolgt indirekt durch Port Mapped I/O (Beispiel: Intel x86 Architektur) oder durch Memory Mapped I/O (Beispiel: ARM-Architekturen) über Peripheriebusse.

In der vorliegenden Erfindung wird eine Ausweitung des prozessornahen Registersatzes auf die Peripheriemodule und andere wichtige Prozessorkomponenten vorgenommen. Prozessornahe Register sind also vorteilhaft in dem Mikroprozessor bzw. Mikrocontroller als universelles Kommunikationsmittel einsetzbar. Diese Register zeichnen sich dadurch aus, dass sie minimaler Latenz, d.h. innerhalb eines Zyklus des Prozessortakts, lesbar und/oder schreibbar sind. Es muss also auf diese Operationen in keinem Fall länger gewartet werden, und die Zugriffe unterliegen einem deterministischen Verhalten.

In einer besonders vorteilhaften Ausgestaltung der Erfindung hat der Mikroprozessor bzw. Mikrocontroller somit wesentlich mehr prozessornahe Register als ein herkömmlicher General Purpose-Prozessor.

In einer weiteren besonders vorteilhaften Ausgestaltung der Erfindung führen alle Befehle aus dem Befehlssatz des Mikroprozessors bzw. Mikrocontrollers ausschließlich Operationen mit Werten prozessornaher Register durch.

In einer weiteren besonders vorteilhaften Ausgestaltung der Erfindung sind alle Befehle aus dem Befehlssatz des Mikroprozessors bzw. Mikrocontrollers atomare Read-Modify-Write-Befehle. "Atomar" bedeutet in diesem Zusammenhang, dass die zu dem jeweiligen Befehl korrespondierende Kombination aus Lesen, Ändern und Schreiben von Werten nicht in einer mit einem Makro oder einem Skript vergleichbaren Aneinanderreihung aus Einzelbefehlen ausgeführt wird, sondern als eine, nicht mehr weiter teilbare Einheit, wobei diese Aufgaben auch teilweise parallel ausgeführt werden können.

Dabei kann zu einem Befehl eine einzige Operation korrespondieren, wie beispielsweise das Setzen oder Löschen eines Bits bzw. Pins an einem Eingabe/Ausgabe-Port. Zu einem Befehl können aber auch mehrere Operationen korrespondieren, wie beispielsweise das Lesen eines Werts aus dem Speicher, das Ändern des Werts und das Zurückschreiben des Werts in den Speicher.

Wenn alle Befehle jeweils atomare Prozessorbefehle sind und zugleich nominell gleichzeitig auszuführende Befehle, etwa innerhalb ein und desselben Systemtaktzyklus auszuführende Befehle, tatsächlich mit minimalem zeitlichem Versatz nacheinander ausgeführt werden, etwa in aufeinander folgenden Befehlszeitfenster innerhalb des Systemtaktzyklus, ist automatisch sichergestellt, dass während der Veränderung eines Werts durch einen atomaren Prozessorbefehl dieser Befehl exklusiv auf den Wert zugreift. Dadurch werden Konflikte zwischen den Instruktionen aufgrund von Datenabhängigkeiten verhindert, welche in herkömmlichen Prozessoren auftreten können, wenn während der Veränderung auch andere Prozesse auf einen Wert zugreifen.

Wenn alle Befehle des Befehlssatzes atomare Prozessorbefehle sind, und die Anbindung von Speicher und Peripheriemodule direkt bzw. nahe genug ausgeführt ist, können mehrere Quellen für Latenzzeiten gegenüber herkömmlichen Prozessorarchitekturen, insbesondere eine Latenz bis zum Eintritt der Interrupt-Service-Routine, ISR, eine Latenz durch die ISR selbst, sowie eine Latenz durch Speicher- und Peripheriezugriffe, entfallen. Dadurch relativiert sich der scheinbare Nachteil eines hohen CPI-Werts des Mikroprozessors gemäß der Erfindung schnell.

Wie bereits beschrieben, beruht die Prozessorarchitektur auf der Idee von festen Zeitintervallen für die Befehlsausführung. Weniger ein möglichst hoher Befehlsdurchsatz, als vielmehr eine möglichst hohe Präzision steht im Vordergrund. Um die Größenordnung nochmals zu verdeutlichen, kann als Beispiel ein System angeführt werden, dass einige seiner Aktuatoren alle 10 Mikrosekunden mit aktualisierten Werten versorgen muss. Legt man diese Zeit als Dauer für einen Systemzyklus zugrunde, so sollten in jedem Systemzyklus weitere Befehle ausgeführt werden können, vorteilhaft mindestens 10 oder mehr. Damit kann auch einem erhöhten Aufkommen an nötigen Berechnungen oder Überprüfungen innerhalb eines Systemzyklus begegnet werden.

Es ist also wünschenswert, dass auch die Befehlssatzarchitektur dem Grundsatz einer festen Zeiteinteilung der Befehlsausführung Rechnung trägt. Um die Befehlszeitfenster effizient zu nutzen, sollte der Zeitaufwand für alle Befehle möglichst invariant sein. Deshalb wurde eine zeitlich und funktional ausbalancierte Gliederung der Prozessorfunktionalität in atomare Operationen erdacht, was sich auch in der Semantik des Befehlssatzes widerspiegelt. Wie bereits erwähnt, unterscheiden sich Einzelbefehle daher erheblich von Einzelbefehlen in klassischen Befehlssatzarchitekturen. Während gewöhnliche Mikroprozessoren einen heterogenen Befehlssatz (Befehle für Transfer, Datenmanipulation, Programmsteuerung, arithmetisch-logische Einheit, Ein-/Ausgabe etc.) besitzen, kann ein vorteilhafter Befehlssatz deutlich homogener sein, und sich auf nur eine Gruppe von Befehlen beschränken, nämlich Lese-/Schreib-Zugriffe auf Register.

In einer weiteren besonders vorteilhaften Ausgestaltung der Erfindung ist eine Abstraktionseinheit vorgesehen, die mindestens ein logisches Register für den Zugriff durch zu Befehlen korrespondierende Operationen bereitstellt und dazu ausgebildet ist, jeden Zugriff auf das logische Register auf eine physische Ressource des Mikroprozessors abzubilden. Die physische Ressource kann beispielsweise ein Register, ein endlicher Zustandsautomat (FSM) oder ein Modul sein. Auch Zugriffe auf weitere Funktionseinheiten oder Module können unabhängig davon, um welchen Typ von Funktionseinheit oder Modul es sich handelt, über Zugriffe auf derartige logische Register abstrahiert werden. Auch ganze Funktionsabläufe können durch einzelne derartige Registerzugriffe angestoßen bzw. ausgewertet werden. Auf diese Weise kann beispielsweise unabhängig davon, auf welcher Plattform der Mikroprozessor, die FSM, die Funktionseinheit, das Modul bzw. die sonstige Ressource physisch implementiert ist, die Ansteuerung in immer gleicher Weise erfolgen.

Endliche Zustandsautomaten (FSM) innerhalb des Prozessors und den Steuerungseinheiten der Module sind demnach vorteilhaft durch Zugriff auf Register zu einem Wechsel ihres Zustandes veranlassbar. Dieser Zustandswechsel kann dann durch einen atomaren Prozessorbefehl angestoßen werden, wobei die Prüfung, ob beispielsweise der gewünschte Zustand schon vorliegt, der FSM selbst obliegt und somit keine Verzögerung im Programmablauf des Mikroprozessors bewirkt. Insoweit können zeitkritische Aufgaben sinnvoll von weniger zeitkritischen Aufgaben getrennt werden. Generell können mehrere nebenläufige Prozesse mit FSM beispielsweise auf einem FPGA besonders vorteilhaft parallelisiert werden und insbesondere unabhängig von der übrigen Programmausführung laufen.

Die Zeitpunkte der Zustandsübergänge der verschiedenen Automaten sowie der Gültigkeit und Übergabe der Registerinhalte können dabei taktzyklengenau abgestimmt werden, so dass eine hochgradige Nebenläufigkeit bzw. Parallelisierung der Logikfunktionen und Zustandsautomaten möglich ist.

Im Grunde genommen kann nahezu die gesamte Funktionalität des Mikroprozessors über Befehle für solche Zugriffe innerhalb des Programmiermodells abstrahiert werden.

Wichtig ist, dass sich bei den hier vorgestellten Konzepten der Begriff "Befehl" vom allgemeinen Verständnis von Anweisungen in klassischen Befehlssatzarchitekturen wie RISC oder CISC unterscheiden kann.

Bei RISC-Architekturen werden komplexere Operationen durch die Kombination einzelner, meist einfacher Befehle im Programmcode nacheinander ausgeführt. Bei CISC-Ansätzen sind vergleichbaren Aufgaben durch im Prozessorkern festgelegte Mikroprogramme realisiert. Die einzelnen Schritte der Mikroprogramme sind dabei prinzipiell dennoch mit einfachen RISC-Befehlen zu vergleichen.

Im vorliegenden Fall sind "Befehle" als Anweisungen einer Programmiersprache mit spezieller Semantik für zeitgenaue Zugriffe auf Prozessor-Ressourcen zu sehen, welche sich auch als domänenspezifische Skriptsprache bezeichnen ließe.

Im Folgenden ist das Beispiel einer vorteilhaften Implementierung genauer beschrieben. Die Wortbreite beträgt hier 32 Bit.

Alle Befehle des Befehlssatzes sind als atomare Read-Modify-Write-Sequenz realisiert:

1. Lesen eines Wertes aus einem Register
2. Modifizieren des Wertes durch die gewünschte Operation, ggf. konditional
3. Beschreiben des Zielregisters mit dem neuen Wert

Die einzelnen Schritte sind dabei optional.
Als Beispiel können Schritt 1 und 2 entfallen, wenn es sich um das Setzen eines Wertes handelt, der explizit im Befehlswort codiert ist (unmittelbare Adressierung). Schritt 2 kann beispielsweise entfallen, wenn ein Registerinhalt unverändert in ein anderes Register kopiert wird.

Das Befehlswort beinhaltet folgende Teile:

| | |
|---|---|
| <Delay> | Zeitlicher Abstand zum vorherigen Systemzyklus bzw. zum nächsten Systemzyklus (siehe Zeitverwaltung) |
| <Zielregister> | Eindeutig adressierbarer Speicherplatz in einer Prozessorkomponente, einem Peripheriemodul oder einem Variablenspeicher |
| <Kommando> | Gewünschte Funktionalität (Opcode) |
| <Parameter 0 .. n> | Befehlsparameter, z.B. Operanden, Konstanten, Masken, etc. |
| <Ticket ID> | ID für Rückmeldungen, z.B. bei aktiver Protokollierung bzw Tracing |

Die Codierung des eindeutigen Zielregisters könnte in einem 16Bit breiten Bitfeld innerhalb des Befehlswortes beispielsweise wie folgt implementiert sein:

| | |
|---|---|
| Bits 15-12 | Subsystem |
| Bits 11-8 | Funktionseinheit |
| Bits 7-4 | Kanal |
| Bits 3-0 | Register |

Eine derartige hierarchische Gliederung erlaubt eine einfache Dekodierlogik, und erleichtert die mehrfache Instanziierung von gleichen Logikblöcken.

Die "Subsysteme" können übergeordnete Funktionsgruppen oder Logikeinheiten definieren, wie:

- zentrale Steuerungseinheit
- Achsensteuerungen
- Bildaufnahme
- digitale Ein-und Ausgabe
- analoge Ein-und Ausgabe
- Temperaturüberwachung etc.

Über das Bitfeld "Funktionseinheit" werden die verschiedenen Einheiten dieser Gruppen adressiert.
Das Subsystem der zentralen Steuerungseinheit kann beispielweise folgendermaßen in Funktionseinheiten gegliedert sein:

- Program Execution Unit - Programmausführungseinheit
- Branch Unit - Verzweigungseinheit
- Variable Unit - Variablenspeichereinheit
- Arithmetic Unit - arithmetische Einheit
- Logical Unit - logische Einheit
- Error Handler Unit - Fehlerbehandlungseinheit, etc.

Für Peripheriemodule werden die Funktionseinheiten als die einzelnen Instanziierungen des Moduls definiert:

- GPIO Bank 0 .. n
- SPI Modul 0 .. n
- UART Modul 0 .. n, etc.

Das Bitfeld "Kanal" adressiert die einzelnen Ports bzw. Kanäle innerhalb einer Funktionseinheit:

- Port einer GPIO Bank
- Port eines A/D-Wandlers
- Achsennummer der Schrittmotorsteuerung, etc.

Das Bitfeld "Register" definiert schließlich, welches Register des adressierten Kanals beschrieben oder gelesen werden soll. Sinnvoll ist eine einheitliche Strukturierung des Registersatz für alle Module des Programmiermodells. Hier eine mögliche Belegung:

| | |
|---|---|
| 0 | absoluter Wert |
| 1 | relativer Wert |
| 2 | Modus |
| 3 | Konfiguration 0 |
| 4 | Konfiguration 1 |
| 5 | Konfiguration 2 |
| 6 | Konfiguration 3 |
| 7 | Konfiguration 4 |
| 8 | Status 0 |
| 9 | Status 1 |
| 10 | Operand 0 |
| 11 | Operand 1 |
| 12 | Operand 2 |
| 13 | Ergebnis 0 |
| 14 | Ergebnis 1 |
| 15 | Steuerung |

Aus diesem standardisierten Registersatz können bei der Implementierung jene Register in Logik realisiert und an die entsprechenden Zustandsautomaten angebunden werden, die für ein Modul notwendig und sinnvoll sind.

Die Werte in den Registern können alle konstanten und variablen Zustandsgrößen des Systems sein (z.B. aktuelle Position einer Achse, Geschwindigkeit einer Achse, aktueller Program Counter, aktueller Analogwert) oder zwischengespeicherte Daten (z.B. Zwischenergebnisse aus Berechnungen oder abgespeicherte Zustandsgrößen).

Die Codierung des gewünschten Kommandos kann in einem 16Bit breiten Bitfeld innerhalb des Befehlswortes beispielsweise wie folgt implementiert sein:

| | |
|---|---|
| Bits 15-12 | Art und Priorität der Rückmeldung und Fehlerschwere bei Fehlererkennung |
| Bits 11-8 | Bedingung (Condition) |
| Bits 7-4 | Vorverarbeitung (Preprocess) |
| Bits 3-0 | Operation |

Hier ein Auszug aus den möglichen Operationen (hier dargestellt durch hexadezimale Darstellung von vier Bits des Opcode):

Registertransfer:

| | |
|---|---|
| 0 | read - Lesen eines Registers |
| 1 | write - Schreiben eines Registers mit unmittelbarer Adressierung |
| 2 | store - Lesen eines Wertes und Zurückschreiben in ein Variablenregister oder einen Speicher |
| 3 | load - Schreiben eines Registers mit einem Wert aus einem Variablenregister oder einem Speicher |

Arithmetische Operationen:

| | |
|---|---|
| 0 | Konstante addieren |
| 1 | Variable addieren |
| 2 | Konstante subtrahieren |
| 3 | Variable subtrahieren |
| 4 | mit Konstante multiplizieren |
| 5 | mit Variable multiplizieren |

6 durch Konstante dividieren

7 durch Variable dividieren

8 Division mit Rest modulo einer Konstanten

9 Division mit Rest modulo einer Variablen

Logische Operationen:

0 logisches AND

1 logisches NAND

2 logisches OR

3 logisches NOR

4 logisches XOR

Modulsteuerung:

1 Reset

2 Low Power

3 Selbsttest

7 Initialisierung

A Berechnung beginnen

D Ablauf anhalten

E Ablauf wiederaufnehmen

F Ablauf abbrechen

Zusammen mit entsprechenden Parametern ergibt sich ein mächtiger, aber dennoch gut strukturierter und homogener Befehlssatz.

Beispiele:

Bedingter Programmsprung; Schreiben eines Wertes in das Register "value absolute", hinter dem ein Zugriff auf den Program Counter steckt:

System Module -> Branch Unit -> "value absolute" -> Condition "greater or equal"-> "Write" und Parameter Zieladresse

Programmende; Stoppen der Programmausführung:

System Module -> Program Execution Unit -> "control" -> "Stop"

Setzen der Baudrate einer seriellen Schnittstelle:

Peripheral Modules 0 -> UART Module -> Config 0 -> "Write" und Parameter Baudrate

Speichern einer Position der X-Achse in ein internes Variablenregister:

Axis Control Modules -> Stepper Motor Control 1 -> X-Axis -> "value absolute" -> Store und Parameter Variablennummer

Zwei Beispiele für Programmteile mit engen zeitlichen Anforderungen an das Steuerungssystem des Mikroskops seien hier exemplarisch angeführt.

Wie bereits beschrieben, sollte die Granularität der Zeitintervalle für die Befehlsausführung in der Größenordnung der Aktualisierungsintervalle aller Peripheriegeräte liegen. Im konkreten Fall bedeutet dies beispielsweise, dass die Aktualisierungsrate von Positionswerten für die Galvanometer-Scanner im ein- oder zweistelligen Mikrosekundenbereich liegen kann. Zwischen je zwei Ausgabewerten kann im Bedarfsfall eine Reihe von Befehlen nötig sein, um z.B. die Zustandsvariablen anderer Ein-/Ausgabemodule zu lesen und anhand dieser Werte den Ausgabewert noch vor dem nächsten Ausgabezeitpunkt über arithmetische Operationen zu modifizieren. Weiterhin kann z.B. gleichzeitig ein anderer Ausgabe-Port dazu angewiesen werden, einen Triggerimpuls abzusetzen. Für all diese Operationen kann gelten, dass sie innerhalb eines Zeitfensters von wenigen Mikrosekunden zwingend abgeschlossen sein müssen.

Anwendungsbeispiel 1:

Ein Teil der Messsequenz beinhalte Stapelaufnahmen mit mehreren verflochtenen Bildaufnahmeverfahren an verschiedenen Positionen, darunter mindestens ein Verfahren zur strukturierten Beleuchtung, bei der für jede Einzelbildaufnahme das präzise Synchronisieren der Positionierung eines strukturieren Beleuchtungsmusters mit dem Rolling Shutter einer CMOS-Kamera und der Beleuchtungsquelle nötig ist. Ein spezielles strukturiertes Beleuchtungsmuster wird auf die Probe gelenkt, und das resultierende Fluoreszenzmuster wird in das Bildfeld der Kamera gelenkt. Eine geeignete Beleuchtungsgeometrie kann sich z.B. in einer Richtung über die ganze Kamerazeile erstrecken, und in der dazu orthogonalen Richtung geometrisch schmal mit gaußscher Verteilung ausgeführt sein. Zur Vereinfachung wird dieses Beleuchtungsmuster hier Laserfeld genannt. Das Laserfeld kann mit Hilfe eines Galvanometer-Scanners orthogonal zur Pixelzeile des Kamerachips und damit in Richtung des Rolling Shutter bewegt werden. Im Falle der strukturierten Beleuchtung ist das Laserfeld ein- oder zweidimensional intensitätsmoduliert. Ein sogenanntes Phasenbild ist erhalten, wenn das vom Laserfeld erzeugte Fluoreszenzbild das untere Ende des Kamerachips erreicht hat. Nach jeder solchen Phasenbildaufnahme müssen Beleuchtung und die Kamerabelichtungslogik deaktiviert, der Laserstrahl zurück in die Ausgangsposition bewegt, sowie ein weiterer Spiegel, welcher die Position des strukturierten Beleuchtungsmusters innerhalb des Laserfelds ändert, bewegt werden. Danach wird mit dieser geänderten Position des Beleuchtungsgitters ein neues Phasenbild aufgenommen. Aus N solcher Phasenbilder (N kann 3, 7, 19, 37 betragen) ist ausreichend Bildinformation erhalten, um aus der Summe der einzelnen Phasenbilder eine Schichtaufnahme zu rekonstruieren. Danach wird die Fokustriebposition geändert um Schichtaufnahmen an vielen Positionen zu erhalten und eine 3D-Rekonstruktion des Untersuchungsobjekts zu ermöglichen.

Angenommen, die Aufnahmezeit der Kamera für ein Bild betrage 9.4 Millisekunden. Um hohe Bildraten wie 100 Bilder pro Sekunde zu erreichen, stehen für die beschriebenen Schritte nur wenige hundert Mikrosekunden zur Verfügung. Die Einzelschritte müssen dabei hochgenau synchronisiert werden, damit zwischen den Bildern keine signifikanten Intensitätsunterschiede entstehen.

Wichtig ist auch, dass unter keinen Umständen die korrekte Aktualisierung der Positionswerte auch nur für einen einzigen Systemtakt versäumt und dadurch versetzt wird, da die Positionierung der Laserstrahlen sonst nicht mehr korrekt wäre.

Möglicher Lösungsansatz (vereinfacht):

Das Laserfeld wird zunächst in eine Position gefahren, die sich außerhalb des von der Kamera sichtbaren Bildfelds befindet, und deren Abstand so gewählt ist, dass vor dem Erreichen der ersten Kamerazeile des Kamerachips die Beschleunigungsphase für die Bewegung des Laserfelds abgeschlossen und damit die gewünschte konstante Scan-Geschwindigkeit erreicht ist.

Sobald das Laserfeld (d.h. das von ihm hervorgerufene Emissionsfeld) den Kamerachip erreicht hat, muss dort der Rolling Shutter gestartet werden. Um dies mit der erforderlichen Präzision bewerkstelligen zu können, muss bekannt sein, welche Phasenlage der Zeilentakt der Kamera in Bezug zum internen Taktgerüst haben wird, sobald das Laserfeld die erste Kamerazeile des Kamerachips erreicht. Dieser wird aus der aktuellen, hochpräzise gemessenen Periodendauer und Phasenlage und über arithmetische Befehle entsprechend bestimmt. Anhand dieser Phasenlage werden zum einen die präzisen Zeitpunkte berechnet und vorgegeben, wann über Triggerleitungen die Kamera und die Beleuchtungsquelle aktiviert werden müssen; zum anderen wird unmittelbar mit dem Senden des ersten Wertes auf das Bewegungsprofil des Laserfelds ein einmaliger vorzeichenbehafteter Offset addiert, um die Phasendifferenz auszugleichen und damit sicherzustellen, dass die Phasenlage der Bewegungen von Bild zu Bild konstant bleibt.

Das Laserfeld bewegt sich nun mit derselben Geschwindigkeit über das Bild wie der Zeilentakt. Nach Erreichen der letzten Kamerazeile werden die Beleuchtungsquelle und die Belichtungslogik der Kamera sofort ausgeschaltet und der Laserstrahl wieder in die Ursprungposition für die nächste Aufnahme gefahren. Gleichzeitig wird ein weiterer Spiegel mittels Galvanometer bewegt, um das strukturierte Beleuchtungsmuster zu ändern.

Sind alle Einzelbilder für ein strukturiertes Beleuchtungsbild aufgenommen, wird gleichzeitig zum Zurückfahren der beiden Spiegel der Fokustrieb bewegt.

Diese vereinfachte Beschreibung beinhaltet noch nicht die Verzögerung der Aktuatoren durch Antwortzeiten eines etwaigen Reglers (z.B. PID-Regler) sowie die Übertragungsdauer über die Schnittstelle. Auch hierfür können Timing-Modelle bestimmt und in das zeitliche Gefüge eingeordnet werden.

Folgende Schritte zeigen, wie ein entsprechendes Programm erstellt werden kann. Dazu werden bekannte Bewegungsmodelle der Aktuatoren und andere zeitliche Modelle (z.B. für Signallaufzeiten, Übertragungsdauer der Schnittstellen und Einschaltverhalten der Beleuchtungsquellen) zugrunde gelegt. Es ist dabei wichtig zu verstehen, dass dabei nur ein Teil der Werte für die Anwendung offline simuliert und in die Messsequenzen überführt werden kann. Ein anderer Teil muss zur Laufzeit geschehen. Dazu müssen aktuelle Zustandsgrößen und andere Parameter des Mikroskops ermittelt, verrechnet und entsprechend verarbeitet werden.

Angenommen, die Steuerungen für die Galvanometer-Scanner für die Positionierung des Laserstrahls und des Beleuchtungsmusters sowie die Steuerung des Fokustriebs sind so ausgelegt, dass sie in festen kurzen Zeitabständen ihre Sollpositionsdaten über eine digitale synchrone Schnittstelle beziehen. Als Beispiel seien hier 10 Mikrosekunden angenommen. In ähnlicher Größenordnung, aber naturgemäß abweichend, liege die Frequenz des Zeilentaktes der Kamera.

Als sinnvoller Systemzyklus kann die synchrone Aktualisierungsrate der Positionierungsaktuatoren bzw. ein ganzzahliger Teiler davon gewählt werden. Angenommen, es wird Teiler 1 gewählt, was 10 Mikrosekunden als Dauer eines Systemzyklus ergibt. Weiterhin sei angenommen, die Taktrate des Prozessors betrage 100 MHz und die nach Spezifikation vom Aktuator geforderte Genauigkeit für die Synchronisierungssignale der Positionsdatenübertragung von 10 Mikrosekunden sei durch 1000 CPU-Takte gegeben. Somit können die Register der Zeitverwaltungseinheit entsprechend mit Zählerständen für den Systemzyklus auf 1000 Prozessortaktzyklen und für die weitere Unterteilung in Befehlszeitfenster (eine geeignete Implementierung der Befehlsausführungseinheit sei vorausgesetzt), beispielsweise auf 40 Prozessortaktzyklen gesetzt werden. Damit wäre die Zeitverwaltungseinheit nun so programmiert, dass alle 40 Prozessortaktzyklen ein Befehlsfenstertick und alle 1000 Prozessortaktzyklen ein Systemtick ausgelöst werden. Es ergäben sich innerhalb jedes Systemzyklus insgesamt 25 Zeitfenster für die Befehlsausführung.

Diese Liste bildet nun das zeitliche Grundgerüst der Programmausführung. Alle anderen Berechnungen bzw. Operationen werden in dieses Zeitschema eingepasst.

Für die Simulation der Bewegungen des Scanners werden passend zu den im Voraus bekannten Bewegungsgleichungen die Positionierungssequenzen erstellt und in die Programmliste aufgenommen. Es handelt sich dabei unter anderem um eine Liste von Befehlen, in denen das Peripheriemodul, dessen I/O-Ports die physikalische Schnittstelle zum Aktuator bildet, angewiesen wird, beim Erreichen der zugehörigen Zeitvorgaben die nächste Sollposition zu übertragen. Die einfache Art, dies zu realisieren, wäre je ein Befehl mit einer Sollposition pro Systemzyklus. Damit wäre für jeden Systemzyklus je eines der Zeitfenster für die Positionierung belegt. Um Programmspeicherplatz zu sparen, kann die Programmliste dahingehend vorteilhaft verkürzt werden, dass nur zu denjenigen Zeitpunkten, in denen eine Änderung der Positionen ausgegeben wird, ein Befehl mit der neuen Position und des zugehörigen Zeitpunkts der Änderung in die Programmliste aufgenommen wird; z.B. während der Beschleunigungs- und Abbremsphasen. Ist das Peripheriemodul vorteilhaft so ausgeführt, dass die Koeffizienten der ersten beiden Ableitungen der Weg-Zeit-Funktion programmierbar sind, also eine Bewegungsgleichung zweiten Grades berechnet werden kann, wird es zudem möglich, dass während Phasen gleichbleibender Geschwindigkeit oder gleichbleibender Beschleunigung selbständig im Peripheriemodul die Positionswerte errechnet und ausgegeben werden. Somit können während dieser Phasen die Koeffizienten konstant bleiben. Dies würde die Programmliste deutlich verkürzen.

Zwei zueinander asynchrone Takte müssen zur Laufzeit synchronisiert werden. Alle o.g. nötigen arithmetischen Operationen sowie das Addieren des Offsets auf die Startposition des Scanners sollen bereits zum Zeitpunkt des Absetzens der Startpositionsdaten erfolgt sein. Zur Synchronisierung zum Kamerazeilentakt wird ein weiteres spezielles Peripheriemodul (Taktanalyse-Einheit) so konfiguriert, dass es fortlaufend den Zeilentakt der Zeilenkamera auf Basis der Dauer von Prozessortakten auswerten und damit aktuelle Phasenlage und Periodendauer bestimmen kann. Die Ergebnisse der letzten Messungen liegen dabei z.B. in Registern in Form von Zählerstandswerten vor. Vorteilhaft kann in jedem Systemzyklus m sowohl die aktuelle Phasenlage gelesen werden, als auch die Periodendauer aus einer Messung, die über ein längeres Zeitfenster ermittelt wurde, um hohe Genauigkeit derselben zu erhalten.

Mit diesen Werten kann die Phasenlage zum Systemtick mit Abstand n Systemzyklen hochgenau ermittelt werden. Dafür kann z.B. folgende Arithmetik verwendet werden:

$$[zph] = [clk256] - ([n]*400) + [ph] + [ts]) \bmod [clk256] + [ts]$$

mit

[zph] = zukünftige Phasenlage im Systemzyklus von [zph],
[clk256] = Periodendauer über 256 Perioden gemittelt,
[ph] = aktuelle Phasenlage,
[ts] = triggersicherer Abstand zum Systemtick,
[n] = Zahl der Systemticks vom aktuellen Systemzyklus aus gesehen

Der für das Triggern der Beleuchtungsquelle zuständigen Logik in der Zeitverwaltungseinheit wird der exakte Triggerzeitpunkt und die Dauer des Impulses zyklengenau übergeben und die Verzögerungslogik aktiviert.

Ebenso wird der Logik in der Zeitverwaltungseinheit, die für das Triggern des Startens des Rolling Shutters zuständig ist, der exakte Triggerzeitpunkt und die Dauer des Impulses übergeben und die Verzögerungslogik aktiviert.

Anwendungsbeispiel 2:

Ein Teil der Messsequenz beinhalte ein- oder mehrfarbige, schnelle Bildaufnahmen im Stroboskopbetrieb, d.h. Einzelbilder werden aufgenommen, während sich die Probe mit dem Probenhalter bewegt. Die Beleuchtungszeiten der Lichtquellen sind dabei sehr kurz zu wählen, um das räumliche Verschmieren im Subpixelbereich zu halten. Zur Vereinfachung wird dies hier Lichtblitz genannt. Die Dauer des Lichtblitzes kann dabei im einstelligen Mikrosekundenbereich liegen, wobei die exakte Länge mit möglichst hoher Genauigkeit bis hin zur Prozessortaktgenauigkeit angesteuert werden sollte.

Auch hochpräzise Probenpositionierungssysteme bzw. motorisierte Mikroskoptische werden typischerweise über asynchrone Schnittstellen wie RS-232 oder USB angesteuert. Eine Korrelation der aktuellen Motorposition mit den Zeitpunkten für das Triggern der Kamera und der Beleuchtungsquellen während der Bewegung ist für die Anwendung über derartige Schnittstellen nicht ausreichend präzise möglich. Weiterhin kann auch das zeitliche Profil der Regelung der Achsenmotoren nichtdeterministisch sein. Es muss also eine hochpräzise Synchronisation der Achsenposition zu den Zeitpunkten der Kamerabelichtung und der Beleuchtungsquellen hergestellt werden.

Ein weiteres Problem liegt in der unterschiedlichen Art der emittierten Lichtmenge zwischen den Einzelbildern. Die Schaltfrequenzen von Konstantstromreglern in integrierten LED-Treiberschaltungen liegen typischerweise im Bereich von einigen hundert kHz bis zu einigen MHz, und damit in derselben Größenordnung wie die gewünschten Beleuchtungszeiten. Dadurch ergeben sich die bei dieser Art von geregelten LED-Treibern typische Welligkeiten im Intensitätsprofil. Je nach Phasenlage dieses Intensitätsprofils zum Lichtblitz können die Schwankungen der emittierten Lichtmenge selbst bei konstanter Dauer des Lichtblitzes trotz aufwendiger Ansteuerelektronik und Kalibrierung immer noch im einstelligen Prozentbereich liegen. Die durch Bauteiltoleranzen begründeten Unterschiede zwischen verschiedenen LED-Treibereinheiten können sich in derselben Größenordnung bewegen.

Schwankungen der emittierten Lichtmenge im einstelligen Prozentbereich sind im Helligkeitsprofil der aufgenommenen Bilder signifikant sichtbar. Es muss also ein Weg gefunden werden, diese Unterschiede zu erkennen und zu kompensieren. Dazu kann z.B. eine Abschaltung der LED nach Erreichen einer bestimmten, abgegebenen Lichtmenge vorgenommen werden.

Möglicher Lösungsansatz (vereinfacht):

Die Probenpositionierungssysteme bzw. motorisierten Mikroskoptische müssen mit Methoden zur genauen Positionsbestimmung ausgerüstet werden, um das Triggern der Beleuchtung und der Kamerabelichtung zeit- und wegrichtig vornehmen zu können.

Ein Beispiel wäre die Verwendung von Schrittmotorsteuerungen, die beim Erreichen einer bestimmten Schrittanzahl oder nach bestimmten Distanzen Taktimpulse erzeugt und ausgibt. Diese Impulse können über Signalleitungen an Eingabe-Ports am Prozessor anliegen und vom Programm ausgewertet werden. Mit der vorgeschlagenen Architektur ist dies in ein bis zwei Befehlszeitfenstern, also im Submikrosekundenbereich, möglich. Die Erkennungszeit innerhalb zweier Befehlszeitfenster wäre möglich, wenn ein erster Befehl implementiert ist, der nach Erkennen des Impulses am Port eine interne Speicherzelle beschreibt (z.B. ein Flag); und ein zweiter Befehl ein bedingter Sprungbefehl ist, der diese Speicherzelle auswertet und im Falle des Nichtanliegens des Signalpegels den Befehlszeiger wieder auf den ersten Befehl setzt. Eine Erkennungszeit innerhalb eines Befehlszeitfensters ist möglich, wenn ein bedingter Sprungbefehl implementiert ist, der das Auftreten des Impulses am Port direkt auswerten kann.

Eine andere, noch vorteilhaftere Möglichkeit zur genauen Positionserkennung ist die schnelle Auswertung der Signale eines hochgenauen Positionssensors, z.B. eines Inkrementalgebers.

Als Peripheriemodul kann eine Zustandsmaschine für einen Quadratur-Dekoder verwendet werden, welche die Inkrementalgebersignale in Positionssignale umwandelt. Sind die Parameter des Inkrementalgebers geeignet gewählt, so können die dekodierten Signale im Peripheriemodul mit voller Prozessortaktrate gesampelt werden. Ist der gewünschte Wert erreicht, der sich aus dem Timing-Modell für das Beschleunigungs- und Bewegungsprofil der motorisierten Achse und dem Timing-Modell für die Verzögerung des Gebers aus Analog-Digital-Wandlung, Quadratursignalerzeugung und etwaiger Rauschunterdrückungsfilter ergibt, kann intern das Triggern der weiteren Schritte unmittelbar erfolgen. Auch hier liegt die Genauigkeit der Erkennung in der Größenordnung von ein bis zwei Befehlszeitfenstern.

Vor dem Erreichen der gewünschten Position können die Zeitpunkte das Triggern der gewählten Beleuchtungsquellen und der Kamerabelichtung über die Zeitverwaltungseinheit für die Ports vorbereitet werden. Weiterhin können andere, bereits erwähnte überlagerte Funktionalitäten echt parallel dazu ablaufen, z.B. das Anpassen der Fokusposition bei eingeschaltetem Auto-Fokus oder andere vom Programmierer gewünschten Funktionalitäten, die von Position zu Position variieren können.

Um die oben beschriebenen Schwankungen in der Lichtmenge zu kompensieren, kann eine geeignete Schaltung zur Messung der emittierten Lichtmenge verwendet werden, z.B. ein Transimpedanzverstärker mit nachgeschaltetem Integrator und geeigneter Logik zum Auslösen eines Triggersignals beim Übersteigen eines bestimmten Integralwertes. Dieses Triggersignal kann durch einen vor dem Aktivieren der Beleuchtungsquelle ausgeführten Befehl die Zeitverwaltungseinheit im Zusammenspiel mit dem Peripheriemodul dazu vorbereitet haben, über ein Synchronisierungssignal zum Ausgabe-Port die Hardwareleitung unmittelbar zurückzusetzen und somit so schnell wie möglich auszuschalten.

Codebeispiel

Im Folgenden ist ein Codebeispiel, welches die Notwendigkeit des genauen Einhaltens von Vorgängen innerhalb eines Systemzyklus verdeutlicht. In der ersten Zeile sind jeweils 192 Bit breite Instruktionen zu sehen; sowie zur Verdeutlichung die Zeitverzögerung zum letzten Befehl als Kommentar. Das Codebeispiel stellt einen Ausschnitt aus einem Programm für Anwendungsbeispiel 1 dar.
Die Instruktionen sind hier folgendermaßen aufgebaut:

<delay> <Register/Kommando> <Parameter0> <Parameter1> <Parameter2> <Ticket ID>

Man sieht, dass der Großteil der Instruktionen ein Delay von Null besitzt, und somit innerhalb desselben Systemzyklus abgearbeitet werden muß.

```
00000001 F2000001 0000000A 00000000 00000000 00000000 -> T: 10,00us overview3DTransLooped->move->compositeSerial->moveAxisWithOffset->writeValueRegister

00000000 F3000001 0000000A 00000006 00000000 00000000 -> T: 0,00us overview3DTransLooped->move->compositeSerial->moveAxisWithOffset->registerRegisterAdd

00000000 F3000004 0000000A FFFFFF00 00000000 00000000 -> T: 0,00us overview3DTransLooped->move->compositeSerial->moveAxisWithOffset->registerValueMultiply

00000000 F2000002 OOOOOOOD 0000000A 00000000 00000000 -> T: 0,00us overview3DTransLooped->move->compositeSerial->moveAxisWithOffset->moveGalvoUsingVelocityDuration->registerRegisterCopy

00000000 F2000002 0000000E OOOOOOOD 00000000 00000000 -> T: 0,00us overview3DTransLooped->move->compositeSerial->moveAxisWithOffset->moveGalvoUsingVelocityDuration->registerRegisterCopy

00000000 F3000006 0000000E 00000001 00000000 00000000 -> T: 0,00us overview3DTransLooped->move->compositeSerial->moveAxisWithOffset->moveGalvoUsingVelocityDuration->registerValueDivide

00000000 F3000004 0000000E 00000004 00000000 00000000 -> T: 0,00us overview3DTransLooped->move->compositeSerial->moveAxisWithOffset->moveGalvoUsingVelocityDuration->registerValueMultiply

00000000 F3000006 0000000E 00000003 00000000 00000000 -> T: 0,00us overview3DTransLooped->move->compositeSerial->moveAxisWithOffset->moveGalvoUsingVelocityDuration->registerValueDivide

00000000 F3000004 0000000E 00000004 00000000 00000000 -> T: 0,00us overview3DTransLooped->move->compositeSerial->moveAxisWithOffset->moveGalvoUsingVelocityDuration->registerValueMultiply

00000001 06400013 0000000E 00000000 00000000 00000000 -> T: 10,00us overview3DTransLooped->move->compositeSerial->moveAxisWithOffset->moveGalvoUsingVelocityDuration->ZfocusAccelerationfromRegister

00000001 06400011 00000000 00000000 00000000 00000000 -> T: 10,00us overview3DTransLooped->move->compositeSerial->moveAxisWithOffset->moveGalvoUsingVelocityDuration->ZfocusA

00000000 F2000002 00000010 0000000E 00000000 00000000 -> T: 0,00us overview3DTransLooped->move->compositeSerial->moveAxisWithOffset->moveGalvoUsingVelocityDuration->registerRegisterCopy

00000000 F3000004 00000010 00000003 00000000 00000000 -> T: 0,00us overview3DTransLooped->move->compositeSerial->moveAxisWithOffset->moveGalvoUsingVelocityDuration->registerValueMultiply

00000000 F3000004 OOOOOOOD 00000010 00000000 00000000 -> T: 0,00us overview3DTransLooped->move-
```

>compositeSerial->moveAxisWithOffset->moveGalvoUsingVelocityDuration->registerValueMultiply

00000000 F3000003 OOOOOOOD 00000010 00000000 00000000 -> T: 0,00us overview3DTransLooped->move->compositeSerial->moveAxisWithOffset->moveGalvoUsingVelocityDuration->registerRegisterSubtract

00000000 06400013 OOOOOOOD 00000000 00000000 00000000 -> T: 0,00us overview3DTransLooped->move->compositeSerial->moveAxisWithOffset->moveGalvoUsingVelocityDuration->ZfocusAccelerationfromRegister

00000001 F3000004 OOOOOOOD FFFFFFFF 00000000 00000000 -> T: 10,00us overview3DTransLooped->move->compositeSerial->moveAxisWithOffset->moveGalvoUsingVelocityDuration->registerValueMultiply

00000000 06400013 OOOOOOOD 00000000 00000000 00000000 -> T: 0,00us overview3DTransLooped->move->compositeSerial->moveAxisWithOffset->moveGalvoUsingVelocityDuration->ZfocusAccelerationfromRegister

00000001 F3000004 0000000E FFFFFFFF 00000000 00000000 -> T: 10,00us overview3DTransLooped->move->compositeSerial->moveAxisWithOffset->moveGalvoUsingVelocityDuration->registerValueMultiply    00000000 06400013 0000000E 00000000 00000000 00000000 -> T: 0,00us overview3DTransLooped->move->compositeSerial->moveAxisWithOffset->moveGalvoUsingVelocityDuration->ZfocusAccelerationfromRegister

00000001 06400031 00000000 00000000 00000000 00000000 -> T: 10,00us overview3DTransLooped->move->compositeSerial->moveAxisWithOffset->moveGalvoUsingVelocityDuration->ZFocusVA    000004D9 F4000000 00000005 00000003 00000000 00000000 -> T:12410,00us overview3DTransLooped->waitIfNecessary->registerValueBitwiseAnd

00000001 F1011101 00000008 00000005 00000000 0000141D -> T: 10,00us overview3DTransLooped->waitIfNecessary->controlFlowConditionalIfNot->IfEqual

00000001 F1011101 00000006 00000005 00000001 0000141E -> T: 10,00us overview3DTransLooped->waitIfNecessary->controlFlowConditionalIfNot->compositeSerial->controlFlowConditionalIfElse-> IfEqual

00000000 F2000001 00000005 00000000 00000000 00000000 -> T: 0,00us overview3DTransLooped->waitIfNecessary->controlFlowConditionalIfNot->compositeSerial->controlFlowConditionalIfElse->compositeSerial->writeValueGlobalRegister->writeValueRegister

00000000 F2000001 00000000 00000000 00000000 00000000 -> T: 0,00us overview3DTransLooped->waitIfNecessary->controlFlowConditionalIfNot->compositeSerial->controlFlowConditionalIfElse->compositeSerial->resetAllocation->writeValueGlobalRegister->writeValueRegister

00000000 F2000001 00000001 00000000 00000000 00000000 -> T: 0,00us overview3DTransLooped->waitIfNecessary->controlFlowConditionalIfNot->compositeSerial->controlFlowConditionalIfElse->compositeSerial->resetAllocation->writeValueGlobalRegister->writeValueRegister

00000000 F1010001 00000002 00000000 00000000 00000000 -> T: 0,00us overview3DTransLooped->waitIfNecessary->controlFlowConditionalIfNot->compositeSerial->controlFlowConditionalIfElse->controlFlowJump

Zusammengefasst bietet die Architektur die Flexibilität eines programmierbaren Prozessors bei taktzyklengenauer Präzision einer programmierbaren Logik wie FPGA, und ist daher besonders geeignet für Anwendungen wie Ablaufsteuerungen für Messsequenzen in komplexen Messsystemen.

In einer weiteren besonders vorteilhaften Ausgestaltung der Erfindung ist zusätzlich eine nebenläufige Response-Einheit vorgesehen, die dazu ausgebildet ist, mindestens einen prozessorinternen Zustand, und/oder mindestens einen Registerinhalt, ohne Beeinflussung des zeitlichen Gefüges der Programmabarbeitung im Mikroprozessor bzw. Mikrocontroller zurückzulesen bzw. auszugeben. Auf diese Weise lässt sich der Mikroprozessor bzw. Mikrocontroller zugleich als Debugging-Instrument bei der Programmentwicklung nutzen. Ein separates Testgerät ist nicht mehr erforderlich. Insbesondere können Änderungen am Programm am realen Gerät erprobt werden.

Als Hauptprozessor oder Timing-Prozessor eines eingebetteten Systems implementiert, kann die Architektur somit, zusätzlich zum Ausführen der eigentlichen Anwendung, auch als Werkzeug zur Entwicklung, Validierung und Kalibrierung des Systems eingesetzt werden, wofür bei klassischen eingebetteten Systemen zusätzliche Werkzeuge wie Testsequenzer oder Logikanalysatoren nötig wären.

Die Architektur ist als Ein- oder Mehrkernprozessorlösung realisierbar und lässt sich sowohl als IP-Core implementieren, als auch als festverdrahtetes Design in Single-Chip-Lösungen.

Beispielsweise kann die Entwicklung des konkreten Mikroprozessors für eine spezifische Anwendung zunächst auf einem FPGA beginnen, in das die logische Verschaltung des Mikroprozessors per Hardwarebeschreibung konfiguriert werden kann. Änderungen an der logischen Verschaltung kosten somit kein Verbrauchsmaterial. Vorteilhaft ist der Mikroprozessor somit in einem FPGA realisiert.

Wenn die Entwicklung des Mikroprozessors selbst abgeschlossen ist, kann der Mikroprozessor je nach Seriengröße auf einem ASIC oder anderen Halbleiterchip realisiert werden, der keine nachträglichen Änderungen mehr zulässt. Dadurch wird der Mikroprozessor deutlich schneller, kompakter und pro Stück auch preiswerter. Die Abstraktionseinheit stellt dann nach wie vor die gleichen logischen Register bereit, so dass die bereits entwickelten Programme, die bislang auf dem FPGA genutzt wurden, auf dem neuen Chip unverändert weitergenutzt werden können.

Da die logische Verschaltung eines FPGA vollständig durch Software bzw. eine Hardwarebeschreibung konfigurierbar ist, bezieht sich die Erfindung auch auf ein Computerprogrammprodukt mit maschinenlesbaren Anweisungen und/oder Hardwarebeschreibungen, die, wenn sie auf ein FPGA übertragen und/oder auf einem Computer ausgeführt werden, das FPGA zu einem Mikroprozessor gemäß der Erfindung konfigurieren, bzw. den Computer dazu veranlassen, das FPGA zu einem Mikroprozessor gemäß der Erfindung zu konfigurieren. Die Hardwarebeschreibung kann beispielsweise als Soft-IP-Core, also im Quelltext einer Hardwarebeschreibungssprache, oder als Hard-IP-Core, das als Syntheseprodukt (Kompilat) aus dem Soft-IP-Core hervorgegangen und nicht mehr änderbar ist, vorliegen.

Das System ist modular und skalierbar. Auch Low-Level-Interfaces, wie etwa GPIO, I2C, SPI, UART oder PWM lassen sich modular integrieren, wobei sich der Geltungsbereich des mit Zeitvorgaben versehenen Instruktionssatzes, insbesondere was die zeitliche Genauigkeit betrifft, auch auf diese Interfaces erstrecken kann.

Durch die Anbindung der genannten oder auch weiterer Peripheriemodule wird der Mikroprozessor zu einem kompletten Mikrocontroller erweitert.

Vorteilhaft kann der Mikroprozessor oder Mikrocontroller auch im Zusammenspiel mit einem Standard-Mikrocontroller arbeiten, der zeitlich weniger kritische Aufgaben aus Administration, Kommunikation und Supervision übernehmen kann. Die Erfindung bezieht sich daher auch auf ein eingebettetes System mit einem Mikroprozessor oder Mikrocontroller gemäß der Erfindung und/oder mindestens einem Computerprogrammprodukt gemäß der Erfindung, wobei optional zusätzlich mindestens ein weiterer Mikrocontroller mit einem Mikroprozessor, der kein Mikroprozessor gemäß der Erfindung ist, vorgesehen ist.

Auch der Einsatz in einer besonders kompakten, eingebetteten Test-Sequenzer-Applikation ist möglich.

Dieses eingebettete System ist in einer besonders vorteilhaften Ausgestaltung der Erfindung dazu ausgebildet, in einem digitalen Mikroskop, beispielsweise einem Laserscanning-Mikroskop, die Bewegung von Lichtstrahlen zur Beleuchtung einer Probe untereinander und mit der Bewegung optomechanischer Elemente zu koordinieren, mindestens einen Lichtstrahl mit einer Intensitätsmodulation, und/oder einer Farbmodulation, zu versehen, mit moduliertem Licht bestimmte Proben-Areale zu beleuchten, damit korreliert mit einem entsprechend modulierten Detektor Bilder aufzunehmen, und/oder die Probe zu stimulieren.

Als Beleuchtungsmechanismen können beispielsweise TIRF (Total Internal Reflection Fluorescence) mit beliebigem Winkel, FRAP (Fluorescence Recovery After Photobleaching) und lokale Aktivierung (wie in der Optogenetik üblich) zum Einsatz kommen. Auch können optische Fallen, optische Pinzetten oder mechanische Mikropipetten genau positioniert und Ventile bzw. Flussweichen für die Mikrofluidik angesteuert werden. Die genannten Abbildungsmechanismen können in Verbindung mit spektraler Detektion eingesetzt und damit beispielsweise in biologischen Proben verschiedene Zellsorten voneinander unterschieden werden.

Weiterhin kann beispielsweise der Lichtstrahl in seiner Intensität und/oder in seiner Farbe zeitlich moduliert sein, und die Relativbewegung zwischen dem Lichtstrahl und der Probe in den drei Raumrichtungen x, y und z kann zeitlich mit dieser Modulation koordiniert sein. Jedem Ort (x, y, z) und jedem Zeitpunkt t ist dann eindeutig eine Lichtfarbe und eine Lichtintensität zugeordnet. Das eingebettete System gemäß der Erfindung ermöglicht es, die zeitliche Choreographie zwischen der Modulation der Beleuchtung und der Relativbewegung zwischen dem Lichtstrahl und der Probe wesentlich genauer einzuhalten als dies nach dem bisherigen Stand der Technik möglich war. Insbesondere lässt sich diese Choreographie mit gleichbleibender Genauigkeit wiederholen. Auf diese Weise ist es beispielsweise möglich, eine Vielzahl von Bildern mit verschiedenen, aneinandergrenzenden oder auch überlappenden Scanbereichen mit mehreren Farben aufzunehmen und zu einem Großbild zusammenzufügen ("stitchen"), das neben den drei Raumdimensionen beispielsweise noch die Lichtfarbe als vierte Informationsdimension enthält. Nach dem bisherigen Stand der Technik führte insbesondere die mangelnde Wiederholgenauigkeit dazu, dass bei einer ersten Aufnahme erster Messdaten an einem Ort (x, y, z) zu einem ersten Zeitpunkt $t_1$ und einer späteren zweiten Aufnahme zweiter Messdaten an dem gleichen Ort (x, y, z) zu einem zweiten Zeitpunkt $t_2$ zwischen beiden Aufnahmen ein Versatz bezüglich der Choreographie der Beleuchtung entstand. Beim Zusammenfügen der ersten und zweiten Messdaten entstanden hierdurch Artefakte. Diese Artefakte werden durch das eingebettete System gemäß der Erfindung minimiert.

Dieser Effekt ist besonders stark ausgeprägt, wenn die Belichtungszeiten sehr kurz gewählt sind, da sich dann der besagte Versatz nicht mehr über die Belichtungszeit teilweise herausmittelt. Sehr kurze Belichtungszeiten können beispielsweise auftreten, wenn die Lichtintensität sehr hoch ist. Durch den resultierenden Stroboskop-Betrieb kann dann beispielsweise ein ausgedehntes Objekt abgescannt werden, ohne zwischendurch anhalten zu müssen.

Wenn der Arbeitsabstand zwischen dem Objektiv und der Probe in der z-Richtung, variiert wird, so kann die bei mehreren z-Positionen gewonnene Information beispielsweise der dreidimensionalen Rekonstruktion der Probe aus mehreren Schichtaufnahmen verwendet werden. Aus Aufnahmen in mehreren z-Ebenen können auch reliefartig kontrastreiche Bilder von per se kontrastarmen Proben errechnet werden.

Auch Laserscan-Mikroskope, bei denen zur Beleuchtung ein Laserstrahl präzise auf beliebigen dreidimensionalen Trajektorien durch die Probe geführt wird und die jeweils gewünschte 3-dimensionale Information aus den während des Scanvorgangs gemessenen Intensitätswerten ermittelt wird, profitieren von dem eingebetteten System gemäß der Erfindung, denn jede auch noch so geringe Abweichung zwischen Soll- und Ist-Position stört die exakte raum-zeitliche Korrelation.

Eine Scanvorrichtung kann jedoch nicht nur dazu ausgebildet sein, den Beleuchtungsstrahl präzise in der Objektebene, sondern auch in der rückwärtigen Brennebene des Objektivs zu bewegen. Damit lassen sich beliebige Beleuchtungswinkel in der Probe einstellen, wie sie beispielsweise bei TIRF-Aufnahmen oder bei der Lichtblatt-Mikroskopie gebraucht werden. Die Intensitätsmodulation kann beispielsweise über einen Rolling Shutter erfolgen. Ein solcher Rolling Shutter kann aber auch beispielsweise das aktive Feld einer Kamera, die das von der Probe kommende Licht detektiert, zeitlich und räumlich eingrenzen. Werden beispielsweise gleichzeitig die Beleuchtung in Intensität und/oder Farbe sowie das aktive Feld der Kamera zeitlich und/oder räumlich moduliert, so entsteht im Endeffekt eine sowohl spaltkonfokale als auch zugleich strukturierte (gemusterte) Beleuchtung. Aus mehreren derartigen strukturierten Durchläufen können dann Schichtaufnahmen rekonstruiert werden, deren Auflösung bis in den Bereich der Superresolution jenseits der üblicherweise beugungsbegrenzten Auflösung reicht. Analog dem zuvor Gesagten ist es bei einem Zusammenfügen der Messdaten aus mehreren Durchläufen entscheidend, dass es zwischen den Durchläufen keinen Versatz in der Choreographie der Beleuchtung, und/oder des aktiven Feldes der Kamera, gibt. Das eingebettete System gemäß der Erfindung wirkt genau in diesem Sinne.

Eine Stimulation der Probe kann ebenfalls in die Gesamtchoreographie einbezogen und in Zeit und Ausmaß präzise koordiniert sein. Diese Stimulation kann beispielsweise mittels optischer (beispielsweise FRAP), elektrischer oder mechanischer Methoden erfolgen. Auf diese Weise ist es möglich, beispielsweise die Antwort der Probe auf eine derartige Stimulation orts- und zeitaufgelöst zu studieren. Je genauer die Stimulation der Probe mit der Bildaufnahme synchronisiert ist, desto belastbarer sind die bei derartigen Messungen gewonnenen Ergebnisse.

Beispielsweise kann ein General-Purpose-Mikrocontroller, der Kommunikations- und Administrationsaufgaben übernimmt, als Bindeglied zwischen der zeitlich hochgenauen Ablaufsteuerung im Mikroprozessor und einer Mensch-Maschine-Schnittstelle (Human Machine Interface, HMI) eingesetzt werden. Damit können beispielsweise Eingriffe des Nutzers, wie etwa manuelles Nachfokussieren eines Mikroskops, realisiert werden, während gleichzeitig der Mikroprozessor ein Programm mit hoher zeitlicher Genauigkeit abarbeitet. Sowohl auf ein Eingreifen des Anwenders hin als auch beispielsweise als Ergebnis einer mitlaufenden Auswertung kann der General-Purpose-Mikrocontroller das Programm des Mikroprozessors, und/oder von diesem Programm verwendete Variablen, abändern. Derartige Änderungen werden dann vom Mikroprozessor bei der nächsten Gelegenheit, d.h. beim nächsten Abarbeiten des abgeänderten Programmteils oder beim nächsten Zugriff auf die abgeänderten Werte der Variablen, berücksichtigt. Der General-Purpose-Mikrocontroller hat aber keinen Einfluss darauf, wann genau der Mikroprozessor zum nächsten Mal auf die abgeänderten Programmteile und/oder Variablen zugreift. Dementsprechend wirkt das Eingreifen des General-Purpose-Mikrocontrollers nur zu einem durch das aktuell ablaufende Programm definierten Zeitpunkt, verschlechtert also nicht die Genauigkeit der aktuell ablaufenden Choreographie.

In den Versuchen des Erfinders konnte mit dem Mikroprozessor und dem System gemäß der Erfindung ein Lasermikroskop so angesteuert werden, dass präzises Laserscanning entlang beliebiger Trajektorien möglich wurde. Beispielsweise konnten geschlossene Kreise oder Ellipsen mit Frequenzen im kHz-Bereich abgefahren werden; der begrenzende Faktor war dabei nicht mehr die Ansteuerung, sondern die Spezifikation der maximal möglichen Beschleunigung, mit der die zum Scannen verwendeten Galvanometerspiegel gefahren werden können.

Im Durchlicht konnten Übersichts-Scans im Stroboskopbetrieb mit bisher unerreichter Geschwindigkeit aufgenommen werden. Der Stroboskopbetrieb hat den Vorteil, dass das Verschieben der Probe für die Bildaufnahme nicht unterbrochen werden muss und man deshalb sehr viel schneller einen Überblick über das Untersuchungsobjekt erhält. Der Geschwindigkeitsvorteil der Erfindung manifestiert sich auch bei der Aufnahme dreidimensionaler Bildstapel mit strukturierter Beleuchtung, 3D-SIM. Als Beispiel können 60 Bildebenen à 5.5 Megapixel, mit einem auf ein dynamisches, zweidimensionales hexagonales Gitter synchronisierten Rolling Shutter, in weniger als 5 Sekunden aufgenommen werden.

Die Hauptvorteile der Erfindung sind:

- zeitlich vorhersehbare Abläufe in der Befehlsausführung auf Prozessor- und Peripherie-Ressourcen;

- hochgenaue Synchronisierung von Sensoren und Aktuatoren mit einer Genauigkeit bis hin zu einem Taktzyklus des Mikroprozessors;
- echte Parallelität durch Einteilung der Zeit in Systemzyklen, die jeweils wiederum in Befehlszeitfenster unterteilt sind, in denen Befehle ausführbar sind; und der zeitlich synchronisierten Ausgaben der Resultate aus diesen Befehlen
- bereits existierende Teilprogramme können somit einfach miteinander verwoben werden;
- auch asynchrone I/O-Zugriffe sind mit Hilfe von Timing-Modellen mit voller Genauigkeit möglich;
- es ist kein Interrupt-Handling im konventionellen Sinn nötig;
- es ist kein Overhead für Taskwechsel nötig, da das System nicht auf Taskebene arbeitet, sondern in einer auf Prozessorebene festgelegten Choreographie, die eine echte Parallelität ermöglicht;
- es ist kein Overhead für periodische Timer-Interrupts nötig;
- weder Zugriffe auf Peripheriemodule noch Speicherzugriffe müssen zu ungeplanten Latenzzeiten führen;
- die Diskretisierung der Zeit ist zur Laufzeit konfigurierbar, indem die Dauer von Systemzyklen und Befehlszeitfenster über unmittelbar einsichtige und zugängliche Parameter geändert werden;
- Data Logging bzw. Tracing, also die Ausgabe von internen Daten, Prozessorzuständen oder Registerinhalten, sind mittels einer eigens dafür zuständigen, nebenläufigen Logik ohne zeitliche Einbußen möglich;
- sporadische Events sowie spontanes externes Tunneln von Befehlen kann durch eigens dafür reservierte Befehlszeitfenster ohne zeitliche Einbußen berücksichtigt werden.

Vorteilhafte Ausgestaltungen des Mikroprozessors bzw. Mikrocontrollers verfügen über Merkmale bzw. Hardwarestrukturen, die sich zum Teil wesentlich von herkömmlichen Architekturen unterscheiden:

1. Das Programmiermodell ist auf Register in allen Peripheriemodulen und Komponenten ausgeweitet. Befehle haben direkten Zugriff auf diese Register.

2. Für jedes Modul und jeden Ein-/Ausgabe-Port bzw. Ein-/Ausgabe-Pin sind Hardwarestrukturen in einer Zeitverwaltungseinheit vorhanden. Diese können zeitliche Abstände messen oder bestimmen, und Synchronisierungsimpulse, Triggerimpulse oder andere Steuersignale nach dem Erreichen programmierbarer Zählerstände generieren. Die Impulse können dabei zyklischer Art, oder Einzelimpulse mit steuerbarer Länge sein.

3. Es existieren spezielle Hardwareleitungen zwischen Zeitverwaltungseinheit, Befehlsausführungseinheit, weiteren prozessorinternen Komponenten und den Peripheriemodulen, um die Impulse zu übertragen. Diese sind in einer kreuzschienenartigen Triggermatrix zusammengeführt. Somit können z.B. auch Peripheriemodule untereinander über Triggerleitungen direkt miteinander synchronisiert werden.

4. Ein festes, mehrstufiges Zeitraster wird für die Befehlsausführung verwendet. Nicht nur der Beginn der Ausführung, sondern auch das Vorliegen bzw. die Gültigkeit der Ergebnisse der Befehle kann zyklusgenau bestimmt werden. Resultate bzw. Ausgabeanforderungen von einer Vielzahl sequentiell ausgeführter Befehle können vorgehalten und zu bestimmten Zeitpunkten hin und in taktzyklengenau programmierbarem Abstand zueinander ausgegeben werden. Dieser Abstand kann auch zu Null gewählt werden, was echte Parallelität der Ausgaben bedeutet.

5. Statt Ausnahme- bzw. Unterbrechungsbehandlungen über Interrupts werden bestimmte Zeitfenster innerhalb des Zeitrasters reserviert, um synchron auf asynchron auftretende Ereignisse reagieren zu können.

6. Ein deterministischer Programmspeicher ohne Cache mit definierten Zugriffszeiten wird verwendet. Datenflusskonflikte werden dadurch vermieden; nichtdeterministische Techniken wie spekulative Befehlsausführung werden unnötig.

7. Eine geeignete Befehlssatzarchitektur unterstützt die Funktionalität der genannten Strukturen.

Die Programmierung einer komplexen Choreographie wird wesentlich vereinfacht, wenn einzelne Programmteile separat voneinander entwickelt, getestet und anschließend zusammengeführt werden. Die Prozessorarchitektur gemäß der Erfindung erleichtert auch diese Zusammenführung, da der zeitliche Determinismus der einzelnen Programmteile nach dem Zusammenführen zumindest auf der Zeitskala der Anwendung erhalten bleibt.

Die Erfindung bezieht sich daher auch auf ein Verfahren zur Zusammenführung mehrerer Programmteile zu einem Gesamtprogramm zur Ausführung auf dem Mikroprozessor oder Mikrocontroller, wobei jeder Programmteil Instruktionen enthält, die die Ausführung von Befehlen in durch Zeitvorgaben definierten Systemzyklen vorsehen, dadurch gekennzeichnet, dass in dem Gesamtprogramm in jedem Systemzyklus die Ausführung aller in den Programmteilen in diesem Systemzyklus vorgesehenen Befehle geplant wird.

Auf diese Weise werden alle Befehle, die gemäß den einzelnen Programmteilen nominell gleichzeitig ausgeführt werden sollten, im gleichen Systemzyklus, und somit auf der Zeitskala der zugrunde liegenden Anwendung gleichzeitig ausgeführt.

Sollten alle Programmteile zusammen in einem Systemzyklus die Ausführung von mehr Befehlen vorsehen als in diesem Systemzyklus ausführbar sind, wird vorteilhaft die Ausführung der überzähligen Befehle in einen anderen Systemzyklus verschoben. Insbesondere können vorteilhaft die Befehle, deren Ausführung verschoben wird, danach ausgewählt werden, dass die Verschiebung auf der Zeitskala der mit den Programmteilen realisierten Anwendung vernachlässigbar ist. Beispielsweise kann die Ausführung von Befehlen verschoben werden, die sich auf die Kommunikation mit einer Systemkomponente beziehen, die auf einer langsameren Zeitskala als ein Systemzyklus arbeitet.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1: Ausführungsbeispiel eines Mikroprozessors 1 gemäß der Erfindung.
Figur 2: Zeitschema für die Befehlsausführung.
Figur 3: Zusammenführen mehrerer paralleler Programme A bis D zu einem Gesamtprogramm E bei gleichzeitigem Erhalt der Reaktionsfähigkeit auf Benutzereingaben F.
Figur 4: Ansteuerung von Ausgabeschnittstellen 10 und Eingabeschnittstellen 15.
Figur 5: Zeitliche Choreographie verschiedener Schnittstellen untereinander.

Figur 1a verdeutlicht an einem Beispiel schematisch die wichtigsten Komponenten eines Mikroprozessors 1 gemäß der Erfindung. Der Speicher 2 nimmt Instruktionen 4 auf, wobei jede Instruktion 4 einen Befehl 4a und eine Zeitvorgabe 4b für die Befehlsausführung enthält. Die Instruktionsladeeinheit 3 führt die Instruktionen 4 aus dem Speicher 2 der Instruktionsausführungseinheit 5 zu.

Zentrale Komponente des Mikroprozessors 1 ist die Zeitverwaltungseinheit 6, die den aus einer Abfolge von Systemzyklen 71a, 71b bestehenden Systemtakt 71 vorgibt und an die Instruktionsausführungseinheit 5 signalisiert. Es obliegt der Instruktionsausführungseinheit 5, alle Befehle 4a, deren Ausführung für einen bestimmten Systemzyklus 71a, 71b geplant ist, innerhalb dieses Systemzyklus 71a, 71b auszuführen, wenn die Zeitverwaltungseinheit 6 den Beginn dieses Systemzyklus 71a, 71b signalisiert hat.

Die Zeitverwaltungseinheit 6 unterstützt die Instruktionsausführungseinheit 5 hierbei, indem sie jeden Systemzyklus 71a, 71b weiter in Befehlszeitfenster 72a, 72b unterteilt und diese als Befehlszeitfenstertakt 72 ebenfalls an die Instruktionsausführungseinheit 5 signalisiert. Auch die Befehlszeitfenster 72a, 72b sind weiter unterteilt in Befehlsphasenzeitfenster 73a, 73b, die als Befehlsphasentakt 73 ebenfalls an die Instruktionsausführungseinheit 5 signalisiert werden.

Die Zeitverwaltungseinheit 6 und die Instruktionsausführungseinheit 5 werden gemeinsam durch den Taktgeber 70a mit dem Prozessortakt 70 versorgt. Ein Systemzyklus 71a, 71b entspricht für einzelne Programmteile oder die gesamte Dauer des Programms einer festgelegten Anzahl von Zyklen des Prozessortakts 70.

Die Ausführung der Befehle 4a durch die Instruktionsausführungseinheit 5 führt zu Ergebnissen 4c. Durch die Signalisierung 8 benennt die Zeitverwaltungseinheit 6, auf welche Taktflanke des Prozessortakts 70 hin die Ergebnisse 4c mit der Aktion 9 weitergegeben bzw. für gültig erklärt werden sollen.

Figur 1b zeigt die Gesamtansicht einer beispielhaften Implementierung des Mikroprozessors 1. Zusätzlich zu den in Figur 1a gezeigten Bestandteilen enthält der Mikroprozessor 1 hier

- einen Speichercontroller 2a für die Anbindung des Speichers 2,
- eine Verzweigungseinheit 21 zur Steuerung, welche Instruktion 4 aus dem Speicher 2 als nächste abgerufen wird,
- eine nebenläufige Response-Einheit 22 zur Verfolgung von prozessorinternen Zuständen und Registerinhalten,
- eine arithmetisch-logische Einheit 20,
- einen prozessorinternen Speicher 24 zur Aufnahme des Variablenspeichers und der prozessornahen Register 11a, 16a,
- eine der Instruktionsausführungseinheit 5 vorgeschaltete Dekodiereinheit 5a,
- eine Resetlogik 27,
- eine Ticket- und Antwort-Einheit 28,
- ein Gateway 29 zur Anbindung des Mikroprozessors 1 an eine Kommunikationsschnittstelle 30,
- eine Logik 31 für die Entgegennahme von getunnelten Befehlen 4a,
- einen Fehlerbehandler 32 und

- eine Modulzugriffssteuerung 33.

Die Erweiterung zum vollständigen Mikrocontroller 1 fußt unter anderem darauf, dass zusätzlich Peripheriemodule als Ein- und Ausgabeschnittstellen 10, 15 zur Verfügung stehen, sowie ein Datenbus 26 vorgesehen ist, über den Daten mittels Ausgabeschnittstellen 10 an Ein/Ausgabe-Pins 23 ausgegeben bzw. mittels Eingabeschnittstellen 15 von den Ein/Ausgabe-Pins 23 eingelesen werden können. Auch diese Vorgänge werden von der Zeitverwaltungseinheit 6 gesteuert. Hierzu ist die Zeitverwaltungseinheit 6 mit allen Schnittstellen 10, 15 über eine Triggermatrix 25 bidirektional verbunden. Die Schnittstellen 10, 15 sind dazu ausgebildet, die Ausgabe bzw. das Einlesen auf ein über die Triggermatrix 25 übertragenes Triggersignal 13, 18 hin auszuführen. Umgekehrt kann auch das Einlesen eines Wertes durch eine Schnittstelle 15 oder ein beliebiges anderes Ereignis ein Triggersignal auslösen, das durch die Triggermatrix 25 an eine oder mehrere andere Systemkomponenten weitergegeben werden kann. In der Triggermatrix 25 lassen sich nahezu beliebige feste, oder durch Maskierung, logische Verknüpfungen oder Multiplexereigenschaften verschaltete Verbindungen zwischen je einem Triggerausgang einer ersten Systemkomponente und den Triggereingängen weiterer Systemkomponenten programmieren. Wenn dann die erste Systemkomponente ein Triggersignal abgibt, können daraufhin die weiteren Systemkomponenten mit einer deterministischen zeitlichen Präzision bis hinab zu einem Prozessortaktzyklus tätig werden.

In Figur 2 sind das zeitliche Ablaufschema und die Einordnung von Programmbefehlen 4a in definierte Befehlszeitfenster 72a, 72b innerhalb der Systemzyklen 71a, 71b schematisch dargestellt.

Der Zeitstrahl Z spiegelt einen Programmabschnitt eines Programms wider, welches zwei längere Zeiträume ohne Befehlsausführung beinhaltet. Die Zeitachse Z zeigt Systemzyklen 71a, 71b gleicher Länge. Jeder auf der Achse dargestellte Balken symbolisiert ein belegtes Befehlszeitfenster 72a, 72b innerhalb der Systemzyklen 71a, 71b, also einen ausgeführten Programmbefehl 4a. So werden beispielsweise in Systemzyklus m drei Befehle ausgeführt; im vorherigen Systemzyklus m-1 dagegen keiner.

Die Zeitverwaltungseinheit 6 sei in diesem Beispiel so konfiguriert, dass 16 Befehlszeitfenster 72a, 72b pro Systemzyklus 71a, 71b möglich sind. Der erste Befehl 4a in jedem Systemzyklus belege Befehlszeitfenster 72a, 72b mit dem Index 0; unmittelbar folgende Befehle 4a werden entsprechend aneinandergereiht. Das letzte Befehlszeitfenster 72a, 72b mit dem Index 15 sei in jedem Systemzyklus 71a, 71b für getunnelte Befehle 4a reserviert, wie etwa nach Benutzereingriffen.

Der Wert <Delay> im Befehlswort definiert den zeitlichen Abstand des Systemzyklus 71a, 71b, in dem der aktuelle Befehl 4a ausgeführt wird, zu dem Systemzyklus 71a, 71b, in dem der vorherige Befehl 4a ausgeführt wurde. Ist dieser Wert 0, so wird der Befehl 4a im nächsten Befehlszeitfenster 72a, 72b desselben Systemzyklus 71a, 71b ausgeführt. Die Delay-Werte der einzelnen Befehle 4a sind über der Zeitachse Z zur Veranschaulichung abgebildet. Der oberste Wert entspricht jeweils dem Delay-Wert des ersten Befehls eines Systemzyklus (soweit vorhanden); danach folgen je nach Belegung die Delay-Werte weiterer Befehle.

Als Beispiel hat der erste Befehl 4a des Systemzyklus m einen Delay-Wert von 2, was bedeutet, dass der vorherige Befehl 4a in Systemzyklus m-2 zur Ausführung gebracht wurde. Die folgenden beiden Befehle 4a haben einen Delay-Wert von 0 und werden somit im jeweils nächsten Befehlszeitfenster 72a, 72b desselben Systemzyklus m ausgeführt. Der darauffolgende Befehl 4a hat einen Delay-Wert von 1 und wird daher in Systemzyklus m+1 ausgeführt.

Systemzyklus m ist zur Veranschaulichung in einem vergrößerten Ausschnitt dargestellt. Hier sind die 16 Befehlszeitfenster 72a, 72b und die Belegung der ersten drei Befehlszeitfenster 72a, 72b detaillierter zu sehen. In einer nochmaligen Vergrößerung sind auch die jeweiligen Befehlsphasen 73a, 73b der drei Befehle 4a zu erkennen. Hier habe der zweite Befehl die längste Ausführungsdauer. Der Zeitbedarf dieses zweiten Befehls 4a entspreche gleichzeitig der längsten Befehlsausführungsdauer des gesamten Befehlssatzes und bilde den zeitlichen Abstand der Befehlszeitfenster 72a, 72b innerhalb des Systemzyklus 71a, 71b.

In zwei Systemzyklen erreicht jeweils ein getunnelter Befehl 4a, gekennzeichnet mit dem Buchstaben T, die Instruktionsausführungseinheit 5. Diese Befehle 4a werden zur Laufzeit von der Zeitverwaltungseinheit 6 in das jeweils nächste freie, für getunnelte Befehle 4a reservierte Befehlszeitfenster 72a, 72b eingesetzt. Die spontanen, getunnelten Befehle 4a besitzen keinen Delay-Wert, da sie in ein reserviertes Befehlszeitfenster 72a, 72b eingefügt werden. Das zeitliche Gefüge des Programms wird durch deren Ausführung nicht beeinflusst.

Wie in der Problemstellung bereits ausführlich beschrieben wurde, können auszuführende Programme durch die Überlagerung verschiedener Vorgänge sehr komplex werden. Bei der Erstellung solcher Programme ist es daher ein sinnvoller Weg, parallel auszuführende Aufgaben zunächst getrennt voneinander als möglichst unabhängige Programmteile zu erstellen, um sie später zeitlich zu verflechten. Durch die Idee der Aufteilung der Systemzyklen 71a, 71b in Befehlszeitfenster 72a, 72b ergibt sich diese Verflechtung durch einfaches Aneinanderreihen der Befehle 4a, 4b verschiedener Programmteile A-D innerhalb der Systemzyklen 71a, 71b.

Die Unabhängigkeit der einzelnen Programmteile A-D ist hierfür eine entscheidende Voraussetzung. "Unabhängig" bedeutet beispielsweise, dass keine Ressource gleichzeitig von mehreren Programmteilen A-D verwendet werden darf. Bei herkömmlichen Prozessorarchitekturen ist dies in der Regel kaum zu vermeiden. Ein Beispiel ist die dortige geringe Anzahl an prozessornahen Registern, was dazu führt, dass die Inhalte dieser Speicherplätze häufig in weiter entfernten Speichern zwischengespeichert und wieder geladen werden. In der vorliegenden Architektur dagegen können durch die hohe Anzahl an prozessornahen Registern deutlich mehr Register dem Kontext der jeweiligen Programmteile exklusiv zur Verfügung stehen. Weiterhin bedeutet "unabhängig" auch, dass eventuelle Änderungen im Kontrollfluss eines Programmteils, etwa bei Schleifen, in alle Programmteilen entsprechend berücksichtigt werden.

Um die Lauffähigkeit und Korrektheit des fertigen Programms sicherzustellen, müssen daher einige formale Prüfungen durchgeführt werden, ähnlich wie bei Verfahren zur statischen Code-Analyse bei klassischer Softwareentwicklung. Werden bei der Analyse Konflikte oder Abhängigkeiten erkannt, müssen die Programmteile entsprechend angepasst werden. Analyse und Anpassungen sind mit der vorliegenden Architektur jedoch relativ einfach möglich, und können von der Werkzeugkette (Toolchain) mit überschaubarem Aufwand geleistet werden. Sind alle erkannten Konflikte und Abhängigkeiten beseitigt, so ist die Zusammenführung zu einem einzigen Programm trivial; die Befehle 4a müssen lediglich aneinander gereiht werden.

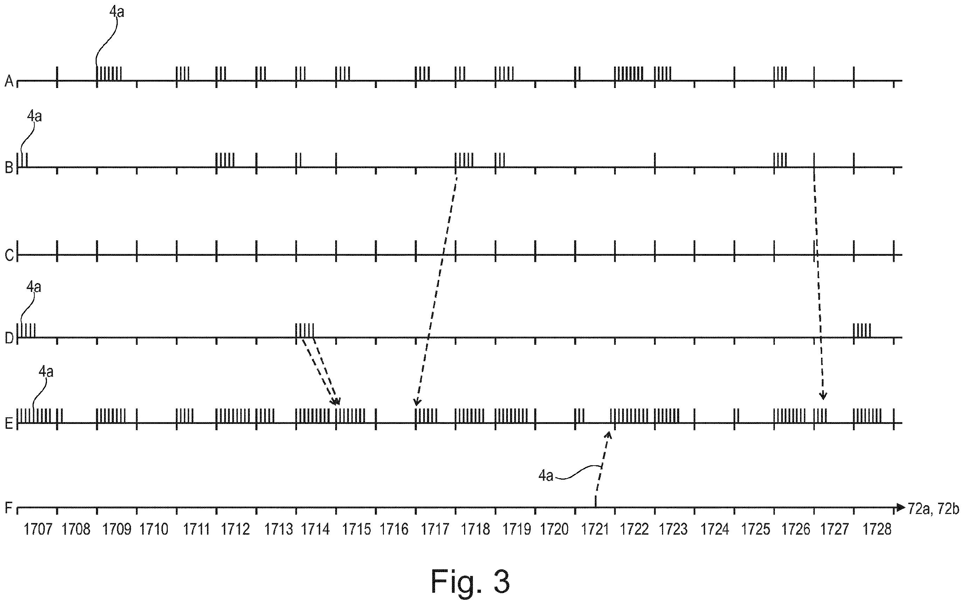

Figur 3 zeigt, wie vier verschiedene Programmteile A bis D zu einem einzigen Programm E zusammengefügt wurden. Es ist ein Programmausschnitt von 22 Systemzyklen 71a, 71b exemplarisch dargestellt. Programmteil C könnte in diesem Ausschnitt z.B. aus Befehlen 4a für die Aktualisierung von synchron übermittelten Positionsdaten für ein schnelles Bewegungsprofil eines Galvanometer-Scanners bestehen. Dafür wird hier genau ein Befehlszeitfenster 72a, 72b je Systemzyklus 71a, 71b belegt.

Die Zeitverwaltungseinheit 6 sei in diesem Beispiel so konfiguriert, dass jeder Systemzyklus 71a, 71b eine Länge von 10 Mikrosekunden hat und in je 10 gleich lange Befehlszeitfenster 72a, 72b unterteilt ist. Dabei sei das letzte Befehlszeitfenster 72a, 72b in jedem Systemzyklus 71a, 71b für getunnelte Befehle 4a reserviert, wie etwa nach Benutzereingriffen F.

Um die einfache Aneinanderreihung der Befehle 4a zu verdeutlichen, sei als Beispiel Systemzyklus #1707 gewählt. Drei Befehle 4a aus Programmteil B, ein Befehl aus Programmteil C sowie fünf Befehle aus Programmteil D ergeben im zusammengeführten Programm E insgesamt neun Befehle. Damit wären alle neun verfügbaren Zeitfenster 72a, 72b für Programmbefehle 4a in diesem Systemzyklus 71a, 71b belegt.

In Systemzyklus #1714 hingegen ergibt sich zunächst ein Überlauf. In diesem Zyklus übersteigt die Summe der benötigten Befehlszeitfenster 72a, 72b die Anzahl der verfügbaren Befehlszeitfenster 72a, 72b. Zur Lösung dieses Konflikts werden von den insgesamt elf Befehlen 4a mindestens zwei Befehle 4a gesucht, deren Ausführung im nächsten Systemzyklus 71a, 71b zeitlich unkritisch ist, also keinen Einfluss auf die Funktionalität des Programms hat. In diesem Fall werden zwei Befehle an den Anfang des nächsten Systemzyklus #1715 verschoben.

Das Auffinden solch zeitlich unkritischer Befehle 4a ist durch das enge Zeitraster in vielen Fällen ohne großen Aufwand möglich. Dies betrifft insbesondere Zugriffsbefehle auf die Kontrollregister von Ein-/Ausgabe-Schnittstellen 10, 15. Im Vergleich zu den kurzen, im Mikrosekundenbereich liegenden Systemzykluszeiten arbeiten viele Ein-/Ausgabe-Schnittstellen 10, 15 verhältnismäßig langsam. Ein Beispiel sei eine PWM-Schnittstelle für die Ansteuerung eines Gleichstrommotors mit einer PWM-Frequenz von 25 kHz. Die PWM-Periodendauer ist in diesem Fall 40 Mikrosekunden lang. Da bei einer Systemzyklusdauer von 10 Mikrosekunden für die Aktualisierung jedes PWM-Wertes je vier Systemzyklen 71a, 71b zur Verfügung stehen, kann ein entsprechender Aktualisierungsbefehl in einen der vorherigen oder einen der folgenden Systemzyklen 71a, 71b verschoben werden, ohne die PWM-Ausgabe zu beeinflussen. Ein anderes Beispiel sind Datenübertragungen über UART-Schnittstellen, welche sich meist über noch größere Zeiträume hin erstrecken.

Eine andere Art von Konflikt ergebe sich in Systemzyklus #1718. In diesem Fall handele es sich um einen Lesezugriff durch Programmteil A auf einen Digital-Analog-Wandler, der sich zu diesem Zeitpunkt im Power-Down-Zustand befindet und eine Wake-Up-Zeit von 8 Mikrosekunden benötigt. Das für den Wandler hinterlegte Timing-Modell sehe vor, dass für die Übertragung des Wake-Up-Kommandos und die anschließende Wake-Up-Zeit insgesamt 9,8 Mikrosekunden benötigt werden. Programmteil B beinhaltet einen Schreibzugriff auf diesen Wandler im folgenden Systemzyklus #1719 und sah daher ursprünglich einen Wake-Up-Befehl im ersten Befehlszeitfenster in Systemzyklus #1718 vor, um in nächsten Systemzyklus #1719, also mindestens 10 Mikrosekunden später, einen Schreibzugriff auf den Wandler durchführen zu können. Der Konflikt für Programmteil A kann nun im zusammengeführten Programm dadurch aufgelöst werden, dass der geplante Wake-Up-Befehl aus Programmteil B um mindestens 10 Mikrosekunden vorgezogen wird; in diesem Fall in das erste Befehlszeitfenster 72a, 72b des vorangegangenen Systemzyklus #1717. Somit kann sowohl der von Programmteil A in Systemzyklus #1718 geplante Lesezugriff als auch der von Programmteil B in Systemzyklus #1719 geplante Schreibzugriff wie gewünscht stattfinden.

In Systemzyklus #1727 ergebe sich eine Ressourcenabhängigkeit. Sowohl Programmteil A als auch Programmteil B greifen auf dieselbe Ressource zu. In diesem Fall handelt es sich um je einen Lesezugriff auf zwei verschiedene Analog-Digital-Wandler, die über dieselbe SPI-Schnittstelle angesprochen werden. Das Timing-Modell sehe für die Übertragungsdauer eines Lesebefehls über diese Schnittstelle einen Zeitbedarf von maximal 2,24 Mikrosekunden vor. Angenommen, für diese SPI-Schnittstelle existiert keine Kommunikationswarteschlange, so dass sie für die Dauer einer Übertragung als blockiert anzusehen ist. Der geforderte zeitliche Versatz von 2,24 Mikrosekunden wäre bei einem einfachen Aneinanderreihen der drei Befehle des Systemzyklus nicht gegeben. Die Lösung der Abhängigkeit ist auch hier relativ einfach, beispielsweise durch Einfügen eines Dummy-Befehls (ähnlich eines NOP-Befehls bei herkömmlichen Prozessoren) vor dem zweiten Lesezugriff. Belegen die beiden Lesezugriffs-Befehle nach der Verflechtung das erste und das vierte Befehlszeitfenster von Systemzyklus #1727, so ist mit 3 Mikrosekunden der benötigte zeitliche Abstand gegeben.

Schließlich ist in Systemzyklus #1721 zu sehen, wie zur Laufzeit ein getunnelter Befehl 4a den Prozessor 1 erreicht. Der Befehl 4a umfasse z.B. das Anpassen der Helligkeit einer LED-Lichtquelle durch den Benutzer während einer Messung. Dieser Befehl 4a wird von der Zeitverwaltungseinheit 6 in das nächste, für diese Art von Befehlen 4a reservierte Befehlszeitfenster 71a, 71b eingegliedert und dort zur Ausführung gebracht.

Figur 4a zeigt schematisch eine Ausgabeschnittstelle 10. Der auszugebende Wert 12 wird über ein prozessornahes Register 11a im Pufferspeicher 11 abgelegt. Auf ein Triggersignal 13 von der Zeitverwaltungseinheit 6 hin wird der Wert 12 in der Aktion 14 ausgegeben.

Figur 4b zeigt schematisch eine Eingabeschnittstelle 15. Der Wert 17 wird zunächst in den Pufferspeicher 16 eingelesen. Auf ein Triggersignal 18 von der Zeitverwaltungseinheit 6 hin wird der Wert 17 in der Aktion 19 an das prozessornahe Register 16a weitergegeben.

Figur 4c zeigt eine mögliche Realisierung einer Ausgabeschnittstelle 10, auf die sich das deterministische zeitliche Gefüge der Befehlsausführung erstreckt, in größerem Detail am Beispiel eines GPIO-Ports, der als Ausgabeschnittstelle 10 konfiguriert ist. Im Gegensatz zu herkömmlichen GPIO-Modulen sind in der vorliegenden Architektur für jeden Port, der wiederum je einen Ein/Ausgabe-Pin 23 ansteuert, zusätzliche Hardwarestrukturen 10a in der Zeitverwaltungseinheit 6 vorgesehen, mit der ein zeitlich präzises Triggern der Ein-/Ausgabe-Ports mit der Genauigkeit eines Prozessortaktes möglich wird.

Für jede GPIO-Bank, je mehrere GPIO-Ports umfassend, existiere ein eigener Registersatz in prozessorinterner Logik bzw. in prozessorinternem Speicher 24. In diesem Implementierungsbeispiel habe der Registersatz einen Umfang von fünf Kontrollregistern 11a-11e und einem Maskierungsregister 11f.

- VALUE ABSOLUTE (Register 11a): Setzen der nächsten logischen Pegel DOUT(1..n) an den Ausgängen 23 sowie Aktivierung der Synchronisierungslogik (bei Schreibzugriff) oder Lesen der aktuell ausgegebenen bzw. anliegenden Pegel DIN(1..n) (bei Lesezugriff)
- CONTROL (Register 11b): Konfigurieren der Portfunktionalitäten wie Pull-Up, Pull-Down, Glitch Filter, Open-Drain, etc.
- MODE (Register 11c): Auswahl der Synchronisierungsart (z.B. einmalig oder zyklisch, Einzelflanke oder Puls) und weitere Parameter wie z.B. Abstände in Systemticks bei zyklischer Synchronisierung
- CONFIG 1 (Register 11d): Verzögerung der Triggerung in Prozessortaktzyklen nach dem Systemtick nach Aktivierung
- CONFIG 2 (Register 11e): Pulsdauer in Prozessortaktzyklen.

Mit dem Maskierungsregister 11f kann, wie auch in anderen Mikrocontrollern üblich, über eine Maskierung ausgewählt werden, welche Ports bei einem Kontrollregisterzugriff angesprochen werden. Jeder Port der Bank wird dabei über ein Bit im Maskierungsregister 11f repräsentiert. Der logische Pegel des Bits entscheidet darüber, ob der aktuelle Zugriff den Port anspricht. Befehle für Zugriffe auf Kontrollregister 11a-11e müssen demnach als Parameter die Maskierung 11f beinhalten. Dieses Verfahren erlaubt den Zugriff auf die Kontrollregister 11a-11e für mehrere oder alle Ports mit einem einzigen Schreibbefehl.

Im folgenden Beispiel umfasse jede Bank 32 Ein-/Ausgabe-Ports, von denen in Figur 4c nur ein einzelner, als Ausgabeschnittstelle 10 konfigurierter Port beispielhaft dargestellt ist. Die Kontrollregister 11a-11e der Bank seien entsprechend 32 Bit breit. Diejenigen Ports, für die der aktuelle Lese- oder Schreibzugriff gelten soll, seien über den Bit-Wert , 1' in den entsprechenden Bits des Maskierungsregisters 11f auszuwählen. Entsprechend bedeutet jeder Bit-Wert ,0' im Maskierungsregister 11f, dass die betreffenden Ports von diesem Zugriff ausgenommen bleiben.

Beispiele:

- Ein Schreibzugriff auf Register 11e "CONFIG 2" mit Wert 0x000007B6 und Maske 0x08405612 setzt die Pulsdauer der nächsten Ausgabe von Ports #1, #4, #9, #10, #12, #14, #22 und #27 auf den Wert von 1974 Prozessortaktzyklen.
- Ein Schreibzugriff auf Register 11a "VALUE ABSOLUTE" mit Wert 0x000007B6 und Maske 0x08405612 setzt die nächsten zu setzenden Ausgangspegel für Ports #2, #4, #9 und #10 auf logisch ,1' sowie für Ports #1, #12, #14, #22 und #27 auf logisch ,0'.

Mit einem Schreibzugriff auf das Register 11a "VALUE ABSOLUTE" und der entsprechenden Maskierung 11f kann das Setzen neuer Ausgangspegel für einen oder mehrere Ausgabe-Ports gleichzeitig vorbereitet werden (Aktivierung). Die tatsächliche Ausgabe der neuen Pegel (Triggerung) erfolgt dann zum nächsten Synchronisierungs- bzw. Triggerzeitpunkt.

Dieser Zeitpunkt ist für alle Ports, deren Register 11d "CONFIG 1" vor der Aktivierung nicht oder mit dem Wert 0 beschrieben wurde, defaultmäßig der nächste Systemtick. Für alle Ports hingegen, deren Register 11d "CONFIG 1" vor der Aktivierung mit einem Wert größer 0 beschrieben wurde, verzögert sich die jeweilige Ausgabe ab dem nächsten Systemtick um die entsprechende Zahl an Prozessortaktzyklen.

Auf diese Weise können Ausgaben auf Ports unterschiedlicher GPIO-Bänke und anderen Schnittstellen zum selben Prozessortaktzyklus oder in taktzyklengenau programmierbarem Abstand zueinander stattfinden, obwohl sie über Befehle aktiviert wurden, die zu verschiedenen Zeitpunkten ausgeführt wurden. Ist die Wortbreite der Zähler beispielsweise 32 Bit, so können zeitliche Abstände von einem Prozessortaktzyklus bis hin zu mehreren Stunden erzielt werden.

Weiterhin kann vor der Aktivierung über Register 11e "CONFIG 2" für jeden Port eine Pulsdauer gesetzt werden. Damit können auch sehr kurze Pulse mit prozessortaktzyklengenau definierter Länge realisiert werden. Die Zeitverwaltungseinheit 6 und die hierin integrierte Ansteuereinheit 10a für die Schnittstelle 10 können hierfür so konfiguriert sein, dass sie in entsprechendem Abstand zum ersten Triggerzeitpunkt ein zweites Triggersignal 13 an den jeweiligen Port sendet. Der Port kann so konfiguriert sein, dass er dieses zweite Triggersignal 13 dazu verwendet, den vorherigen, zwischengespeicherten Ausgangspegel DOUT'(x) wiederherzustellen. Auch hier können mit beispielsweise 32 Bit Wortbreite der Zähler Pulsdauern von einem Prozessortaktzyklus bis hin zu mehreren Stunden erzielt werden.

Zusammengefasst kann gesagt werden, dass es mit den beschriebenen Funktionalitäten möglich ist, Peripheriemodule unabhängig voneinander prozessortaktzyklengenau zu triggern. Für ein GPIO-Modul bedeutet dies, dass einmal pro Systemzyklus theoretisch auf jedem Port unterschiedliche Pegelflanken, Einzelimpulse oder auch zyklische Pulse und damit beliebige Bitmuster mit der zeitlichen Präzision des Prozessortaktes realisiert werden können.

Die Synchronisierung der prozessorinternen Signal- und Zustandsübergänge in der vorliegenden Prozessorarchitektur erfolgt größtenteils taktflankengesteuert. Als Basis für die Synchronisierung dienen die Taktflanken des Prozessortaktes 70. Je nach Implementierung können dies steigende Taktflanken, fallende Taktflanken, oder auch beide Taktflanken des Prozessortaktes 70 sein. Der Prozessortakt 70 ist idealerweise als synchroner Takt über die gesamte beteiligte Prozessorlogik 1 einschließlich aller Peripheriemodule 10, 15 verteilt.

Nach Figur 5 beträgt die Maßeinheit für die Einteilung der Zeit in Zeitintervalle sinnvollerweise eine Periodendauer des Prozessortaktes 70. Die Dauer eines Systemzyklus 71a beträgt damit ein ganzzahliges Vielfaches dieser Periodendauer. In der Zeitverwaltungseinheit existiert eine Logikeinheit für das Zählen von Prozessortaktperioden, für das Vergleichen des Zählerstandes mit einem programmierbaren Wert, für das Rücksetzen des Zählers und für die Generierung eines Triggerimpulses. Der Prozessortaktzähler 70b wird ab Beginn eines Systemzyklus 71a mit jeder steigenden Taktflanke (alternativ mit jeder fallenden Taktflanke) inkrementiert. Beim Erreichen eines programmierten Zählerstandes, welcher der Dauer des Systemzyklus 71a entspricht, wird ein Triggerimpuls (der Systemtick 71) generiert und der Prozessortaktzähler 70b auf 0 gesetzt. Alternativ kann der entgegengesetzte Weg gewählt werden, indem der Zählerstand 70b zu Beginn des Systemzyklus 71a auf den gewünschten Zählerstand gesetzt und mit jeder Periode des Prozessortaktes 70 dekrementiert wird. Erreicht der Zählerstand 0, wird der Triggerimpuls für den Systemtick 71 erzeugt und der Zähler 70b wieder auf den Anfangswert gesetzt.

Der Systemtick 71 signalisiert den Beginn eines jeden Systemzyklus 71a, 71b. Für jede Komponente des Prozessors 1, die zeitgesteuert ausgelegt ist, existiert in der Zeitverwaltungseinheit 6 eine entsprechende Logik mit Zählern, Vergleichern und Impulsgebern für Signale, die zu den Komponenten geführt sind und dort bestimmte Funktionalitäten der Komponente triggern können. Als Beispiel kann dies sein:

- die Instruktionsausführungseinheit 5, die auf Triggersignale hin die Befehlsausführung bzw. die einzelnen Phasen der Befehlsausführung startet
- der Ausgangstreiber für einen GPIO-Pin 23, der auf ein Triggersignal hin einen programmierten Pegel auf den Ausgang gibt
- eine pulsweitenmodulierte Schnittstelle (PWM-Schnittstelle), die auf ein Triggersignal hin die Pulslänge ab ihrer nächsten Periode ändert.

Ein Teil der Zeitverwaltungseinheit 6 arbeitet eng mit der Instruktionsausführungseinheit 5 zusammen, welche die Programmbefehle in Bussignale und Steuerimpulse umsetzt, und damit für den korrekten Ablauf interner Operationen und den Datentransport zwischen den verschiedenen Komponenten des Prozessors 1 sorgt. Dies ähnelt in seiner Funktion den Steuerwerken in herkömmlichen Prozessorarchitekturen, erweitert diese jedoch um vielfältige Möglichkeiten zur Synchronisierung der verschiedenen Vorgänge, da diese zu definierten Zeitpunkten stattfinden. Den angeschlossenen Komponenten und Peripheriemodulen 10, 15 werden unter anderem die genauen Zeitpunkte für die Gültigkeit von Signalen auf Bussen und für Zustandsübergänge von endlichen Zustandsautomaten in den Komponenten signalisiert. Zu solchen Vorgängen gehören beispielsweise:

- Ausführen von Operationen in arithmetisch-logischen Einheiten (ALU) 20
- Holen des nächsten Befehls durch die Befehlsladeeinheit 3
- Ausführen von bedingten und unbedingten Sprünge im Kontrollfluss in der Verzweigungseinheit 21
- Ausführen von Lese- und Schreibzugriffen auf Registersätze der Peripheriemodule 10, 15

Wie bereits beschrieben, führt dies zu einem hohen Maß an Determinismus und eröffnet gleichzeitig die Möglichkeit zur massiven Parallelisierung nebenläufiger Logikeinheiten.

In Figur 5 sind einige Beispiele von synchronisierten Vorgängen auf Ein-/AusgabeSchnittstellen mit der Genauigkeit der Länge eines Prozessortaktes 70 und in Bezug auf den Systemtick 71 exemplarisch dargestellt.

Beinhaltet eine Implementierung beispielsweise wie hier einen Prozessortakt 70 von 100 MHz, so beträgt der Abstand zwischen zwei steigenden Taktflanken des Prozessortaktes 10 Nanosekunden. Alle Komponenten, die mit dem Prozessortakt 70 getaktet sind, können ebenfalls mit einer zeitlichen Auflösung von 10 Nanosekunden zueinander synchronisiert werden.

Die Länge eines Systemzyklus 71a, 71b betrage in diesem Beispiel 1000 Prozessortaktzyklen. Dies entspricht einer Dauer von 10 Mikrosekunden. Der Prozessortaktzähler 70b wird zu Beginn eines Systemzyklus auf 0 gesetzt und nach jedem Prozessortakt von 10 Nanosekunden Dauer inkrementiert. Nachdem der Zählerstand den Wert 999 erreicht hat, wird er im folgenden Prozessortakt wieder auf 0 zurückgesetzt, und der Triggerimpuls für den Systemtick 71 erzeugt.

Bei der alternativen, dekrementierenden Variante würde der Prozessortaktzähler 70b zu Beginn eines Systemzyklus 71a, 71b auf den Maximalwert 999 gesetzt. Nachdem der Zählerstand den Wert 0 erreicht hat, wird er im folgenden Prozessortakt auf dem Maximalwert zurückgesetzt und ein Triggerimpuls, der Systemtick 71, erzeugt.

Es ist hier ein Ausschnitt der ersten 42 Prozessortaktzyklen eines Systemzyklus 71a gezeigt. Der Impuls für den Systemtick 71 habe eine Länge von einem Prozessortaktzyklus.

Im ersten Beispiel sind exemplarisch fünf synchronisierte Signale 23a-23e von GPIO-Ausgangspins 23 und ein Signal 23f einer dazu synchronisierten PWM-Kommunikations-Schnittstelle gezeigt. Die Signale 23a-23c sollen 30 Nanosekunden nach dem Systemtick 71 getriggert werden. Die Impulse auf den Signalen 23a und 23b sollen high-aktiv und lediglich einen Prozessortaktzyklus lang sein, während der Impuls auf Signal 23c low-aktiv und 7 Prozessortaktzyklen lang sein soll. Die Signale 23d und 23e sollen mit 120 Nanosekunden Abstand zum Systemtick 71 getriggert werden, wobei an Signal 23d ein high-aktiver, 2 Prozessortaktzyklen langer Impuls sowie an Signal 23d eine einzelne, fallende Taktflanke erzeugt werden soll. Weiterhin soll 50 Nanosekunden später eine Schnittstelle PWM4 mit der Ausgabe ihres PWM-Signals 23f mit 160 Nanosekunden Pulsdauer beginnen.

Bei der Verwendung von maskierten Zugriffen auf GPIO-Ports können mit einem Befehl 4a mehrere oder sogar alle Ports angesprochen werden. Eine vorteilhafte Implementierung kann somit das Bitmuster flexibel und in wenigen Befehlen 4a erzeugen.

Signale 23g-23i bilden die Kommunikationssignale einer synchronen TDM-Schnittstelle, mit der z.B. mehrere Galvanometer-Scanner angesteuert werden können. Diese Signale seien ebenfalls vom Prozessortakt 70 abgeleitet. Die Periodendauer des Taktsignals 23g für die Galvanometer-Scanner betrage 8 Prozessortaktzyklen, also 80 Nanosekunden. Wird in jedem Taktzyklus des Taktsignals 23g ein Bit auf die Datenleitung für die Positionswerte 23i gelegt, können in jedem Systemzyklus insgesamt 125 Bits übertragen werden. Beträgt z.B. die Wortbreite jedes Galvanometer-Scanners 24 Bit, so können je Schnittstellen-Instanziierung bis zu 5 Scanner angesteuert werden.

Weiterhin sei ein low-aktives Synchronisierungssignal 23h gegeben, welches mit der fallenden Flanke des Taktsignals 23g beginne und für die Dauer des ersten Datenbits für den ersten Galvanometer-Scanner aktiv bleibe. In diesem Beispiel starte die Synchronisierung über das Synchronisierungssignal 23h nach 0 Prozessortaktzyklen bezogen auf den Systemtick, also gleichzeitig mit dessen steigender Flanke. Nach jeweils 4 Prozessortaktzyklen werde der Pegel am Taktausgang 23g gewechselt und somit ein Taktsignal mit einer Taktfrequenz von 12,5 MHz erzeugt. Auf der Datenleitung 23i werde jeweils 2 Prozessortaktzyklen nach einer fallenden Flanke des Taktausgangs 23g ein neues Bit ausgegeben. Nach Übertragung aller 120 Datenbits erfolge eine Dummy-Übertragung von 5 Bit, während derer die Schnittstellenlogik Berechnungs- und Updatevorgänge durchführen kann (z.B. Berechnung der Ableitungen der Weg-Zeit-Funktion, siehe Beschreibung Anwendungsbeispiel). Danach beginne die Übertragung von neuem. Die Flanke für das Synchronisierungssignal 23h liegt dabei wieder zeitgleich zur steigenden Flanke des Systemticks. Die Schnittstelle arbeitet somit synchron zum Prozessortakt 70 und phasenkonstant zum Systemtick 71.

Um die Synchronisierungsmöglichkeiten mit einer solchen Schnittstelle zu verdeutlichen, seien als Beispiel die Signale für zwei digitale GPIO-Ausgabepins 23j, 23k angeführt, über die eine Beleuchtungsquelle und ein Kamerashutter an den Prozessor 1 angebunden sind. Es existiere ein geeignetes zeitliches Modell für das Synchronisieren der Bewegung eines Galvanometer-Scanners mit diesen beiden Komponenten. Das zeitliche Modell ergebe für einen bestimmten Systemzyklus die optimalen Abstände (Phasenlagen) zwischen den Übertragungszeitpunkten bestimmter Positionswerte an den Galvanometer-Scanner und den jeweiligen Triggerzeitpunkten für Beleuchtungsquelle und Kamerashutter.

Signale 23j und 23k können dann, wie hier exemplarisch dargestellt, mit den ermittelten Abständen zu einem Positionsausgabezeitpunkt auf Signal 23i und mit der Genauigkeit eines Prozessortaktzyklus getriggert werden.

In vielen Fällen ist der zeitliche Abstand zwischen Aktivierung und tatsächlicher Ausgabe der Triggersignale deutlich größer als die Dauer eines Systemzyklus 71a, 71b. Dies kann mit ausreichend breiten Zählern bewerkstelligt werden. Ist die Wortbreite der Zähler beispielsweise 32 Bit, so können zeitliche Abstände zwischen Aktivierung und Triggerung bis hin zu mehreren Stunden erzielt werden. Diese Methode hat den Nachteil, dass die betreffende Zähl- und Aktivierungslogik in der Zeitverwaltungseinheit 6 über viele Systemzyklen hinweg aktiv sein muss, und zwischenzeitlich nicht für anderweitige Triggervorgänge auf dieser Ressource verwendet werden kann. Ein großer Vorteil hingegen liegt darin, dass auf diese Weise eine hohe Anzahl an Vorgängen zu bestimmten Zeitpunkten hin synchronisiert werden kann. Die Befehle, um dies vorzubereiten und zu aktivieren, müssen nicht in einen Systemzyklus passen, sondern können über viele vorherige Systemzyklen verteilt werden.

Im Bild ist dies für die Ressource des GPIO-Ausgangspins 23j dargestellt. Der Triggervorgang ist auf einen Zeitpunkt hin synchronisiert, welcher vor dem aktuellen Systemzyklus 71a liegt.

Es kann vorteilhaft sein, durch einfache arithmetische Berechnungen zur Laufzeit die Phasenlage für denjenigen Systemzyklus 71a zu bestimmen, in welchem die Triggerung erfolgen soll, und den Aktivierungs-Befehl in die Nähe dieses Systemzyklus zu verschieben, idealerweise in den direkt vorausgehenden Systemzyklus. Im Bild ist dies für GPIO-Ausgangspin 4e exemplarisch dargestellt. Der Aktivierungszeitpunkt für diese Ressource liege m Systemzyklen zurück. Der Zählerwert für die Verzögerung zwischen Aktivierungszeitpunkt und tatsächlicher Ausgabe muss in diesem Fall um m*1000 Prozessortaktzyklen verringert werden, was mittels einer Multiplikation und einer Subtraktion erreicht werden kann.

Pins 23l bis 23p zeigen eine andere Möglichkeit der Synchronisierung. Hier werden mehrere Triggervorgänge nicht auf ein intern generiertes Signal wie eine Flanke des Systemticks 71 hin synchronisiert, sondern auf ein externes Ereignis, wie etwa einen Pegelwechsel an einem GPIO-Eingangspin.

Im Bild dargestellt ist ein GPIO-Eingangssignal 23l, auf dessen steigende Flanke hin der Ausgang eines anderen GPIO-Ports 23m mit zwei Prozessortaktzyklen Verzögerung sowie der Start einer SPI-Übertragung mit drei Prozessortaktzyklen Verzögerung getriggert werden soll. Die Triggermatrix 25 wird hierfür so konfiguriert, daß der Trig-gerausgang von Signal 23l mit den Triggereingängen der beiden beteiligten Komponenten verschaltet wird.

Pins 23q bis 23t zeigen den umgekehrten Fall. Hier wird nach dem Eintreffen einer Nachricht auf Schnittstelle SPI3 ein GPIO-Ausgabeport 23t getriggert. Die Triggermatrix 25 wird hierfür so konfiguriert, daß der Triggerausgang von der Empfangslogik der Schnittstelle SPI3 mit dem Triggereingang des Ports verschaltet wird. Der Zeitpunkt, wann der Zustandsautomat der Empfangslogik der SPI-Schnittstelle das Triggersignal erzeugt, ist dabei aus ihrer Implementierung präzise bekannt und kann entsprechenden Timing-Modellen zugrunde gelegt werden.

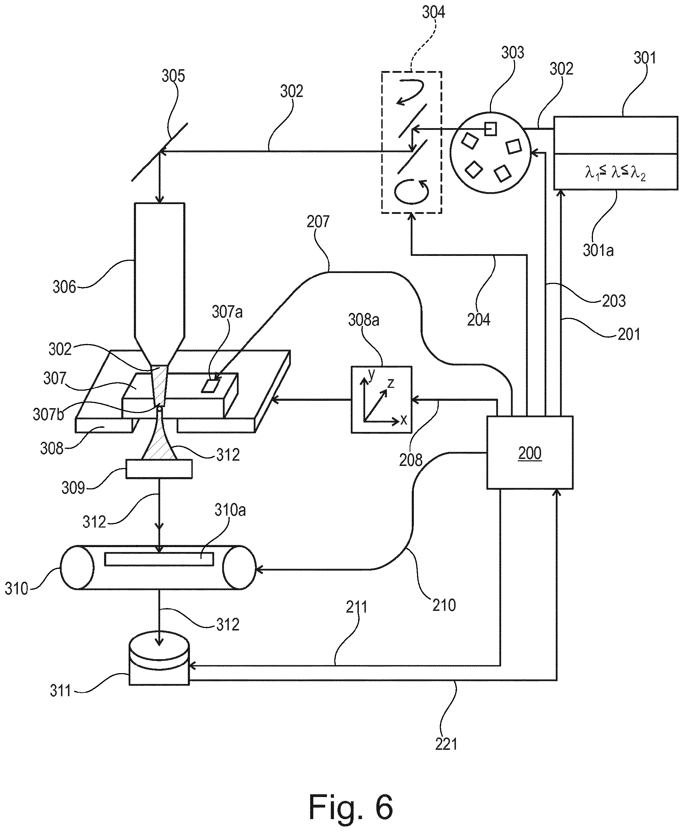

Figur 6 zeigt ein digitales Mikroskop 300, das durch das eingebettete System 200 gemäß der Erfindung gesteuert wird. Der Laser 301 ist über ein Steuergerät 301a mit seiner Wellenlänge $\lambda$ im Bereich zwischen $\lambda_1$ und $\lambda_2$ durchstimmbar. Die Wellenlänge $\lambda$ wird über eine Steuerleitung oder Kommunikationsverbindung 201 vom eingebetteten System 200 eingestellt. Der Laserstrahl 302 wird über einen Chopper 303, dessen Frequenz über eine Steuerleitung oder Kommunikationsverbindung 203 vom eingebetteten System 200 einstellbar ist, auf eine Scaneinheit 304 geleitet. Die Scaneinheit 304 verschiebt, gesteuert über eine Steuerleitung oder Kommunikationsverbindung 204 vom System 200, den Laserstrahl 302 in zwei Raumrichtungen parallel. Ein Spiegel 305 koppelt den Laserstrahl 302 in das Objektiv 306 ein. Das Objektiv 306 fokussiert den Laserstrahl 302 auf die Probe 307.

Die Probe 307 weist in diesem Ausführungsbeispiel eine Elektrode 307a auf. Über eine Steuerleitung oder Kommunikationsverbindung 207 kann diese Elektrode 307a mit einer Spannung beaufschlagt werden, um die Probe 307 elektrisch zu stimulieren und mit dem Mikroskop 300 die Antwort auf diese Stimulation zu studieren.

Die Probe 307 ist auf einem Tisch 308 montiert, der über einen Verfahrmechanismus 308a in den drei Raumrichtungen x, y und z verschiebbar ist. Diese Verschiebung wird vom System 200 über eine Steuerleitung oder Kommunikationsverbindung 208 gesteuert. Die Position des Tisches 308 bestimmt, auf welchen Punkt 307b innerhalb der Probe 307 das feststehende Objektiv 306 den Laserstrahl 302 fokussiert. Vornehmlich an diesem Punkt 307b generiert die Probe 307 eine Antwort 312 auf den Laserstrahl 302. Diese Antwort 312 liegt zunächst als divergierender Strahl vor und wird über einen Kollimator 309 in einen parallelen Strahl überführt. Ein im Uhrzeigersinn rotierender Rolling Shutter 310 mit einem Spalt 310a moduliert den Durchgang der Antwort 312 zum Detektor 311 sowohl zeitlich als auch räumlich. Die Frequenz und Winkelposition des Rolling Shutters 310 wird über eine Steuerleitung oder Kommunikationsverbindung 210 vom System 200 gesteuert. Die Empfindlichkeit des Detektors 311 wird über eine Steuerleitung oder Kommunikationsverbindung 211 vom System 200 gesteuert. Die vom Detektor 311 registrierte Lichtintensität wird über die Leitung oder Kommunikationsverbindung 221 dem System 200 zugeführt. Das System 200 verknüpft und korreliert zu jedem Zeitpunkt die Lichtintensität mit der aktuellen Laserwellenlänge $\lambda$, der Winkelposition des Choppers 303, dem durch das Zusammenspiel der Scaneinheit 304 mit dem Tisch 308 eingestellten Fokuspunkt 307b für den Laserstrahl 302 innerhalb der Probe 307, der Stimulation über die Elektrode 307a, der aktuellen Winkelposition des Rolling Shutters 310 sowie mit der aktuellen Empfindlichkeit des Detektors 311. Dadurch entstehen vieldimensionale Rohdaten, die im Nachhinein in vielfältiger Weise auswertbar sind.

Die Belastbarkeit der aus einer solchen Auswertung gewonnen Aussagen hängt davon ab, dass die zeitliche Choreographie der genannten Größen mit dem vom System 200 vorgegebenen Plan übereinstimmt. Das eingebettete System 200 gemäß der Erfindung zeichnet sich dadurch aus, dass genau diese Übereinstimmung in wesentlich höherem Maße gegeben ist als dies nach dem bisherigen Stand der Technik möglich war. Somit wird letztlich durch die deterministische Architektur des Mikroprozessors 1 im System 200 die Qualität der mit dem Mikroskop 300 erzielten Messergebnisse deutlich gesteigert.

**Bezugszeichenliste**

| | |
|---|---|
| 1 | Mikroprozessor oder Mikrocontroller |
| 2 | Speicher |
| 2a | Controller für Speicher 2 |
| 3 | Instruktionsladeeinheit |
| 4 | Instruktion |
| 4a | Befehl in Instruktion 4 |
| 4b | Zeitvorgabe in Instruktion 4 |
| 4c | Ergebnis, bei Ausführung des Befehls 4a erhalten |
| 5 | Instruktionsausführungseinheit |
| 5a | Dekodierungseinheit für Instruktionsausführungseinheit 5 |
| 6 | interne Logik des Mikroprozessors 1 |
| 8 | Benennung einer Taktflanke für Ausgabe 9 |
| 9 | Ausgabe des Ergebnisses 4c |
| 10 | Ausgabeschnittstelle |
| 11 | Pufferspeicher für auszugebenden Wert 12 |
| 11a-11f | prozessornahe Register für Ausgabeschnittstelle 10 |
| 12 | auszugebender Wert |
| 13 | Triggersignal für Ausgabeschnittstelle 10 |
| 14 | Ausgabe des Werts 12 aus Schnittstelle 10 |
| 15 | Eingabeschnittstelle |
| 16 | Pufferspeicher für eingelesenen Wert 17 |
| 16a | prozessornahes Register für Zugriff auf Pufferspeicher 16 |
| 17 | eingelesener Wert |
| 18 | Triggersignal für Eingabeschnittstelle 15 |
| 19 | Weitergabe des eingelesenen Werts 17 |
| 20 | arithmetisch-logische Einheit |
| 21 | Verzweigungseinheit |
| 22 | nebenläufige Response-Einheit |
| 23, 23a-23t | Ein/Ausgabe-Pins |
| 24 | Logik bzw. Speicher für Variablen und prozessornahe Register 11a-11f, 16a |
| 25 | Triggermatrix |
| 26 | Peripheriebus |
| 27 | Resetlogik |
| 28 | Ticket- und Antwort-Einheit |
| 29 | Gateway |
| 30 | Kommunikationsschnittstelle |
| 31 | Controller für das Tunneln von Befehlen 4a |
| 32 | Fehlerbehandler |
| 33 | Zugriffssteuerung |
| 70 | Prozessortakt |
| 70a, 70b | Zyklen des Prozessortakts 70 |
| 71 | Systemtakt |
| 71a, 71b | Zyklen des Systemtakts 71 |
| 72 | Signalisierung der Befehlszeitfenster 72a, 72b |
| 72a, 72b | Befehlszeitfenster innerhalb des Systemzyklus 71a, 71b |
| 73 | Signalisierung der Befehlsphasenzeitfenster 73a, 73b |

| | |
|---|---|
| 73a, 73b | Befehlsphasenzeitfenster innerhalb Befehlszeitfenster 72a, 72b |
| 200 | eingebettetes System |
| 201-211 | Steuerleitungen/Verbindungen des Systems 200 im Mikroskop 300 |
| 221 | Leitung für vom Detektor 311 registrierte Intensität |
| 300 | digitales Mikroskop |
| 301 | Laser |
| 301a | Wellenlängensteuerung des Lasers 301 |
| 302 | Laserstrahl |
| 303 | Chopper |
| 304 | Scaneinheit |
| 305 | Spiegel |
| 306 | Objektiv |
| 307 | Probe |
| 307a | Stimulationselektrode auf Probe 307 |
| 307b | Fokuspunkt des Laserstrahls 302 in Probe 307 |
| 308 | Tisch für Probe 307 |
| 308a | Verfahreinheit für Tisch 308 |
| 309 | Kollimator für Antwort 312 |
| 310 | Rolling Shutter für Detektor 311 |
| 310a | Spalt in Rolling Shutter 310 |
| 311 | Detektor |
| 312 | Antwort der Probe 307 auf Laserstrahl 302 |
| A-D | Programmteile |
| E | Gesamtprogramm |
| F | Benutzeraktivität |
| $\lambda, \lambda_1, \lambda_2$ | Wellenlängen |
| t | Zeit |
| $t_1$ | Ausführungszeitpunkt |
| $t_z$ | Dauer eines Systemtaktzyklus 71, 72 |
| x, y, z | Raumkoordinaten |
| Z | Zeitachse |

**Patentansprüche**

1. Mikroprozessor oder Mikrocontroller (1), umfassend mindestens einen Speicher (2) zur Aufnahme von Instruktionen (4), mindestens eine Instruktionsladeeinheit (3) und mindestens eine Instruktionsausführungseinheit (5), wobei die Instruktionsladeeinheit (3) dazu ausgebildet ist, Instruktionen (4) aus dem Speicher (2) abzurufen und an die Instruktionsausführungseinheit (5) zu übermitteln, wobei jede Instruktion (4) mindestens einen Befehl (4a) sowie eine Zeitvorgabe (4b) enthält und wobei die Instruktionsausführungseinheit (5) dazu ausgebildet ist, den Befehl (4a) auszuführen, **dadurch gekennzeichnet, dass** zusätzlich eine Zeitverwaltungseinheit (6) vorgesehen ist, welche dazu ausgebildet ist, einen aus einer Abfolge von Systemzyklen (71a, 71b) bestehenden Systemtakt (71) vorzugeben und mindestens den Beginn eines jeden Systemzyklus (71a, 71b) an die Instruktionsausführungseinheit (5) zu signalisieren, wobei jeder Systemzyklus (71a, 71b) eine Mehrzahl von Zyklen (70a, 70b) des Prozessortakts (70) des Mikroprozessors bzw. Mikrocontrollers (1) umfasst, wobei die Zeitvorgabe (4b) in der jeweiligen Instruktion (4) angibt, für welchen Systemzyklus (71a, 71b) die Ausführung des Befehls (4a) geplant ist, und wobei die Instruktionsausführungseinheit (5) dazu ausgebildet ist, auf die Signalisierung des Beginns eines Systemzyklus (71a, 71b) hin alle Befehle (4a), deren Ausführung für diesen Systemzyklus (71a, 71b) geplant ist, innerhalb dieses Systemzyklus (71a, 71b) auszuführen.

2. Mikroprozessor oder Mikrocontroller (1) nach Anspruch 1, **dadurch gekennzeichnet, dass** die Zeitverwaltungseinheit (6) zusätzlich dazu ausgebildet ist, jeden Systemzyklus (71a, 71b) in Befehlszeitfenster (72a, 72b) zu unterteilen und den Beginn eines jeden Befehlszeitfensters (72a, 72b) an die Instruktionsausführungseinheit (5) zu signalisieren, wobei die Instruktionsausführungseinheit (5) dazu ausgebildet ist, auf die Signalisierung des Beginns eines Befehlszeitfensters (72a, 72b) hin einen Befehl (4a), dessen Ausführung für den aktuellen Systemzyklus (71a, 71b) geplant ist, auszuführen.

3. Mikroprozessor oder Mikrocontroller (1) nach Anspruch 2, **dadurch gekennzeichnet, dass** die Befehlsausführungseinheit (5) dazu ausgebildet ist, das Befehlszeitfenster (72a, 72b), in dem mit der Ausführung des Befehls (4a) begonnen wird, derart zu planen, dass die Ausführung des Befehls (4a) noch im aktuellen Systemzyklus (71a, 71b) abgeschlossen ist.

4. Mikroprozessor oder Mikrocontroller (1) nach einem der Ansprüche 2 bis 3, **dadurch gekennzeichnet, dass** die Zeitverwaltungseinheit (6) dazu ausgebildet ist, jedes Befehlszeitfenster (72a, 72b) in Befehlsphasenzeitfenster (73a, 73b) zu unterteilen und den Beginn eines jeden Befehlsphasenzeitfensters (73a, 73b) an die Instruktionsausführungseinheit (5) zu signalisieren, wobei die Instruktionsausführungseinheit (5) dazu ausgebildet ist, auf die Signalisierung des Beginns eines Befehlsphasenzeitfensters (73a, 73b) hin in die nächste Phase der Ausführung des Befehls (4a) zu wechseln.

5. Mikroprozessor oder Mikrocontroller (1) nach einem der Ansprüche 2 bis 4, **dadurch gekennzeichnet, dass** die Instruktionsausführungseinheit (5) dazu ausgebildet ist, in jedem Systemzyklus (71a, 71b) mindestens ein Befehlszeitfenster (72a, 72b) für das Ausführen von Befehlen (4a) zur Behandlung von aufgetretenen Events, und/oder für das Ausführen von getunnelten Befehlen (4a), zu reservieren.

6. Mikroprozessor oder Mikrocontroller (1) nach einem der Ansprüche 1 bis 5, **dadurch gekennzeichnet, dass** die Instruktionsausführungseinheit (5) dazu ausgebildet ist, ein oder mehrere aus der Ausführung eines oder mehrerer Befehle (4a) erhaltene Ergebnisse (4c) auf eine von der Zeitverwaltungseinheit benannte (8) Taktflanke des Prozessortakts (70) des Mikroprozessors bzw. des Mikrocontrollers (1) hin weiterzugeben und/oder für endgültig zu erklären (9).

7. Mikroprozessor oder Mikrocontroller (1) nach einem der Ansprüche 1 bis 6, **dadurch gekennzeichnet, dass** mehrere Instruktionsausführungseinheiten (5) vorgesehen sind und dass die Instruktionsladeeinheit (3) dazu ausgebildet ist, aus der Instruktion die für die Ausführung des Befehls zuständige Instruktionsausführungseinheit (5) zu ermitteln.

8. Mikroprozessor oder Mikrocontroller (1) nach einem der Ansprüche 1 bis 7, **dadurch gekennzeichnet, dass** mindestens eine Ausgabeschnittstelle (10) vorgesehen ist, die einen Pufferspeicher (11) für einen auszugebenden Wert (12) aufweist, wobei die Zeitverwaltungseinheit (6) dazu ausgebildet ist, ein Triggersignal (13) an die Ausgabeschnittstelle (10) zu übermitteln, und wobei die Ausgabeschnittstelle (10) dazu ausgebildet ist, auf das Triggersignal (13) hin den Wert (12) aus dem Pufferspeicher (11) auszugeben (14).

9. Mikroprozessor oder Mikrocontroller (1) nach einem der Ansprüche 1 bis 8, **dadurch gekennzeichnet, dass** mindestens eine Eingabeschnittstelle (15) vorgesehen ist, die einen Pufferspeicher (16) für einen eingelesenen Wert (17) aufweist, wobei die Zeitverwaltungseinheit (6) dazu ausgebildet ist, ein Triggersignal (18) an die Eingabeschnittstelle (15) zu übermitteln, und wobei die Eingabeschnittstelle (15) dazu ausgebildet ist, auf das Triggersignal (18) hin den Wert (17) aus dem Pufferspeicher (16) weiterzugeben (19).

10. Mikroprozessor oder Mikrocontroller (1) nach einem der Ansprüche 8 bis 9, **dadurch gekennzeichnet, dass** der Pufferspeicher (11, 16) über ein prozessornahes Register (11a, 16a) lesbar und/oder schreibbar ist.

11. Mikroprozessor oder Mikrocontroller (1) nach einem der Ansprüche 1 bis 10, **dadurch gekennzeichnet, dass** eine Triggermatrix (25) vorgesehen ist, in der alle Triggersignale (13) zu den Ausgabeschnittstellen (10) und alle Triggersignale (18) von den Eingabeschnittstellen (15) kreuzschienenartig zusammengeführt sind, und dort zur Laufzeit über Befehle (1a) des Befehlssatzes des Mikroprozessors bzw. Mikrocontrollers (1) miteinander verschaltet werden können.

12. Mikroprozessor oder Mikrocontroller (1) nach einem der Ansprüche 1 bis 11, **dadurch gekennzeichnet, dass** die Triggermatrix (25) dazu ausgebildet ist, zur Laufzeit über Befehle (1a) des Befehlssatzes des Mikroprozessors bzw. Mikrocontrollers (1) programmierbare Funktionalitäten wie Maskierung, logische Verknüpfungen oder Multiplexereigenschaften über die Triggersignale (13, 18) zu bilden, um somit verschiedene Verschaltungen von eingehenden Triggersignalen (18) zu ausgehenden Triggersignalen (13) zu ermöglichen.

13. Mikroprozessor oder Mikrocontroller (1) nach einem der Ansprüche 1 bis 12, **dadurch gekennzeichnet, dass** alle Befehle (1a) aus dem Befehlssatz des Mikroprozessors bzw. Mikrocontrollers (1) ausschließlich Operationen mit Werten prozessornaher Register (11a, 16a) durchführen.

14. Mikroprozessor oder Mikrocontroller (1) nach einem der Ansprüche 1 bis 13, **dadurch gekennzeichnet, dass** alle Befehle (1a) aus dem Befehlssatz des Mikroprozessors bzw. Mikrocontrollers (1) atomare Read-Modify-Write-Befehle sind.

15. Mikroprozessor oder Mikrocontroller (1) nach einem der Ansprüche 1 bis 14, weiterhin umfassend eine nebenläufige Response-Einheit (22), die dazu ausgebildet ist, mindestens einen prozessorinternen Zustand, und/oder mindestens einen Registerinhalt, ohne Beeinflussung der Programmabarbeitung im Mikroprozessor bzw. Mikrocontroller auszugeben.

16. Computerprogrammprodukt, enthaltend maschinenlesbare Anweisungen und/oder Hardwarebeschreibungen, die, wenn sie auf ein FPGA übertragen und/oder auf einem Computer ausgeführt werden, das FPGA zu einem Mikroprozessor (1) nach einem der Ansprüche 10 bis 15 zu konfigurieren, bzw. den Computer dazu veranlassen, das FPGA zu einem Mikroprozessor oder Mikrocontroller (1) nach einem der Ansprüche 10 bis 15 zu konfigurieren.

17. Eingebettetes System (200), insbesondere zur Steuerung eines Messgeräts oder Mikroskops, umfassend mindestens einen Mikroprozessor oder Mikrocontroller (1) nach einem der Ansprüche 1 bis 15 und/oder mindestens ein Computerprogrammprodukt (14) nach Anspruch 16.

18. Eingebettetes System (200) nach Anspruch 17, umfassend zusätzlich mindestens einen weiteren Mikrocontroller mit einem Mikroprozessor, der kein Mikroprozessor (1) nach einem der Ansprüche 1 bis 15 ist.

19. Eingebettetes System (200) nach einem der Ansprüche 16 bis 17, **dadurch gekennzeichnet, dass** es dazu ausgebildet ist, in einem digitalen Mikroskop (300) die Bewegung von Lichtstrahlen (302) zur Beleuchtung einer Probe (307) untereinander und mit der Bewegung optomechanischer Elemente (303, 304, 310) zu koordinieren, und/oder mindestens einen Lichtstrahl mit einer Intensitätsmodulation (303), und/oder einer Farbmodulation (301a), zu versehen, und/oder mit moduliertem Licht (302) bestimmte Areale der Probe (307) zu beleuchten, und/oder damit korreliert mit einem entsprechend modulierten (310) Detektor (311) für das von der Probe (307) kommende Licht (312) Bilder aufzunehmen, und/oder die Probe (307) zu stimulieren (307a).

20. Verfahren zur Zusammenführung mehrerer Programmteile (A-D) zu einem Gesamtprogramm (E) zur Ausführung auf dem Mikroprozessor oder Mikrocontroller (1), wobei jeder Programmteil (A-D) Instruktionen (4) enthält, die die Ausführung von Befehlen (4a) in durch Zeitvorgaben (4b) definierten Systemzyklen (71a, 71b) vorsehen, **dadurch gekennzeichnet, dass** in dem Gesamtprogramm (E) in jedem Systemzyklus (71a, 71b) die Ausführung aller in den Programmteilen (A-D) in diesem Systemzyklus (71a, 71b) vorgesehenen Befehle (4a) geplant wird.

21. Verfahren nach Anspruch 20, **dadurch gekennzeichnet, dass,** wenn alle Programmteile (A-D) zusammen in einem Systemzyklus (71a, 71b) die Ausführung von mehr Befehlen (4a) vorsehen als in diesem Systemzyklus (71a 71b) ausführbar sind, die Ausführung der überzähligen Befehle (4a) in einen anderen Systemzyklus (71a, 71b) verschoben wird.

22. Verfahren nach Anspruch 21, **dadurch gekennzeichnet, dass** die Befehle (4a), deren Ausführung verschoben wird, danach ausgewählt werden, dass die Verschiebung auf der Zeitskala der mit den Programmteilen (A-D) realisierten Anwendung vernachlässigbar ist.

23. Verfahren nach Anspruch 22, **dadurch gekennzeichnet, dass** die Ausführung von Befehlen (4a) verschoben wird, die sich auf die Kommunikation mit einer Systemkomponente beziehen, die auf einer langsameren Zeitskala als ein Systemzyklus (71a, 71b) arbeitet.

Fig. 1a

EP 3 537 293 A1

TRG_IN_h(1...n)
TRG_OUT_h(1...n)

11a  16a

71, 72, 73

5

6

TRG_IN_v(1...n)  TRG_OUT_v(1...n)

TRG_IN_h(1...n)

TRG_OUT_h(1...n)

25

13,18

10, 15

Fig. 1b

Fig. 2

Fig. 3

1707 1708 1709 1710 1711 1712 1713 1714 1715 1716 1717 1718 1719 1720 1721 1722 1723 1724 1725 1726 1727 1728

72a, 72b

A

B

C

D

E

F

4a

Fig. 4a

Fig. 4b

Fig. 4c

EP 3 537 293 A1

Fig. 5

EP 3 537 293 A1

CPU CLOCK

DIN BANK 0 PORT 7

DOUT BANK 1 PORT 15

SPI1 CS1#

SPI1 CLK

SPI1 MOSI

SPI3 CS1#

SPI3 CLK

SPI3 MISO

DOUT BANK 0 PORT 10

Fig. 5 (cont).

Fig. 6

**Europäisches Patentamt**
**European Patent Office**
**Office européen des brevets**

# EUROPÄISCHER RECHERCHENBERICHT

Nummer der Anmeldung

EP 18 16 0992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/055032 A1 (DAVID VINCENT [FR]) 25. Februar 2016 (2016-02-25) * Absätze [0009], [0029] - [0037], [0042], [0050], [0054], [0055], [0063], [0065], [0066] * ----- | 1-23 | INV. G06F9/48 |
| X | EP 1 557 743 A2 (TOSHIBA KK [JP]) 27. Juli 2005 (2005-07-27) * Absätze [0011], [0019] - [0022], [0026], [0027], [0059], [0064] * ----- | 1-23 | |
| X,D | US 2003/135712 A1 (THEIS JEAN-PAUL [DE]) 17. Juli 2003 (2003-07-17) * Absätze [0042] - [0049], [0064] - [0074], [0079], [0083], [0084] * ----- | 1-23 | |
| X,D | US 2006/288194 A1 (LEWIS JAMES M [US] ET AL) 21. Dezember 2006 (2006-12-21) * Absätze [0007], [0010], [0019], [0021] - [0027], [0035], [0040], [0053] * ----- | 1-23 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| Den Haag | 5. September 2018 | Buzgan, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

……………………………………………………………………
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 16 0992

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2018

| Im Recherchenbericht angeführtes Patentdokument | Datum der Veröffentlichung | Mitglied(er) der Patentfamilie | Datum der Veröffentlichung |
|---|---|---|---|
| US 2016055032 A1 | 25-02-2016 | BR 112015026331 A2 | 25-07-2017 |
| | | CA 2908951 A1 | 23-10-2014 |
| | | CN 105190556 A | 23-12-2015 |
| | | EP 2987081 A1 | 24-02-2016 |
| | | FR 3004825 A1 | 24-10-2014 |
| | | JP 2016519371 A | 30-06-2016 |
| | | KR 20160003710 A | 11-01-2016 |
| | | RU 2015149621 A | 24-05-2017 |
| | | US 2016055032 A1 | 25-02-2016 |
| | | WO 2014170569 A1 | 23-10-2014 |
| EP 1557743 A2 | 27-07-2005 | EP 1557743 A2 | 27-07-2005 |
| | | GB 2410344 A | 27-07-2005 |
| | | JP 2005222536 A | 18-08-2005 |
| | | US 2005182578 A1 | 18-08-2005 |
| US 2003135712 A1 | 17-07-2003 | EP 1301857 A1 | 16-04-2003 |
| | | US 2003135712 A1 | 17-07-2003 |
| | | WO 0208893 A1 | 31-01-2002 |
| | | WO 0208894 A1 | 31-01-2002 |
| US 2006288194 A1 | 21-12-2006 | US 2006288194 A1 | 21-12-2006 |
| | | WO 2007001521 A2 | 04-01-2007 |

EPO FORM P0461

Für nähere Einzelheiten zu diesem Anhang : siehe Amtsblatt des Europäischen Patentamts, Nr.12/82

**EP 3 537 293 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69933515 T2
- US 7406550 B2
- WO 2008125670 A1
- US 2003135712 A1
- US 2009089555 A1
- US 7089406 B2
- US 6453424 B1
- US 2006288194 A1
- US 6560715 B1
- WO 2011067254 A1
- WO 2008148838 A1

**In der Beschreibung aufgeführte Nicht-Patentliteratur**

- **DOUGLAS WATT.** Programming XC on XMOS Devices. XMOS Limited, 2009
- **FABIAN NOWAK.** Methoden und Werkzeuge zum Einsatz von rekonfigurierbaren Akzeleratoren in Mehrkernsysteme. Karlsruher Institut für Technologie, 2015
- **LARS BAUER et al.** RISPP: rotating instruction set processing platform. *Design Automation Conference,* 2007, ISSN 0738-100X
- Run-time Adaptation for Reconfigurable Embedded Processors. Springer Verlag, 2011